(19) 

Europäisches
Patentamt
European
Patent Office
Office européen
des brevets

(11) **EP 4 510 738 A1**

(12) **EUROPEAN PATENT APPLICATION**
published in accordance with Art. 153(4) EPC

(43) Date of publication:
**19.02.2025 Bulletin 2025/08**

(21) Application number: **23795156.1**

(22) Date of filing: **19.04.2023**

(51) International Patent Classification (IPC):
**H04W 72/04** (2023.01)

(52) Cooperative Patent Classification (CPC):
**H04W 72/04; H04W 72/0453; H04W 72/12;
H04W 72/20**

(86) International application number:
**PCT/CN2023/089301**

(87) International publication number:
**WO 2023/207723 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210474978**

(71) Applicant: **Huawei Technologies Co., Ltd.
Shenzhen, Guangdong 518129 (CN)**

(72) Inventors:
• **ZHANG, Tianhong
Shenzhen, Guangdong 518129 (CN)**

• **LI, Chao
Shenzhen, Guangdong 518129 (CN)**
• **YANG, Fan
Shenzhen, Guangdong 518129 (CN)**
• **HUANG, Haining
Shenzhen, Guangdong 518129 (CN)**
• **LI, Junyao
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND COMMUNICATION APPARATUS**

(57) This application provides a communication method and a communication apparatus. In the communication method, a first terminal device determines that a reserved resource of a second terminal device is within an initiated COT of the first terminal device. In this case, the first terminal device sends first COT sharing information to the second terminal device within the first COT, to indicate the second terminal device whether to share a first COT, so that the second terminal device can also perform sidelink transmission by using a resource within the initiated COT of the first terminal device. This can avoid COT interruption caused because the first terminal device may fail to perform continuous transmission within the initiated COT, and can also improve spectrum utilization and reduce a transmission latency of the second terminal device.

FIG. 7

**Description**

This application claims priority to Chinese Patent Application No. 202210474978.6, filed on April 29, 2022 and entitled "COMMUNICATION METHOD AND COMMUNICATION APPARATUS", which is incorporated herein by reference in its entirety.

**TECHNICAL FIELD**

This application relates to the communication field, and more specifically, to a communication method and a communication apparatus.

**BACKGROUND**

In a wireless communication system, spectrum resources may be classified into a licensed band and an unlicensed band. When using the unlicensed band, a transmission node needs to use a spectrum resource in a contention manner. Currently, sidelink (sidelink, SL) communication is widely applied in a vehicle-to-everything (vehicle-to-everything, V2X) scenario. Enabling SL communication in the unlicensed band is an important evolution direction, and a corresponding protocol technology may be collectively referred to as sidelink unlicensed (sidelink unlicensed, SL-U).

In the SL-U, when a terminal device with an initiated channel occupancy time (channel occupancy time, COT) shares a COT with another UE, COT interruption may occur, that is, the terminal device of the initiated COT cannot continue to use the COT. Consequently, data transmission reliability cannot be ensured. Therefore, how to improve transmission reliability of the terminal device with the initiated COT has become an urgent problem to be resolved.

**SUMMARY**

This application provides a communication method and a communication apparatus, to improve transmission reliability of a terminal device with an initiated COT within a COT, improve spectrum utilization of SL-U, and reduce a transmission latency of the terminal device sharing the initiated COT.

According to a first aspect, a communication method is provided. The method may be performed by a first terminal device, or may be performed by a component (for example, a chip or a circuit) of the first terminal device. This is not limited. For ease of description, the following uses an example in which the method is performed by the first terminal device for description.

The method may include: The first terminal device receives first sidelink control information SCI from a second terminal device, where the first SCI indicates a reserved resource of the second terminal device; the first terminal device determines that all or a part of the reserved resource of the second terminal device is within a first COT, where the first COT is an initiated COT of the first terminal device; and the first terminal device sends first COT sharing information to the second terminal device, where the first COT sharing information indicates that sharing of the first COT is allowed or not allowed.

It should be understood that the first terminal device sends COT sharing information only to a terminal device that has a reserved resource within the first COT.

In SL-U, the first terminal device with the initiated COT needs to perform continuous transmission within the COT, or both the first terminal device with the initiated COT and a sharing UE that shares the initiated COT perform continuous transmission within the COT for a period of time. If discontinuous transmission is performed, the initiated COT of the first terminal device is interrupted, and the first terminal device cannot continue to use the COT. In the foregoing technical solution, the first terminal device may indicate, based on a reserved resource indicated by SCI of another terminal device (for example, the second terminal device), whether the another terminal device can share the initiated COT, so that transmission of the first terminal device and transmission of the another terminal device can form continuous transmission within the COT, to avoid COT interruption of the first terminal device.

In addition, the second terminal device may perform transmission by initiating a COT, or may perform transmission by sharing the COT of the first terminal device. For the former (the second terminal device performs transmission by initiating the COT), if the reserved resource of the second terminal device is within the initiated COT of the first terminal device, and the first terminal device does not share the COT with the second terminal device for transmission (for example, the COT is used by the first terminal device for transmission or used by another sharing UE for transmission), the second terminal device does not succeed in LBT before the reserved resource. In other words, the second terminal device can perform transmission only after COT transmission of the first terminal device ends. For the latter (the second terminal device shares the COT of the first terminal device), the second terminal device can perform transmission in time domain of the reserved resource, to reduce a latency. If the first terminal device shares the initiated COT with the second terminal device for use, spectrum utilization may also be improved.

With reference to the first aspect, in some implementations of the first aspect, the method further includes: The first terminal device determines a first resource, where the first resource is used to transmit the first COT sharing information.

It may be understood that a cyclic shift of a time domain resource and/or a frequency domain resource and/or a sequence of the first resource indicates that the first COT sharing information is indicated to the second terminal device.

With reference to the first aspect, in some implementations of the first aspect, that the first terminal device determines a first resource includes: The first terminal device determines the first resource based on the reserved resource of the second terminal device; the first terminal device determines the first resource based on a reserved resource of the second terminal device within the first COT; or the first terminal device determines the first resource based on a first reserved resource, where the first reserved resource is a reserved resource of the second terminal device within the first COT, and the first reserved resource corresponds to one slot in time domain and corresponds to one subchannel or interlace in frequency domain.

It may be understood that the first terminal device determines a location of the first resource based on locations of reserved resources of different terminal devices, and the first COT sharing information may implicitly indicate the location of the first resource to a terminal device associated with the first resource.

With reference to the first aspect, in some implementations of the first aspect, the first reserved resource is a resource with a smallest slot index and a smallest subchannel or interlace index in the reserved resource within the first COT; the first reserved resource is a resource with a smallest slot index and a largest subchannel or interlace index in the reserved resource within the first COT; the first reserved resource is a resource with a largest slot index and a largest subchannel or interlace index in the reserved resource within the first COT; or the first reserved resource is a resource with a largest slot index and a smallest subchannel or interlace index in the reserved resource within the first COT.

With reference to the first aspect, in some implementations of the first aspect, that the first terminal device determines the first resource based on a first reserved resource includes: The first terminal device determines a time domain resource of the first resource based on a time domain resource of the first reserved resource, where the time domain resource of the first resource is a time domain resource that is before the first reserved resource and that is separated from the first reserved resource by at least a first time interval.

With reference to the first aspect, in some implementations of the first aspect, that the first terminal device determines the first resource based on a first reserved resource includes: The first terminal device determines a frequency domain resource of the first resource based on a frequency domain resource of the first reserved resource, where the frequency domain resource of the first resource is the frequency domain resource of the first reserved resource.

With reference to the first aspect, in some implementations of the first aspect, the first COT sharing information is a sequence of the first resource, and the method further includes: The first terminal device determines a cyclic shift of the sequence based on at least one of the following parameters or conditions: information indicating whether to allow the second terminal device to share the first COT, a time interval between the first reserved resource and a reference slot, where the reference slot is a slot of the first resource or a start slot of the first COT; time domain offset information and/or frequency domain offset information, where the time domain offset information and/or the frequency domain offset information indicate/indicates a time domain offset and/or a frequency domain offset of a resource shared by the second terminal device within the first COT relative to the reserved resource of the second terminal device within the first COT; or the frequency domain resource of the first reserved resource.

Optionally, the first COT sharing information is carried on a PSFCH, and the first resource is a resource for sending the PSFCH. Because a quantity of carrying bits of the PSFCH is limited, in the foregoing technical solution, the first terminal device may implicitly indicate, by sending at least one of a time domain location, a frequency domain location, or an associated cyclic shift of the PSFCH, whether a terminal device is allowed to use the first COT of the first terminal device. Because a UE 2 knows a time-frequency location of a reserved resource of the UE 2, the UE 2 may determine, based on the at least one of the time domain location, the frequency domain location, or the associated cyclic shift of the PSFCH, that the PSFCH is sent to the UE 2. Therefore, when the PSFCH carries the first COT sharing information, compared with other signaling (such as first-stage SCI, second-stage SCI, a MAC CE, RRC, and PC-5 RRC), signaling overheads are low and a latency is small.

In addition, when reserved resources of a plurality of terminal devices sharing the first COT overlap within the first COT, the first terminal device may indicate time domain offset information or frequency domain offset information by using the cyclic shift of the sequence of the first resource, to ensure that resources actually shared by the plurality of terminal devices sharing the first COT within the first COT do not overlap, so that the plurality of terminal devices sharing the first COT can share the first COT at the same time. This ensures transmission reliability of the plurality of terminal devices sharing the first COT, and the plurality of terminal devices sharing the first COT can access a channel as soon as possible, to avoid re-executing an LBT procedure due to a transmission conflict, reduce an information transmission latency of the UE, and also improve spectrum utilization within the first COT from a perspective of a system.

With reference to the first aspect, in some implementations of the first aspect, the cyclic shift of the sequence is determined based on a first cyclic shift and a second cyclic shift, where the first cyclic shift indicates that the second terminal device is allowed or not allowed to share the first COT, and the second cyclic shift indicates the time domain offset information and/or the frequency domain offset information.

With reference to the first aspect, in some implementations of the first aspect, the cyclic shift of the sequence is determined based on a first cyclic shift and a second cyclic shift, where the cyclic shift of the sequence indicates that the second terminal device is allowed or not allowed to share the first COT, the first cyclic shift indicates the time interval between the first reserved resource and the reference slot, and the second cyclic shift indicates the time domain offset information and/or the frequency domain offset information.

With reference to the first aspect, in some implementations of the first aspect, the cyclic shift of the sequence is determined based on a first cyclic shift and a second cyclic shift, where the first cyclic shift indicates that the second terminal device is allowed or not allowed to share the first COT, the second cyclic shift indicates the time interval between the first reserved resource and the reference slot, a third cyclic shift is a difference between cyclic shifts of sequences of two adjacent RBs in the first resource, and the third cyclic shift indicates the time domain offset information and/or the frequency domain offset information; or the first cyclic shift indicates that the second terminal device is allowed or not allowed to share the first COT, the second cyclic shift indicates the time domain offset information and/or the frequency domain offset information, a third cyclic shift is a difference between two adjacent RBs in the first resource, and the third cyclic shift indicates the time interval between the first reserved resource and the reference slot.

With reference to the first aspect, in some implementations of the first aspect, a cyclic shift of a sequence of any RB in the first resource is determined based on a first cyclic shift, a second cyclic shift, and a third cyclic shift, where

the first cyclic shift indicates that the second terminal device is allowed or not allowed to share the first COT, the second cyclic shift indicates the time interval between the first reserved resource and the reference slot, and a difference between third cyclic shifts of two adjacent RBs in the first resource indicates the time domain offset information and/or the frequency domain offset information, or

the first cyclic shift indicates that the second terminal device is allowed or not allowed to share the first COT, the second cyclic shift indicates the time domain offset information and/or the frequency domain offset information, and a difference between cyclic shifts of sequences of two adjacent RBs in the first resource indicates the time interval between the first reserved resource and the reference slot.

With reference to the first aspect, in some implementations of the first aspect, the sequence is a sequence of any RB in the first resource, or the sequence is a sequence of an RB with a smallest index in the first resource.

With reference to the first aspect, in some implementations of the first aspect, the first COT sharing information is carried on a PSFCH.

With reference to the first aspect, in some implementations of the first aspect, the first COT sharing information includes N pieces of indication information, each of the N pieces of indication information includes identification information of a terminal device and information about a resource shared by the terminal device within the first COT, and N is a positive integer.

With reference to the first aspect, in some implementations of the first aspect, the identification information of the terminal device includes M terminal device identifiers, the information about the resource shared by the terminal device within the first COT indicates a first time unit, the first time unit is a time unit shared by terminal devices corresponding to the M terminal device identifiers within the first COT, a channel corresponding to the first COT includes L interlaces or subchannels, each piece of indication information indicates that a terminal device corresponding to an $i^{th}$ terminal device identifier in the M terminal device identifiers shares an $i^{th}$ interlace or subchannel in the L interlaces or subchannels, M, L, and i are all positive integers, and M is less than or equal to L.

With reference to the first aspect, in some implementations of the first aspect, the first COT sharing information further indicates a time domain offset and/or a frequency domain offset between a resource shared by the second terminal device within the first COT and the reserved resource of the second terminal device within the first COT.

With reference to the first aspect, in some implementations of the first aspect, the first COT sharing information is carried in any signaling of first-stage SCI, second-stage SCI, a MAC CE, PC-5 RRC, and RRC.

With reference to the first aspect, in some implementations of the first aspect, each slot in a first slot set within the first COT includes a time domain resource for type2 LBT, where the first slot set is a set of slots for each terminal device sharing the first COT to access the first COT; the first slot set is a set of slots for each terminal device sharing the first COT to transmit sidelink information; or the first slot set is a set of all slots within the first COT.

With reference to the first aspect, in some implementations of the first aspect, an AGC symbol and/or a GAP symbol in each slot include/includes time domain resources/a time domain resource for type2 LBT.

According to a second aspect, a communication method is provided. The method may be performed by a second terminal device, or may be performed by a component (for example, a chip or a circuit) of the second terminal device. This is not limited. For ease of description, the following uses an example in which the method is performed by the second terminal device for description.

With reference to the second aspect, in some implementations of the second aspect, the second terminal device sends first sidelink control information to a first terminal device, where the first sidelink control information indicates a reserved resource of the second terminal device; the second terminal device receives first COT sharing information from the first terminal device, where the first COT sharing information indicates that sharing of a first COT is allowed or not allowed, the first COT sharing information is indicated to the second terminal device, the first COT is an initiated COT of the first terminal device, and all or a part of the reserved resource of the second terminal device is within the first COT; and the second terminal device determines, based on the first COT sharing information, whether to share the first COT.

With reference to the second aspect, in some implementations of the second aspect, a first resource is used to transmit the first COT sharing information, and the method further includes: The second terminal device determines, based on the first resource, that the first COT sharing information is indicated to the second terminal device, where the first resource is determined based on the reserved resource of the second terminal device, or the first resource is determined based on a reserved resource of the second terminal device within the first COT, or the first resource is determined based on a first reserved resource, the first reserved resource is a reserved resource of the second terminal device within the first COT, and the first reserved resource corresponds to one slot in time domain and corresponds to one subchannel or interlace in frequency domain.

With reference to the second aspect, in some implementations of the second aspect, the first reserved resource is a resource with a smallest slot index and a smallest subchannel or interlace index in the reserved resource within the first COT; the first reserved resource is a resource with a smallest slot index and a largest subchannel or interlace index in the reserved resource within the first COT; the first reserved resource is a resource with a largest slot index and a largest subchannel or interlace index in the reserved resource within the first COT; or the first reserved resource is a resource with a largest slot index and a smallest subchannel or interlace index in the reserved resource within the first COT.

With reference to the second aspect, in some implementations of the second aspect, that the second terminal device determines, based on the first resource, that the first COT sharing information is indicated to the second terminal device includes: The second terminal device determines, as a time domain resource of the first reserved resource, a time domain resource that is separated by at least a first time interval after a time domain resource of the first resource; and the second terminal device determines that the first COT sharing information is indicated to the second terminal device.

With reference to the second aspect, in some implementations of the second aspect, that the second terminal device determines, based on the first resource, that the first COT sharing information is indicated to the second terminal device includes: The second terminal device determines that a frequency domain resource of the first resource is the same as a frequency domain resource of the first reserved resource; and the second terminal device determines that the first COT sharing information is indicated to the second terminal device.

With reference to the second aspect, in some implementations of the second aspect, the first COT sharing information is a sequence of the first resource, and a cyclic shift of the sequence indicates at least one of the following information: information indicating whether to allow the second terminal device to share the first COT; a time interval between the first reserved resource and a reference slot, where the reference slot is a slot of the first resource or a start slot of the first COT; time domain offset information and/or frequency domain offset information, where the time domain offset information and/or the frequency domain offset information indicate/indicates a time domain offset and/or a frequency domain offset between a resource shared by the second terminal device within the first COT and the reserved resource of the second terminal device within the first COT; or the frequency domain resource of the first reserved resource.

With reference to the second aspect, in some implementations of the second aspect, the cyclic shift of the sequence is determined based on a first cyclic shift and a second cyclic shift, where the first cyclic shift indicates that the second terminal device is allowed or not allowed to share the first COT, and the second cyclic shift indicates the time domain offset information and/or the frequency domain offset information.

With reference to the second aspect, in some implementations of the second aspect, the cyclic shift of the sequence is determined based on a first cyclic shift and a second cyclic shift, where the cyclic shift of the sequence indicates that the second terminal device is allowed or not allowed to share the first COT, the first cyclic shift indicates the time interval between the first reserved resource and the reference slot, and the second cyclic shift indicates the time domain offset information and/or the frequency domain offset information.

With reference to the second aspect, in some implementations of the second aspect, the cyclic shift of the sequence is determined based on a first cyclic shift and a second cyclic shift, where the first cyclic shift indicates that the second terminal device is allowed or not allowed to share the first COT, the second cyclic shift indicates the time interval between the first reserved resource and the reference slot, a third cyclic shift is a difference between cyclic shifts of sequences of two adjacent RBs in the first resource, and the third cyclic shift indicates the time domain offset information and/or the frequency domain offset information; or the first cyclic shift indicates that the second terminal device is allowed or not allowed to share the first COT, the second cyclic shift indicates the time domain offset information and/or the frequency domain offset information, a third cyclic shift is a difference between two adjacent RBs in the first resource, and the third cyclic shift indicates the time interval between the first reserved resource and the reference slot.

With reference to the second aspect, in some implementations of the second aspect, a cyclic shift of a sequence of any RB in the first resource is determined based on a first cyclic shift, a second cyclic shift, and a third cyclic shift, where

the first cyclic shift indicates that the second terminal device is allowed or not allowed to share the first COT, the second cyclic shift indicates the time interval between the first reserved resource and the reference slot, a difference between third cyclic shifts of two adjacent RBs in the first resource indicates the time domain offset information and/or the frequency domain offset information; or the first cyclic shift indicates that the second terminal device is allowed or not allowed to share the first COT, the second cyclic shift indicates the time domain offset information and/or the frequency domain offset information, and a difference between cyclic shifts of sequences of two adjacent RBs in the first resource indicates the time interval between the first reserved resource and the reference slot.

With reference to the second aspect, in some implementations of the second aspect, the sequence is a sequence of any RB in the first resource, or the sequence is a sequence of an RB with a smallest index in the first resource.

With reference to the second aspect, in some implementations of the second aspect, the first COT sharing information is carried on a PSFCH.

With reference to the second aspect, in some implementations of the second aspect, the first COT sharing information includes N pieces of indication information, each of the N pieces of indication information indicates identification information of a terminal device and information about a resource shared by the terminal device within the first COT, and N is a positive integer.

With reference to the second aspect, in some implementations of the second aspect, the identification information of the terminal device includes M terminal device identifiers, the information about the resource shared by the terminal device within the first COT indicates a first time unit, the first time unit is a time unit shared by a plurality of terminal devices within the first COT, a channel corresponding to the first COT includes L interlaces or subchannels, each piece of indication information indicates that a terminal device corresponding to an $i^{th}$ terminal device identifier in the M terminal device identifiers shares an $i^{th}$ interlace or subchannel in the L interlaces or subchannels, M, L, and i are all positive integers, and M is less than or equal to L.

With reference to the second aspect, in some implementations of the second aspect, the first COT sharing information further indicates a time domain offset and/or a frequency domain offset of a resource shared by the second terminal device within the first COT relative to the reserved resource of the second terminal device within the first COT.

With reference to the second aspect, in some implementations of the second aspect, the first COT sharing information is carried in any signaling of first-stage SCI, second-stage SCI, a MAC CE, PC-5 RRC, and RRC.

With reference to the second aspect, in some implementations of the second aspect, each slot in a first slot set within the first COT includes a time domain resource for type2 LBT, where the first slot set is a set of slots for each terminal device sharing the first COT to access the first COT; the first slot set is a set of slots for each terminal device sharing the first COT to transmit sidelink information; or the first slot set is a set of all slots within the first COT.

With reference to the second aspect, in some implementations of the second aspect, a time domain resource for type2 LBT in each slot is in an AGC symbol and/or a GAP symbol.

With reference to the second aspect, in some implementations of the second aspect, the method further includes: The second terminal device receives second COT sharing information, where the second COT sharing information is indicated to a third terminal device, and the second COT sharing information indicates whether to share the first COT; the second terminal device receives second SCI from the third terminal device, where the second SCI indicates a reserved resource of the third terminal device; and the second terminal device determines the first slot set based on the reserved resource of the third terminal device and the second COT sharing information.

With reference to the second aspect, in some implementations of the second aspect, the method further includes: The second terminal device receives the second COT sharing information, where the second COT sharing information is indicated to the third terminal device, and the second COT sharing information indicates whether to share the first COT; and the second terminal device determines the first slot set based on the second COT sharing information.

For beneficial effects of the second aspect, refer to the description in the first aspect. Details are not described herein again.

According to a third aspect, this application provides a communication apparatus. The communication apparatus has a function of implementing the method according to any one of the first aspect or the possible implementations of the first aspect. The function may be implemented by hardware, or may be implemented by executing corresponding software by hardware. The hardware or the software includes one or more units that correspond to the foregoing functions.

According to a fourth aspect, this application provides a communication apparatus. The communication apparatus has a function of implementing the method according to any one of the second aspect or the possible implementations of the second aspect. The function may be implemented by hardware, or may be implemented by executing corresponding software by hardware. The hardware or the software includes one or more units that correspond to the foregoing functions.

According to a fifth aspect, this application provides a communication device, including at least one processor. The at least one processor is coupled to at least one memory, the at least one memory is configured to store a computer program or instructions and the at least one processor is configured to invoke the computer program or the instructions from the at least one memory and run the computer program or the instructions, and the communication device is enabled to perform the method according to any one of the first aspect or the possible implementations of the first aspect. Optionally, the communication apparatus further includes the memory. Optionally, the communication apparatus further includes a communication interface, and the processor is coupled to the communication interface.

In an example, the communication apparatus may be a first terminal device. When the communication apparatus is the first terminal device, the communication interface may be a transceiver or an input/output interface.

In another example, the communication apparatus may be a component (for example, a chip or an integrated circuit) installed in a first terminal device. When the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, this application provides a communication device, including at least one processor. The at least one processor is coupled to at least one memory, the at least one memory is configured to store a computer program or instructions, and the at least one processor is configured to invoke the computer program or the instructions from the at least one memory and run the computer program or the instructions, and the communication device is enabled to perform the method according to any one of the second aspect or the possible implementations of the second aspect. Optionally, the communication apparatus further includes the memory. Optionally, the communication apparatus further includes a communication interface, and the processor is coupled to the communication interface.

In an example, the communication apparatus may be a second terminal device. When the communication apparatus is the second terminal device, the communication interface may be a transceiver or an input/output interface.

In another example, the communication apparatus may be a component (for example, a chip or an integrated circuit) installed in a second terminal device. When the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a computer-readable storage medium is provided. The computer-readable storage medium stores program code executed by a device, and the program code is used to perform the method according to any one of the first aspect or the possible implementations of the first aspect or the method according to any one of the second aspect or the possible implementations of the second aspect.

According to an eighth aspect, a computer program product including instructions is provided. When the computer program product runs on a computer, the computer is enabled to perform the method according to any one of the first aspect or the possible implementations of the first aspect or the method according to any one of the second aspect or the possible implementations of the second aspect.

According to a ninth aspect, a chip is provided. The chip includes a processor and a communication interface, and the processor reads, through the communication interface, instructions stored in a memory, to perform the method according to any one of the first aspect or the possible implementations of the first aspect or the method according to any one of the second aspect or the possible implementations of the second aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the first aspect or the possible implementations of the first aspect or the method according to any one of the second aspect or the possible implementations of the second aspect.

According to a tenth aspect, a communication system is provided. The communication system includes the communication apparatus shown in the fifth aspect and the communication apparatus shown in the sixth aspect.

## BRIEF DESCRIPTION OF DRAWINGS

FIG. 1 is a diagram of a network architecture according to an embodiment of this application;
FIG. 2 is a diagram of a structure of an SL slot,
FIG. 3 is a diagram of interlacing at a 30 kHz subcarrier spacing within a 20 MHz frequency bandwidth;
FIG. 4 is a diagram of two different interlace drawing methods according to this application;
FIG. 5 is a diagram in which a UE 2 performs transmission on a channel in an interlace manner or a non-interlace manner;
FIG. 6 is a schematic flowchart of an NR SL resource allocation mode 2;
FIG. 7 is a schematic flowchart of a communication method according to this application;
FIG. 8 to FIG. 11 are diagrams in which a UE 2 performs transmission on a channel in an interlace manner or a non-interlace manner within two adjacent COTs;

FIG. 12 is a diagram in which a UE 1 determines a time domain resource and/or a frequency domain resource of a first resource based on a time domain resource and/or a frequency domain resource of a first reserved resource of a UE 2;

FIG. 13 is a diagram in which a UE 1 determines a cyclic shift of a sequence of a first resource based on a frequency domain resource of a first reserved resource of a UE 2;

FIG. 14 is a diagram in which a UE 1 determines a cyclic shift of a sequence of a first resource based on a time interval between a time domain resource of a first reserved resource of a UE 2 and a reference slot;

FIG. 15 is a diagram of a time domain resource used by a sharing UE for type2 LBT within a first COT;

FIG. 16 is a diagram of locations of time domain resources for type2 LBT in ACG, GAP, and CPE symbols;

FIG. 17 is a block diagram of a communication apparatus 1000 according to an embodiment of this application; and

FIG. 18 is a block diagram of a communication apparatus 1800 according to an embodiment of this application.

## DESCRIPTION OF EMBODIMENTS

The following describes technical solutions of this application with reference to the accompanying drawings.

In addition, the technical solutions provided in embodiments of this application may be applied to a link between a network device and a terminal device, or may be applied to a link between devices, for example, a device-to-device (device-to-device, D2D) link. The D2D link may also be referred to as a sidelink (sidelink, SL), and the sidelink may also be referred to as a side-link, a secondary link, or the like. In embodiments of this application, the D2D link, the side-link, or the secondary link is a link established between devices of a same type, and has a same meaning. The link between the devices of the same type may be a link between terminal devices, a link between network devices, a link between relay nodes, or the like. This is not limited in embodiments of this application. For the link between the terminal devices, there is a D2D link defined in release (release, Rel)-12/13 of the 3rd generation partnership project (3rd generation partnership project, 3GPP), and there is also a vehicle-to-everything (vehicle-to-everything, V2X) link defined by the 3GPP for the internet of vehicles. It should be understood that V2X specifically further includes vehicle-to-vehicle (vehicle-to-vehicle, V2V), vehicle-to-infrastructure (vehicle-to-infrastructure, V2I), vehicle-to-pedestrian (vehicle-to-pedestrian, V2P) direct communication, and vehicle-to-network (vehicle-to-network, V2N), or vehicle-to-any entity V2X link, including a V2X link in Rel-14/15. V2X further includes an NR system-based V2X link in current Rel-16 and later releases of the 3GPP, and the like. V2V is communication between vehicles. V2P is communication between a vehicle and a person (including a pedestrian, a cyclist, a driver, and a passenger). V2I is communication between a vehicle and an infrastructure, where the infrastructure is, for example, a roadside unit (roadside unit, RSU) or a network device. In addition, V2N may be included in V2I, and V2N is communication between a vehicle and a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU.

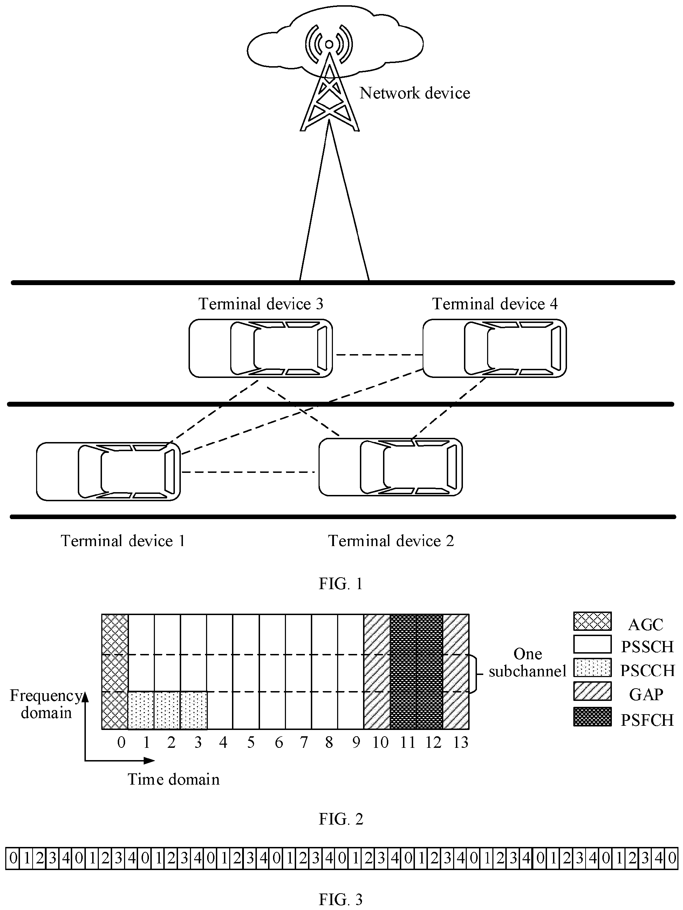

For example, FIG. 1 is a diagram of a network architecture according to this application. FIG. 1 includes four terminal devices and one network device. Any two of the four terminal devices may directly communicate with each other, and a direct communication link between the two terminal devices is an SL. It should be understood that FIG. 1 merely shows the four terminal devices as an example, and the communication system may further include more terminal devices.

Optionally, the terminal device in embodiments of this application is a device configured to implement a wireless communication function, for example, a terminal or a chip that may be used in the terminal. The terminal may be a user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed. The terminal device in embodiments of this application may alternatively be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the methods in this application.

Optionally, the network device in embodiments of this application is an access device through which a terminal device accesses a mobile communication system in a wireless manner, and includes, for example, including an access network (access network, AN) device, for example, a base station. Alternatively, the network device may be a device that communicates with the terminal device over an air interface. The network device may include an evolved NodeB (evolved NodeB) (also referred to as an eNB or an e-NodeB for short) in an LTE system or a long term evolution-advanced (long term evolution-advanced, LTE-A) system. The network device may alternatively include a next generation NodeB (next generation NodeB, gNB) in a 5G NR system. The network device may alternatively include an access node or the like in a wireless fidelity (wireless fidelity, Wi-Fi) system. The network device may alternatively be a relay station, a vehicle-mounted device, a future evolved public land mobile network (Public Land Mobile Network, PLMN) device, a device in a D2D network, a device in a machine-to-machine (machine-to-machine, M2M) network, a device in an internet of things (internet of things, IoT) network, a network device in a PLMN network, or the like. A specific technology and a specific device form that are used by the network device are not limited in embodiments of this application.

For ease of understanding embodiments of this application, the following briefly describes several terms in this application.

(1) Unlicensed spectrum (unlicensed spectrum)

The unlicensed spectrum can be used for communication without application and are free of charge. A purpose is to serve as a supplementary tool for an operator to enhance service provision. Communication on the unlicensed spectrum needs to comply with some regulations, for example, a listen before talk (listen before talk, LBT) requirement, to ensure access fairness between various types of UEs operating on the spectrum. SL communication on the unlicensed spectrum may be referred to as SL-U, and NR communication on the unlicensed spectrum may be referred to as NR-U. An SL UE, an NR UE, a Wi-Fi UE, and a Bluetooth UE may all perform transmission on the unlicensed spectrum.

(2) Listen before talk (listen before talk, LBT)

In a communication system deployed based on the unlicensed spectrum, each node determines a busy/idle state of an unlicensed band based on a value of a receive power in the unlicensed band. If the receive power is less than a specific threshold, it is considered that there is no interference source in the unlicensed band and the unlicensed band is in the idle state. A network device or a terminal device can use (preempt) a channel (band) only when the channel (band) is idle and is not occupied by another network device or terminal device, and then can send information and data. This mechanism of listening before sending is referred to as LBT, and the mechanism can avoid a conflict when nodes use an unlicensed spectrum resource.

A channel access process includes type1 (type1) LBT and type2 LBT. The type1 LBT is backoff-based LBT, and a backoff time is related to a CAPC, and access can be performed only after a channel is idle for a long time. The type2 LBT requires only a short channel idle time (for example, 16 $\mu$s or 25 $\mu$s) for a UE to access a channel, is mainly used when a channel occupancy time (channel occupancy time, COT) is shared, and has a corresponding execution condition. For example, a UE with an initiated COT (that is, a UE that preempts the COT) and a UE that shares the COT have a transmitting/receiving relationship.

(3) Initial UE and sharing UE

Initial UE: is a UE with an initiated COT, a UE with initiated CO, or a UE that performs transmission within a COT after executing LBT (for example, the type1 LBT) successfully. The initial UE may perform transmission in at least A beginning slots within the COT, where A is an integer. The initial UE may also perform transmission in any at least B slots within the COT, or perform transmission in at least C slots before an end of the COT, where B and C are both integers. The initial UE and another terminal device may jointly occupy a channel in a period of continuous time, that is, the initial UE and the another terminal device share the COT.

Sharing UE: is a UE that performs transmission within a COT of the initial UE. There may be one or more sharing UEs. The sharing UE executes LBT (for example, the type2 LBT) after transmission of the initial UE, and shares the initiated COT of the initial UE; or the sharing UE executes LBT (for example, the type2 LBT) after transmission of another sharing UE, and shares the initiated COT of the initial UE. The sharing UE is a receiving UE of the initial UE; or the initial UE is a receiving UE of the sharing UE; or the initial UE, a first sharing UE, and a second sharing UE are in a same group, and the first sharing UE shares the COT and sends sidelink information to the second sharing UE. The sharing UE performs transmission in an interlace manner or a non-interlace manner within the COT.

(4) Type1 channel access (Type 1 channel access or Type 1 SL channel access)

The type1 channel access may also be referred to as type1 LBT, and includes two parts: channel sensing (defer duration) with a length of $T_d$ and cyclic sensing.

The channel sensing with the length of $T_d$ is formed by one $T_f$=16 $\mu$s and subsequent $m_p$ contiguous $T_{s1}$=9 $\mu$s,

that is, $T_d=T_f+m_p*T_{s1}$. A sensing time of $T_f$ is 9 $\mu$s at the beginning, and after all sensing times of $T_d$ are idle, cyclic sensing is performed. For a value of $m_p$, refer to Table 1 or Table 2, where $CW_p$ is a contention window (contention window), $CW_{min,p}$ is a minimum value of the contention window, $CW_{max,p}$ is a maximum value of the contention window, $W_{min,p} \leq CW_p \leq CW_{max,p}$, and $T_{cot,p}$ is a maximum length of a COT.

The cyclic sensing is a cyclic process that is based on a counter N, and includes the following steps.

Step 1: Set $N=N_{init}$, where $N_{init}$ is a random number ranging from 0 to $CW_p$. Then, proceed to step 4.

Step 2: If N>0, a UE determines to decrease a value of the counter, so that N=N-1.

Step 3: Sense a channel (sense the channel) in a sensing slot (an additional sensing slot duration), and if a sensing result is "idle" (idle), proceed to step 4, if a sensing result is not "idle", proceed to step 5.

Step 4: If N=0, stop; otherwise, proceed to step 2.

Step 5: Sense the channel until it is sensed that one sensing slot (sensing slot) in $T_d$ is busy (busy), or until all sensing slots in $T_d$ are idle.

Step 6: If all the sensing slots in $T_d$ are idle, proceed to step 4, otherwise, proceed to step 5.

**Table 1**

| CAPC (p) | $m_p$ | $CW_{min, p}$ | $CW_{max, p}$ | $T_{cot, p}$ | $CW_p$ value |
|----------|-------|---------------|---------------|--------------|--------------|
| 1 | 1 | 3 | 7 | 2 ms | {3, 7} |
| 2 | 1 | 7 | 15 | 3 ms | {7, 15} |
| 3 | 3 | 15 | 63 | 8 ms or 10 ms | {15, 31, 63} |
| 4 | 7 | 15 | 1023 | 8 ms or 10 ms | {15, 31, 63, 127, 255, 511, 1023} |

**Table 2**

| CAPC (p) | $m_p$ | $CW_{min, p}$ | $CW_{max, p}$ | $T_{cot, p}$ | $CW_p$ value |
|----------|-------|---------------|---------------|--------------|--------------|
| 1 | 2 | 3 | 7 | 2ms | {3, 7} |
| CAPC (p) | $m_p$ | $CW_{min, p}$ | $CW_{max, p}$ | $T_{cot, p}$ | $CW_p$ value |
| 2 | 2 | 7 | 15 | 4ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

Type2 channel access (Type 2 channel access or Type 2 SL channel access)

The type2 channel access may also be referred to as type2 LBT. The type2 channel access includes three types: type 2A, type 2B, and type 2C. The type2 LBT requires only a short channel idle time (for example, 16 $\mu$s or 25 $\mu$s) for a UE to access a channel, is mainly used when a COT is shared, and has a corresponding execution condition. For example, a UE with an initiated COT and a UE that shares the COT mainly have a transmitting/receiving relationship.

Type 2A channel access: The UE performs transmission immediately after at least sensing that the channel is idle in a sensing interval $T_{short} = 25us$. Specifically, $T_{short} = 25us$ is formed by one sensing slot with $T_f=16$ $\mu$s and one sensing slot with $T_{sl}=9$ $\mu$s. If the two sensing slots are both idle, the channel is considered idle.

Type 2B channel access: The UE performs transmission immediately after sensing that the channel is idle in $T_f=16$ $\mu$s). Specifically, channel sensing occurs in the last 9 $\mu$s of $T_f$, and a channel sensing time is not less than 5 $\mu$s. If the channel is sensed to be idle for more than 4 $\mu$s, the channel is considered idle.

Type 2C channel access: The UE can perform transmission without channel sensing, and a maximum transmission time is 584 $\mu$s.

(5) Channel occupancy time (channel occupancy time, COT)

Channel occupancy (CO, channel occupancy) refers to transmission on one or more channels after the UE performs the channel access process. After executing type1 LBT, the UE occupies a channel for transmission in a period of continuous time, which is referred to as the COT. A frequency domain unit of the COT is a channel, and a time domain unit is ms or a slot. In this application, the COT may be a time concept, that is, a time of SL transmission, or may be a resource concept, that is, a time-frequency resource occupied by SL transmission. The CO may be a time concept, that is, a time of SL transmission, or may be a resource concept, that is, a time-frequency resource occupied by SL transmission. The UE may perform transmission on a plurality of adjacent or non-adjacent channels. That the UE performs transmission on a plurality of channels may be understood as follows: Transmission of the UE occupies one COT, and the COT occupies a plurality of channels in frequency domain; or transmission of the UE occupies a plurality of COTs, and each COT occupies one channel in frequency domain. In this application, if no further differentiation is made, the COT and the CO are a same concept.

Transmission of the UE cannot exceed a limit of a maximum channel occupancy time (maximum channel occupancy time, MCOT), which is denoted as $T_{cot,p}$. For different CAPCs, values of $T_{cot,p}$ are different, as shown in Table 4 or Table 5. For one UE accessing the channel and performing transmission within the COT, a transmission time does not exceed the maximum channel occupancy time $T_{cot,p}$. For a plurality of UEs performing transmission within the COT, a transmission time of the UE with the initiated COT and a transmission time of the UE sharing the COT do not exceed the maximum channel occupancy time $T_{cot,p}$. P is a CAPC of the UE with the initiated COT; or P is a CAPC with a smallest CAPC value in the UEs performing transmission within the COT.

(6) COT sharing

After successfully executing LBT, the UE performs transmission within the COT, which may be considered that the UE initiates the COT. For example, channel access is performed through type1 LBT. An initial device initiating the COT and another device may jointly occupy the channel. This process is COT sharing. Without ambiguity, in this application, the UE with the initiated COT is referred to as the initial UE or the UE initiating the COT, and another UE that jointly occupies the COT is referred to as the sharing UE or the UE sharing the COT.

In a case of COT sharing, in a part of a time period of the COT, the initial device may send data to another device, and in another time period of the COT, another device that receives the data may send data to the initial device by using the COT. Generally, a device that does not receive the data sent by the initial device cannot send data to the initial device by using the COT.

(7) SL slot structure

As shown in FIG. 2, one SL slot includes 14 symbols (symbol), namely, symbols 0 to 13. Specifically, channels in one SL slot are distributed as follows: Automatic gain control (automatic gain control, AGC) is distributed on the symbol 0, a physical sidelink shared channel (physical sidelink shared channel, PSSCH) is distributed on the symbol 1 to the symbol 9, a physical sidelink control channel (physical sidelink control channel, PSCCH) is distributed on the symbol 1 to the symbol 3 or the symbol 1 and the symbol 2, a physical sidelink feedback channel (physical sidelink feedback channel, PSFCH) is distributed on the symbol 11 and the symbol 12, a gap GAP of the PSFCH is distributed on the symbol 11 and the symbol 12, and a gap is distributed on the slot 10 and the slot 13. The PSCCH carries first-stage sidelink control information (sidelink control information, SCI), the PSSCH carries second-stage SCI, a medium access control control element (medium access control control element, MAC CE), and/or data, and the PSFCH carries feedback information.

It should be understood that FIG. 2 merely shows an example of a slot structure in which the SL slot includes the PSFCH, and some SL slot structures may not include the PSFCH. Regardless of whether the slot includes the PSFCH, a 1st symbol in the slot is AGC, and a last symbol in the slot is a GAP. The GAP may also be referred to as a blank symbol. In one slot, information sent on a 2nd symbol is duplicated by the 1st OFDM symbol for AGC. In addition, the UE may receive and send the PSSCH in two consecutive slots respectively, or the UE may receive and send the PSSCH and the PSFCH respectively in a same slot. Therefore, after the PSSCH and after the PSFCH symbol, a GAP symbol is required for transmitting/receiving transition of the UE.

A scheduling granularity of the PSCCH and the PSSCH is in a unit of one slot in time domain, and is in a unit of one or more contiguous subchannels in frequency domain, where one subchannel includes {10, 12, 15, 20, 25, 50, 75, 100} RBs. One resource block (resource block, RB) is a frequency domain resource unit including 12 contiguous subcarriers. A scheduling unit of the PSFCH is one symbol in time domain and one RB in frequency domain. In addition, the RB may also be referred to as a physical resource block (physical resource block, PRB). Table 3 shows quantities of RBs in different transmission bandwidths at different subcarrier spacings (subcarrier spacing, SCS).

**Table 3**

| Quantity of RBs | | Transmission bandwidth (MHz) | | | | | | | | | | | | |
|---|---|---|---|---|---|---|---|---|---|---|---|---|---|---|
| | | 5 | 10 | 15 | 20 | 25 | 30 | 40 | 50 | 60 | 70 | 80 | 90 | 100 |
| SCS (kHz) | 15 | 25 | 52 | 79 | 106 | 133 | 160 | 216 | 270 | N/A | N/A | N/A | N/A | N/A |
| | 30 | 11 | 24 | 38 | 51 | 65 | 78 | 106 | 133 | 162 | 189 | 217 | 245 | 273 |
| | 60 | N/A | 11 | 18 | 24 | 31 | 38 | 51 | 65 | 79 | 93 | 107 | 121 | 135 |

(8) Subchannel and interlace

In the SL-U, the UE may support transmission in a unit of a subchannel in frequency domain, or may support transmission in an interlace (interlace) manner. In other words, a basic unit of frequency domain resource allocation is a subchannel or an interlace. In this application, a frequency domain unit of a sidelink resource is a subchannel or an interlace. The interlace may also be denoted as interleaving, interlacing, or row-by-row. The interlace manner may be understood as that the UE performs transmission on non-contiguous RBs. A non-interlace manner may be understood as that the UE performs transmission on contiguous RBs, or the UE performs transmission on contiguous frequency domain resources, or the UE performs transmission on a subchannel, or the UE performs transmission in a subchannel form.

The protocol defines multiple interlaces of resource blocks (multiple interlaces of resource blocks), which are referred to as an interlace in the following. An interlace m includes common resource blocks (common resource block, CRB) $\{m, M+m, 2M+m, 3M+m,...\}$. M is an interlace number, and $m \in \{0,1,...,M-1\}$. Optionally, a value of M is related to the SCS. For example, when $\mu=0$ (that is, the subcarrier spacing is 15 kHz), the value of M is 10. For another example, when $\mu=1$ (that is, the subcarrier spacing is 30 kHz), the value of M is 5.

A relationship among the CRB $n_{CRB}^{\mu}$, the interlaces of resource blocks, a BWP i, and the interlace m satisfies:

$$n_{CRB}^{\mu} = M \times n_{IRB,m}^{\mu} + N_{BWP,i}^{start,\mu} + \left(\left(m - N_{BWP,i}^{start,\mu}\right) mod\, M\right)$$

$N_{BWP,i}^{start,\mu}$ represents a common resource block starting from the BWP, and is a quantity of CRBs relative to a common resource block 0. When there is no risk of confusion, an index $\mu$ can be omitted. The UE expects that a quantity of common resource blocks in an interlace included in the BWP i is not less than 10. For ease of description, the common resource block CRB may be understood as an RB.

One interlace includes N non-contiguous RBs. Optionally, spacings between RBs in the interlace may be the same or different. For example, in one interlace, an RB spacing may be M RBs. The RB spacing is an interval between a frequency domain start location of one RB and a frequency domain start location of a 2nd RB in the interlace. For another example, in one interlace, an RB spacing may be M-1 RBs. The RB spacing is an interval between a frequency domain end location of one RB and a frequency domain start location of a 2nd RB.

For example, as shown in FIG. 3, a horizontal axis represents a frequency domain, and a unit is an RB; and a vertical axis represents a time domain, and a unit is a symbol. There are 51 RBs in total, that is, 51 small boxes, at a 30 kHz subcarrier spacing in a 20 MHz frequency bandwidth. In the 51 resource blocks, 10 or 11 equally spaced RBs form an interlace. Specifically, 11 RBs whose numbers are 0 are an interlace 0, 10 RBs whose numbers are 1 are an interlace 1, 10 RBs whose numbers are 2 are an interlace 2, 10 RBs whose numbers are 3 are an interlace 3, and 10 RBs whose numbers are 4 are an interlace 4. In other words, the 51 RBs include five interlaces in total.

For example, a 20 MHz transmission bandwidth is used as an example. Table 4 lists combinations of a quantity M of interlaces and a quantity N of PRBs in the interlaces at different SCSs. At least one combination of the quantity M of interlaces and the quantity N of PRBs in the interlaces may be determined based on configuration or pre-configuration.

**Table 4**

| SCS (15 kHz) | | M | N |
|---|---|---|---|
| 15 | Case 1 | 12 | 8 or 9 |
| | Case 2 | 10 | 10 or 11 |
| | Case 3 | 8 | 13 or 14 |
| 30 | Case 1 | 6 | 8 or 9 |
| | Case 2 | 5 | 10 or 11 |
| | Case 3 | 4 | 12 or 13 |

(continued)

| SCS (15 kHz) | | M | N |
|---|---|---|---|
| 60 | Case 1 | 4 | 6 |
| | Case 2 | 3 | 8 |
| | Case 3 | 2 | 12 |

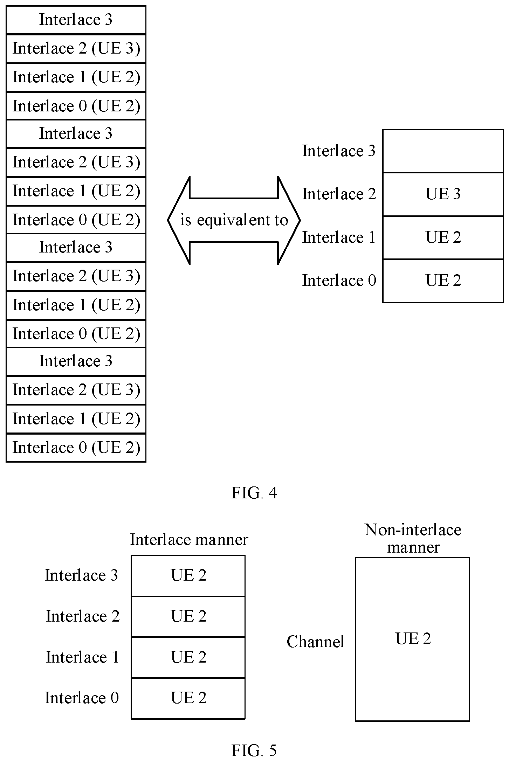

It can be learned that RBs in an interlace are actually distributed at intervals. As shown in FIG. 4, in FIG. 4, a horizontal axis represents a time domain (for example, one slot), and a vertical axis represents a frequency domain (for example, one channel). There are four interlaces in the channel: an interlace 0, an interlace 1, an interlace 2, and an interlace 3, and each interlace includes four RBs. Different UEs may perform transmission in a frequency division manner on different interlaces. For example, a UE 2 performs transmission on four RBs corresponding to the interlace 0 and four RBs corresponding to the interlace 1, a UE 3 performs transmission on four RBs corresponding to the interlace 2, and no UE performs transmission on the interlace 3. Because the left figure in FIG. 4 is complex, in this application, the right figure in FIG. 4 represents a same meaning, that is, a channel includes four interlaces, a UE 2 performs transmission on the interlace 0 and the interlace 1, the UE 3 performs transmission on the interlace 2, and no UE performs transmission on the interlace 3.

In addition, transmission of one UE on a channel may be performed in an interlace manner, or may be performed in a non-interlace manner. As shown in FIG. 5, both are transmission on a channel. The left figure in FIG. 5 shows that the UE 2 performs transmission on all interlaces of the channel in the interlace manner, and the right figure in FIG. 5 shows that the UE 2 performs transmission on the channel in the non-interlace manner. The "non-interlace manner" may also be referred to as a channel manner, a subchannel manner, or a manner of fully occupying a channel. Optionally, that the channel is fully occupied may be understood as that at least 80% resources are occupied in frequency domain.

(9) OCB requirement

A nominal channel bandwidth is a widest band allocated to a single channel, including a guard band. An occupied channel bandwidth (Occupied Channel Bandwidth) is a bandwidth that includes 99% of a signal power. A nominal channel bandwidth of a single operating channel is 20 MHz. The occupied channel bandwidth needs to be between 80% and 100% of the nominal channel bandwidth. For a UE with a plurality of transmit chains (transmit chains), each transmit chain needs to meet this requirement. The occupied channel bandwidth may vary with a time/payload. During the channel occupancy time (COT, Channel Occupancy Time), the UE may temporarily perform transmission in a channel bandwidth lower than 80% of the nominal channel bandwidth of the UE, and a minimum transmission bandwidth is 2 MHz

Interlace transmission is used to meet the OCB requirement. The 20 MHz bandwidth and the 30 kHz SCS are used as an example. The transmission bandwidth is 51 RBs. If one subchannel includes 10 RBs, there are five subchannels (one remaining RB is idle). If the UE performs sending on one subchannel, the occupied bandwidth is about 4 MHz, which does not meet the OCB requirement that "the occupied channel bandwidth needs to be between 80% and 100% of the nominal channel bandwidth". If sending is performed in the interlace manner, for example, in FIG. 3, if sending is performed on the interlace with an index of 0, a bandwidth of about 20 MHz, that is, 100% of the nominal bandwidth, is occupied; if sending is performed on an interlace with an index of 1, a bandwidth of about 18 MHz, that is, about $46/51 \approx 90\%$ of the bandwidth, is occupied. Therefore, the OCB requirement can be met.

In this application, two sending manners are described by using the "interlace manner" and the "non-interlace manner". The interlace manner may be understood as that the UE performs transmission on non-contiguous RBs. Optionally, spacings between RBs in the interlace may be the same or different. The non-interlace manner may be understood as that the UE performs transmission on contiguous RBs, or the UE performs transmission on contiguous frequency domain resources, or the UE performs transmission on a subchannel, or the UE performs transmission in a subchannel form.

(10) Time unit and frequency domain unit

A time unit (or a time domain resource) includes a symbol (symbol), a slot (slot), a mini-slot (mini-slot), a partial slot (partial slot), a sub-frame (sub-frame), a radio frame (frame), a sensing slot (sensing slot), and the like.

A frequency domain unit (or a frequency domain resource) includes a resource element (resource element, RE), an RB, a subchannel (subchannel), a resource pool (resource pool), a bandwidth (bandwidth), a bandwidth part (bandwidth part, BWP), a carrier (carrier), a channel (channel), an interlace (interlace), and the like.

(11) Resource pool

NR-SL communication is performed based on a resource pool (resource pool). The resource pool is a time-frequency resource dedicated to SL communication. Frequency domain resources included in the resource pool are contiguous. Time domain resources included in the resource pool may be contiguous or non-contiguous. Different resource pools are identified by SL-ResourcePoolID. The UE performs receiving in a receiving resource pool and performs sending in a sending resource pool. If resource pools have a same resource pool index, it may be considered that time-frequency resources in the resource pools totally overlap.

In the SL-U, because a band is shared by UEs in a plurality of forms, for example, the SL UE, the Wi-Fi UE, and the Bluetooth UE perform transmission in a same band. The SL resource pool may also be understood as a set of resources that may be used for SL transmission. In embodiments, the resource pool may also be referred to as a channel (channel), an operating channel (Operating channel), and a nominal channel (Nominal Channel Bandwidth) bandwidth (bandwidth). In other words, the resource pool, the channel, and the bandwidth are all represent the set of resources that may be used for SL transmission.

In the resource pool, the UE may transmit the PSCCH and/or the PSSCH on M adjacent channels, or may transmit the PSCCH and/or the PSSCH on one channel. For example, the UE transmits the PSCCH on A interlaces and transmits the PSSCH on B interlaces, where A is less than or equal to B, and both A and B are integers.

For the UE performing transmission on one channel, the UE transmits the PSCCH on A interlaces with smallest indexes in the B interlaces for transmitting the PSSCH. For example, A=1, B=4, M=1, indexes of interlaces for transmitting the PSSCH are 0, 1, 2, and 3 respectively, and the UE transmits the PSCCH on the interlace 0.

For the UE performing transmission on M adjacent channels, the UE transmits the PSCCH on A interlaces on a channel with a smallest channel index, and the UE transmits the PSSCH on a total of B interlaces on the M channels. For example, if A=1, B=4, M=2, and channel indexes are 0 and 1 respectively, the UE transmits the PSCCH and the PSSCH on an interlace 0 on the channel 0, transmits the PSSCH on an interlace 1 on the channel 0, and transmits the PSSCH on an interlace 0 and an interlace 1 on the channel 1.

(12) Priority

A service priority of a UE B is specifically a transmission priority (transmission priority) of the UE B. Because the UE B may send a plurality of services at the same time, priorities of the plurality of services may be different. Therefore, it is not very accurate to simply describe the priority of the UE B.

The service priority may also be referred to as an L1 priority (L1 priority), a physical layer priority, a priority carried in SCI, a priority corresponding to a PSSCH associated with SCI, a transmission priority, a priority of sending a PSSCH, a priority for resource selection, a priority of a logical channel, or a highest priority of a logical channel.

There is a correspondence between a priority level and a priority value. For example, a higher priority level corresponds to a lower priority value, or a lower priority level corresponds to a lower priority value. For example, the higher priority level corresponds to the lower priority value, and the priority value may be an integer ranging from 1 to 8 or an integer ranging from 0 to 7. If the priority value ranges from 1 to 8, the value 1 of the priority indicates a highest priority.

(13) Source identifier and destination identifier (UE identifier)

A source layer 2 identifier (Source Layer-2 ID or source L2 ID) is 24 bits. The least significant 8 bits (LSB part (8 bits)) of the source layer 2 identifier are referred to as a source layer 1 identifier, that is, a source ID (source ID) indicated in SCI of NR. The most significant 16 bits (MSB part (16 bits)) are referred to as an SRC, and are indicated in a MAC header of a MAC CE. A source identifier in control information may be a source ID indicated in SCI of NR, an SRC in a MAC header, or a source layer 2 identifier. A destination layer 2 identifier (Destination Layer-2 ID or destination L2 ID) is 24 bits. The least significant 16 bits (LSB part (16 bits)) of the destination layer 2 identifier are referred to as a destination layer 1 identifier, that is, a destination ID (destination ID) indicated in SCI of NR. The most significant 8 bits (MSB part (8 bits)) are referred to as a DST, and are indicated in a MAC header of a MAC CE. A destination identifier in control information may be a destination ID indicated in SCI, a DST in a MAC header, or a destination layer 2 identifier.

SCI of LTE has no source identifier, and has only a 24-bit source layer 2 identifier, which is indicated by an SRC field in a MAC header. SCI of LTE has no destination identifier, and has only a 24-bit destination layer 2 identifier. A DST field in a MAC header indicates the destination layer 2 identifier or the most significant 16 bits of the destination layer 2 identifier.

In addition, in the protocol, the destination may also be generalized. Specifically, for unicast, the destination represents a pair of a source layer 2 identifier and a destination layer 2 identifier, for broadcast and multicast, the destination represents a destination layer 2 identifier.

It may be understood that the identifier, the sequence, the number, and the index represent a same meaning.

(14) Sequence

A sequence is generated by performing cyclic shift on a base sequence, and a plurality of different sequences may be generated by performing different cyclic shifts on one base sequence. A root sequence number is used to generate the base sequence. The root sequence number may also be referred to as a root sequence index, and the base sequence may also be referred to as a root sequence. The following uses a low peak-to-average power ratio (low peak to average power ratio, low-PAPR) sequence $r_u^{\alpha}(n)$ as an example for description.

The sequence $r_u^{\alpha}(n)$ may be defined by a cyclic shift $\alpha$ of a base sequence $\overline{r}_u(n)$ according to the following formula (I):

$$r_u^{\alpha}(n) = e^{j\alpha n}\,\overline{r}_u(n), \text{ where } 0 \leq n \leq M_{ZC} \quad (I)$$

In the formula (I), $\overline{r}_u(n)$ represents the base sequence, $M_{ZC}$ represents a length of the base sequence, and the cyclic shift $\alpha$ in the formula (I) may be described by using the formula (II):

$$\alpha = \frac{2\pi}{N_{CS}}\left(m_{CS} \bmod N_{cs}\right) \quad (II)$$

In the formula (II), $m_{CS}$ is a cyclic shift value in a length $N_{CS}$. Optionally, $m_{CS}$ may also be referred to as a cyclic shift value of a sequence.

The base sequence $\overline{r}_u(n)$ may be a ZC sequence. Assuming that a length $M_{ZC}$ of the ZC sequence is equal to 12, $\overline{r}_u(n)$ may be represented by using a formula (III):

$$\overline{r}_u(n) = e^{j\phi(n)\pi/4}, \text{ where } 0 \leq n \leq M_{ZC} - 1 \quad (III)$$

The following Table 5 shows values of $u$ and $\varphi(n)$ in the formula (III) when $M_{ZC}$ is equal to 12. $u$ may be referred to as a root sequence number of the base sequence $\overline{r}_u(n)$.

**Table 5**

|   | $\varphi(0), \ldots, \varphi(11)$ | | | | | | | | | | | |
|---|---|---|---|---|---|---|---|---|---|---|---|---|
|   | 3 |   | 3 | 3 | 3 |   | 3 | 1 |   |   |   | 3 |
|   | 3 |   |   | 3 |   |   | 1 | 1 |   |   |   |   |
|   | 3 |   |   |   | 3 |   | 1 |   |   | 3 |   | 3 |
|   | 3 | 3 | 1 |   |   |   | 3 |   | 3 |   | 1 | 3 |
|   | 3 | 1 | 1 |   |   |   |   | 1 |   | 1 | 3 |   |
|   | 3 | 3 |   |   | 3 | 3 | 3 | 1 |   | 1 |   |   |
|   |   | 1 |   | 1 | 1 | 1 | 3 | 1 |   |   |   | 3 |
|   | 1 | 3 |   | 1 | 3 | 3 | 3 | 1 |   | 1 |   | 3 |
|   | 3 | 1 |   |   | 3 | 1 | 3 |   |   |   |   |   |
|   | 3 | 1 | 1 | 3 | 3 | 1 | 3 |   |   |   | 1 | 3 |
| 0 | 3 |   | 3 |   |   | 3 | 1 | 1 |   |   |   | 3 |
| 1 | 3 | 1 | 3 | 1 | 1 | 3 |   |   | 1 | 1 |   | 3 |
| 2 | 3 | 1 |   | 3 | 3 | 1 | 3 |   | 1 | 3 |   |   |
| 3 | 3 |   | 1 | 1 |   |   | 3 | 1 | 1 | 3 | 1 | 3 |
| 4 |   |   | 3 |   |   |   |   |   | 1 |   | 1 |   |

(continued)

| φ(0), ...,φ(11) | | | | | | | | | | | | |
|---|---|---|---|---|---|---|---|---|---|---|---|---|
| 5 | 3 | | | 1 | 1 | 3 | 3 | 1 | 1 | | | 3 |

| φ(0) , ...,φ(11) | | | | | | | | | | | | |
|---|---|---|---|---|---|---|---|---|---|---|---|---|
| 6 | 1 | 1 | 1 | 1 | | 3 | 1 | | | 1 | 3 | |
| 7 | 1 | | | 1 | | | 1 | 1 | 3 | | | 3 |
| 8 | 3 | | | | 1 | 1 | 3 | | | 3 | | 3 |
| 9 | 3 | 3 | | 3 | 1 | | | | 1 | 3 | | 3 |
| 0 | | | | | 3 | 1 | | | | 1 | 3 | |
| 1 | 3 | | | 3 | | | | | | 3 | | |
| 2 | 3 | | | 1 | 3 | 3 | 1 | 3 | | | 3 | |
| 3 | | 1 | 3 | 3 | 1 | | | | 3 | 1 | 3 | |
| 4 | 3 | 1 | | 3 | | | | 1 | 3 | | | |
| 5 | 3 | | | 1 | | 3 | | 1 | | 1 | | |
| 6 | 1 | | | 3 | | 1 | | 1 | 1 | 3 | | 1 |
| 7 | 3 | 3 | | | 3 | 1 | | 3 | | | 3 | |
| 8 | | 1 | | | 1 | 1 | 1 | | | 3 | | |
| 9 | 3 | | 3 | 3 | 3 | | 1 | 1 | | | 3 | |

$$m_0 = a * \left( N_{SC}^{RB} \cdot \left( 2x_n / N_{CS}^{PSFCH} \right) \right) \quad (0\text{-}1)$$

$$m_0 = a * floor\left( N_{SC}^{RB} \cdot \left( 2x_n / N_{CS}^{PSFCH} \right) \right) \quad (0\text{-}2)$$

$$x_n = \left( (K + Mi) \bmod R_{RB,CS}^{PSFCH} \right) \bmod N_{CS}^{PSFCH} \quad (0\text{-}3)$$

a in the foregoing formulas is an integer, for example, 0, 1, or 2. *floor*() represents rounding down an input variable; $x_n$ is an intermediate variable; $N_{SC}^{RB}$ is a predefined or configured value, for example, 12; $R_{RB,CS}^{PSFCH}$ is a total quantity of all frequency domain RBs and/or a total quantity of frequency domain RBs and cyclic shifts of sequences in a feedback resource set; and $N_{RB}^{PSFCH}$ is a quantity of cyclic shift pairs configured on a sidelink feedback channel PSFCH, for example, 1, 2, 3, 4, and 6.

Optionally, Mi is an identifier of a receiving data channel, and the identifier may be indicated by an upper-layer protocol (is the identity of the UE receiving the PSSCH as indicated by higher layers).

In addition, $m_0$ in the foregoing formula is a first cyclic shift value, and $m_{cs}$ is a second cyclic shift value. A cyclic shift value $\alpha_l$ may be determined based on $m_0$, $m_{cs}$, and $m_{int}$, for example, $\alpha_l$ is equal to $(m_0 + m_{cs} + m_{int})$, for another example, determined by using the following formula (0-4):

$$\alpha_l = \frac{2\pi}{N_{sc}^{RB}} \left( \left( m_0 + m_{cs} + m_{int} + n_{cs}\left(n_{s,f}^{\mu}, l+l'\right) \right) \bmod N_{sc}^{RB} \right) \quad (0\text{-}4)$$

Any one of the determined cyclic shifts in this embodiment of this application may be the first cyclic shift $m_0$, the second cyclic shift $m_{cs}$, a third cyclic shift $m_{int}$, or the cyclic shift $\alpha$ in the foregoing formulas.

(13) NR SL resource allocation mode

There may be two modes (mode) for resource allocation (resource allocation, RA) in SL transmission: a mode 1 and a mode 2 based on different resource allocation subjects. In the mode 1, time-frequency resources for SL transmission are centrally scheduled by a network device, and in the mode 2, time-frequency resources for SL transmission are determined by a terminal device. The following briefly describes the resource allocation mode 2.

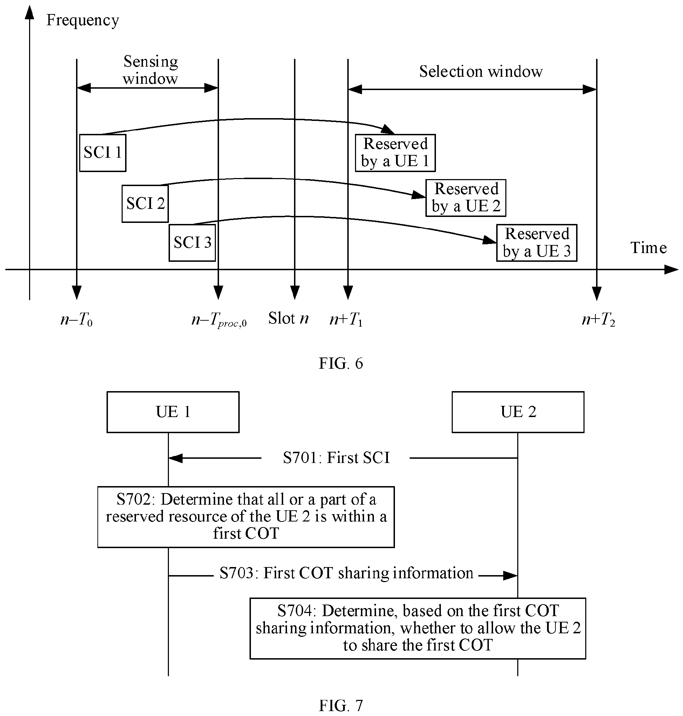

As shown in FIG. 6, in the mode 2, one time point and two important windows are defined.

The time point is a slot in which a higher layer (higher layer) of the terminal device triggers resource selection for sending of a PSCCH and/or a PSSCH. As shown in FIG. 6, the slot may be referred to as a slot n.

One of the two important windows is a sensing window (sensing window), and is a window used by the terminal device to sense occupation of time-frequency resources. For example, the sensing window may correspond to a slot range in FIG. 6, where $T_{proc,0}$ is a value obtained through calculation based on a higher layer parameter, is a value defined in a standard, is a value obtained based on a capability or an implementation of the terminal device, or is a value obtained through calculation based on a higher layer parameter. The implementation of the terminal device may mean a specific software algorithm and hardware implementation of the terminal (for example, a computing chip, a communication chip, a storage chip, a vehicle-mounted chip, or a vehicle-mounted module used by the terminal).

The other one of the two important windows is a selection window (selection window), and is a window used when the terminal device selects a candidate single-slot resource (candidate single-slot resource) based on a sensing result in the sensing window. For example, the selection window may correspond to a slot range in FIG. 2, where $T_1$ and/or $T_2$ are/is values/a value obtained based on an implementation of the terminal device, or values/a value obtained based on a higher layer parameter or an implementation of the terminal device.

Based on the foregoing descriptions, a basic procedure of the resource allocation mode 2 may be summarized as the following steps.

Step 1: In a slot n, a higher layer of the terminal device triggers time-frequency resource selection for sending of a PSCCH and/or a PSSCH, and provides a higher layer parameter.

Optionally, the higher layer parameter includes an identifier of a resource pool for sending the PSCCH and/or the PSSCH, a transmission priority of the PSCCH and/or the PSSCH, a quantity of subchannels for sending the PSCCH and/or the PSSCH, and the like.

Step 2: The terminal device monitors, in a sensing window, SCI sent by another terminal device that uses the resource pool indicated in step 1.

Step 3: The terminal device senses, based on a monitoring result in step 2, usage of a time-frequency resource in a selection window in the resource pool, and determines an available candidate single-slot resource set, where the available candidate single-slot resource set does not include a time-frequency resource that is reserved for use by another terminal device or that may be occupied by another terminal device, and a resource in the candidate single-slot resource set may also be referred to as a reserved resource.

Step 4: The terminal device determines, based on the available candidate single-slot resource set, a time-frequency resource for sending the PSCCH and/or the PSSCH.

For example, FIG. 6 is a diagram of determining a candidate single-slot resource by the terminal device based on the monitoring result in the sensing window in step 3, where a UE 1, a UE 2, and a UE 3 are terminal devices other than the terminal device. SCI 1 is SCI of the UE 1 that is monitored by the terminal device in the sensing window, and the SCI 1 indicates that the UE 1 reserves a partial time-frequency resource in the selection window. In this case, the terminal device may exclude the time-frequency resources reserved by the UE 1. Similarly, SCI 2 is SCI of the UE 2, and SCI 3 is SCI of the UE 3. The terminal device may respectively exclude, based on the SCI 2 and the SCI 3, time-frequency resources reserved by the UE 2 and the UE 3, to determine an available candidate single-slot resource set from remaining resources in the resource selection window.

It can be learned from the foregoing that, when a plurality of terminal devices perform communication on the unlicensed spectrum through a sidelink, a UE with an initiated COT exclusively uses a channel, and another UE that does not obtain a frequency domain resource through contention cannot use the frequency domain resource. In NR-V2X, a time domain unit of a resource is a slot, and non-adjacent slots may be selected to transmit sidelink information. However, in SL-U, a terminal device with an initiated channel occupancy time (channel occupancy time, COT) needs to perform continuous transmission within the COT, or perform continuous transmission for a period of time within the COT together with another terminal device sharing the COT. If discontinuous transmission is performed, COT interruption is caused, that is, the terminal device with the initiated COT cannot continue to use the COT. Therefore, to enable transmission of the terminal device with the initiated COT and transmission of the another terminal device to form continuous transmission, how the terminal device with the initiated COT determines specific terminal devices that can share the initiated COT of the terminal device becomes an urgent problem to be resolved.

In view of this, this application provides a method to effectively resolve the foregoing technical problem. The following describes the method in detail with reference to FIG. 7.

FIG. 7 is a schematic flowchart of a communication method according to this application. The method may include the following steps.

S701: A UE 2 sends first SCI to a UE 1. The first SCI indicates a reserved resource of the UE 2. Correspondingly, the UE 1 receives the first SCI sent by the UE 2. Optionally, SX01 may also be understood as that the UE 2 sends the first SCI, and correspondingly, all other UEs in a resource pool including the UE 1 can sense, monitor, receive, or decode the first SCI of the UE 2.

Optionally, the first SCI explicitly or implicitly indicates interval information, frequency domain resource information, time domain resource information, and priority information of the reserved resource of the UE 2. The reserved resource indicated by the first SCI includes a retransmission reserved resource of the UE 2, a periodic reserved resource, and a retransmission reserved resource of a periodic reserved resource. For example, the retransmission reserved resource of the UE 2 is indicated by using the frequency domain resource information and the time domain resource information; and/or the periodic reserved resource of a resource in which the first SCI is located is indicated by using the interval information; and/or the retransmission reserved resource of the periodic reserved resource is indicated by using the interval information, the frequency domain resource information, and the time domain resource information.

The reservation interval information may also be periodic reservation interval information. The frequency domain resource information includes at least one of the following information: transmitting a PSCCH and/or a PSSCH in an interlace manner, a start location of an interlace, a quantity of interlaces, transmitting a PSCCH and/or a PSSCH in a non-interlace (for example, a channel) manner, a start location of a subchannel, or a quantity of subchannels. The time domain resource information includes at least one of the following information: transmitting one or more initial transmissions and/or retransmissions in non-consecutive slots, time interval information of one or more initial transmissions and/or retransmissions, transmitting one or more initial transmissions and/or retransmissions in consecutive slots, or information about a quantity of initial transmissions and/or retransmissions. The priority information includes a physical layer priority and/or a channel access priority class (channel access priority class, CAPC).

S702: The UE 1 determines that all or a part of the reserved resource of the UE 2 is within a first COT, where the first COT is an initiated COT of the UE 1.

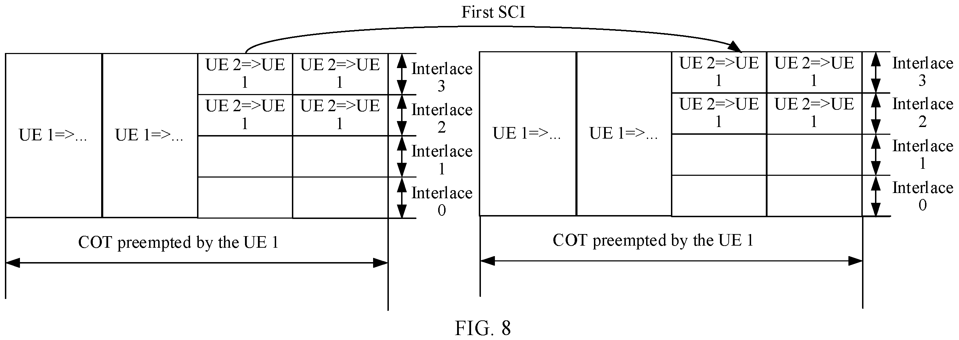

Optionally, as shown in FIG. 8, FIG. 9, FIG. 10, and FIG. 11, the first SCI of the UE 2 indicates a reserved resource within one COT and/or a reserved resource across COTs. The UE 2 may indicate, in previous transmission, a reserved resource for next transmission. UE 1=>... indicates that the UE 1 can send SL information to another UE by using a corresponding resource, and UE 2=>UE 1 indicates that the UE 2 can send SL information to the UE 1 by using a corresponding resource.

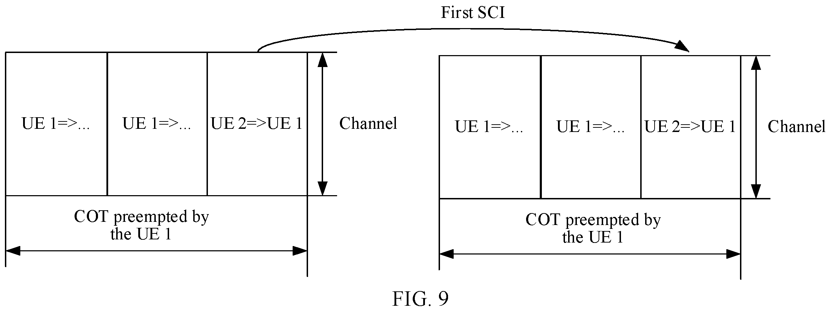

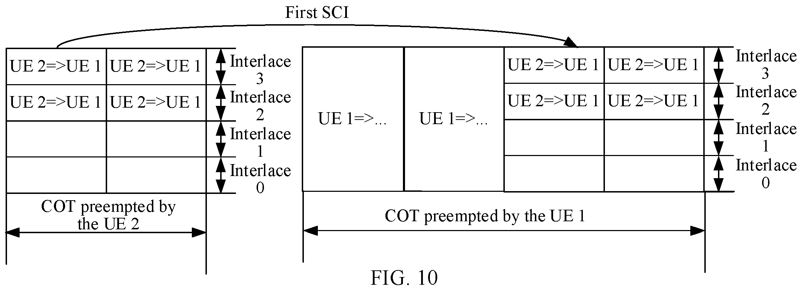

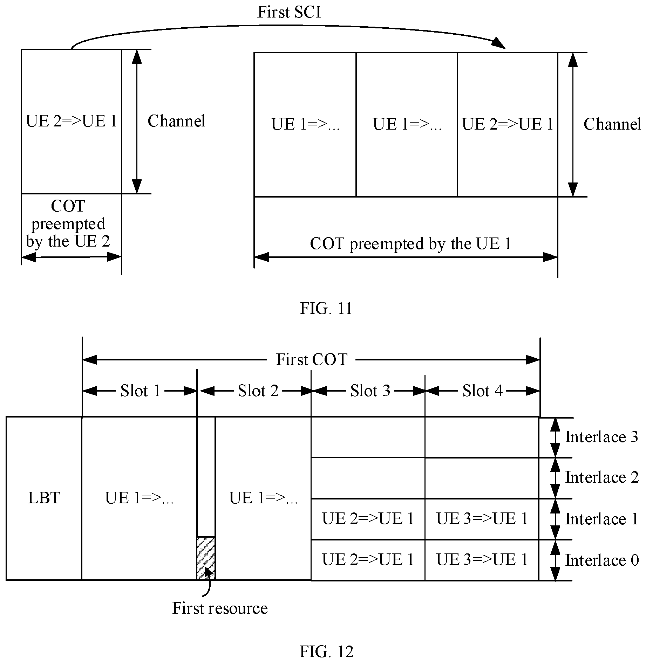

Optionally, a transmission mode of the UE 2 within a current COT is the same as a transmission mode of the UE 2 within a previous COT; or a transmission mode of the UE 2 within a next COT is the same as a transmission mode of the UE 2 within a current COT. Optionally, the UE 1 may determine, based on a transmission mode of the UE 2 on the resource in which the first SCI of is located, a transmission mode of the reserved resource indicated by the first SCI; or the UE 1 may determine, based on a transmission mode of the UE 2 on the resource in which the first SCI is located, a transmission mode of the UE 2 on the reserved resource indicated by the first SCI. The transmission mode includes an interlace transmission mode and/or a non-interlace transmission mode. As shown in FIG. 8, the UE 2 shares the initiated COT of the UE 1, the first SCI of the UE 2 indicates the reserved resource, the UE 2 performs transmission in an interlace manner in previous transmission, and the UE 2 still performs transmission in the interlace manner in next transmission. As shown in FIG. 9, the UE 2 shares the initiated COT of the UE 1 in two times of transmission, the first SCI of the UE 2 indicates the reserved resource, previous transmission is performed in a channel manner (a non-interlace manner), and the UE 2 still performs transmission in the channel manner (the non-interlace manner) in next transmission. As shown in FIG. 10, the UE 2 shares the initiated COT of the UE 1 in two times of transmission, the first SCI of the UE 2 indicates the reserved resource, the UE 2 performs transmission in an interlace manner in previous transmission, and the UE 2 still performs transmission in the interlace manner in next transmission within the initiated COT of the UE 1. As shown in FIG. 11, the UE 2 initiates a COT, the first SCI of the UE 2 indicates the reserved resource, the UE 2 performs transmission in a channel manner (a non-interlace manner) in previous transmission, and the UE 2 performs transmission in the channel manner (the non-interlace manner) in next transmission within the initiated COT of the UE 1. After successfully performing channel access, the UE 1 performs transmission within the first COT. It should be noted that an order of performing the channel access process by the UE 1 and sending the first SCI by the UE 2 is not specifically limited in this application.

Optionally, the first SCI of the UE 2 indicates that the UE 1 is requested to perform channel access and/or transmission is requested within the initiated COT of the UE 1. For example, a field in the first SCI of the UE 2 indicates that the UE 1 is requested to perform channel access and/or transmission is requested within the initiated COT of the UE 1.

For example, the UE 2 may first send the first SCI, where the first SCI indicates that the UE 1 is requested to perform channel access and/or transmission is requested within the initiated COT of the UE 1, and then the UE 1 performs channel access and initiates the first COT. It may also be understood as that the first SCI of the UE 2 triggers the UE 1 to perform channel access, or the first SCI of the UE 2 triggers the UE 1 to initiate the first COT.

For example, the UE 1 performs type1 channel access by using CAPC information indicated by the first SCI of the UE 2, and initiates the first COT.

For example, the UE 1 may first perform channel access, and then the UE 2 sends the first SCI, and the first SCI is used to request to perform transmission within the first COT of the UE 1. Optionally, the UE 1 successfully performs channel access and initiates the first COT, and the UE 2 performs transmission within the first COT.

It should be understood that, after the UE 1 initiates the first COT, the UE 1 may transmit SL information within the first COT. The SL information includes control information (for example, a PSCCH), data information (for example, a PSSCH), feedback information (for example, a PSFCH), and the like of the UE 1.

S703: The UE 1 sends first COT sharing information to the UE 2, where the first COT sharing information indicates that sharing of the first COT is allowed or not allowed. Correspondingly, the UE 2 receives the first COT sharing information from the UE 1.

It should be understood that, that the UE 1 allows the UE 2 to share the first COT means that the UE 1 allows the UE 2 to share a resource within the first COT. Specifically, specific resources within the first COT that may be shared are not described herein, and are described in detail below.

That the UE 1 allows the UE 2 to share the first COT includes: The UE 2 meets a regulatory condition for sharing the first COT, and the UE 1 allows the UE 2 to share the first COT. That the UE 1 does not allow the UE 2 to share the first COT includes two cases. One case is that the UE 2 meets the regulatory condition for sharing the first COT, but the UE 1 does not allow the UE 2 to share the first COT. The other case is that there is no sharing relationship. That there is no sharing relationship includes: The UE 2 does not meet the regulatory condition for sharing the first COT, and the UE 1 does not allow the UE 2 to share the first COT. That the UE 2 meets the regulatory condition for sharing the first COT means that the UE 1 and the UE 2 have a transmitting/receiving relationship. For example, the UE 1 is a receiving UE of the UE 2; or the UE 2 is a receiving UE of the UE 1. For another example, the UE 1 (initial UE), the UE 2 (sharing UE), and a UE 3 (sharing UE) are in a same group, the UE 2 shares the first COT, and the UE 3 is a receiving UE of the UE 2.

Optionally, the first COT sharing information is pre-configured or configured by a network to indicate that the UE 1 allows sharing of the first COT or does not allow sharing of the first COT; or the first COT sharing information is pre-configured or configured by a network to indicate that the UE 1 allows sharing of the first COT, the regulatory condition for sharing the first COT is met and sharing of the first COT is not allowed, or there is no sharing relationship.

Optionally, when the first COT sharing information indicates that sharing of the first COT is allowed, the first COT sharing information triggers the UE 2 to perform type2 channel access, and the UE 2 performs transmission within the initiated first COT of the UE 1 based on the first COT sharing information.

It should be understood that the UE 1 may further share the first COT with another UE besides the UE 2, and an action performed by the another UE is the same as that performed by the UE 2. Details are not described herein again. In the following descriptions, the another UE sharing the first COT is the UE 3.

It should be further understood that reserved resources of the UE 2 and the UE 3 within the first COT may not overlap, or may overlap. Optionally, overlap is total overlap or partial overlap.

Optionally, if the reserved resources do not overlap, the first COT sharing information indicates that sharing of the COT is allowed, and the UE 2 performs sidelink transmission by using a reserved resource of the UE 2 within the first COT.

Optionally, the first COT sharing information indicates that sharing of the first COT is not allowed, and the UE 2 does not share the first COT, that is, the UE 2 does not perform transmission within the first COT.

Optionally, if the first COT sharing information indicates that the UE 2 has no sharing relationship, the regulation does not allow the UE 2 to share the initiated COT of the UE 1.

Optionally, the reserved resources of the UE 2 and the UE 3 within the first COT overlap, and the UE 1 indicates that neither the UE 2 nor the UE 3 is allowed to share the first COT, or the UE 1 indicates that one of the UE 2 and the UE 3 is allowed to share the first COT. For example, it indicates that a UE with a smaller priority value or a higher priority level in the UE 2 and the UE 3 is allowed to share the first COT.

Optionally, the first COT sharing information may be carried in any one of signaling such as a PSFCH, first-stage SCI, second-stage SCI, a MAC CE, PC-5 RRC, and RRC. It should be noted that, because a quantity of carrying bits of the PSFCH is limited, compared with the foregoing other signaling, it cannot be explicitly indicated that the first COT sharing information is sent to the UE 2.

The following specifically describes how the UE 1 sends the first COT sharing information to the UE 2 when the first COT sharing information is carried in the PSFCH.

Optionally, the PSFCH carrying the first COT sharing information and a PSFCH carrying feedback information are in different formats, occupy different time domain resources, and/or occupy different frequency domain resources and/or occupy different sequences. A specific manner to be used is (pre-)configured.

Optionally, the PSFCH that carries the first COT sharing information includes: carrying COT sharing information by using a new PSFCH format; or carrying COT sharing information by using a PSFCH format different from a PSFCH format for carrying a HARQ; or carrying COT sharing information by using a PSFCH format different from a PSFCH format for carrying a conflict indication (conflict indication).

Optionally, for the PSFCH that carries the first COT sharing information, a resource in a PRB set that is not used to transmit the HARQ on the PSFCH channel is used to carry the COT sharing information; and/or a resource in a PRB set that is not used to transmit the conflict indication on the PSFCH channel is used to carry the COT sharing information.

Optionally, for the PSFCH that carries the first COT sharing information, a PSFCH symbol that is not used to transmit the HARQ is used to carry the COT sharing information; and/or a PSFCH symbol that is not used to transmit the conflict indication is used to carry the COT sharing information.

Optionally, for the PSFCH that carries the first COT sharing information, a cyclic shift of a sequence that is not used to transmit the HARQ indicates the COT sharing information; and/or a cyclic shift of a sequence that is not used to transmit the conflict indication is used to carry the COT sharing information.

Optionally, the UE 1 may implicitly indicate, by using at least one of a time domain location of a first resource, a frequency domain location of the first resource, or a cyclic shift of a sequence of the first resource for sending the PSFCH, that the first COT sharing information is sent to the UE 2. Correspondingly, the UE 2 may determine, by using at least one of the time domain location of the first resource, the frequency domain location of the first resource, or the cyclic shift associated with the first resource, that the first COT sharing information is sent to the UE 2.

Optionally, the UE 1 may determine the first resource based on the reserved resource of the UE 2; the UE 1 may determine the first resource based on the reserved resource of the UE 2 within the first COT; the UE 1 may determine the first resource based on a reserved resource that is within the first COT and that is in the reserved resource of the UE 2; or the UE 1 determines the first resource based on a first reserved resource, where the first reserved resource is a reserved resource of the UE 2 within the first COT, and the first reserved resource corresponds to one slot in time domain and corresponds to one subchannel or interlace in frequency domain. Optionally, a frequency domain resource of the reserved resource of the UE 2 within the first COT includes one or more interlaces or subchannels.

Optionally, the first reserved resource may be a resource with a smallest slot index and a smallest subchannel or interlace index in the reserved resource of the UE 2; the first reserved resource is a resource with a smallest slot index and a largest subchannel or interlace index in the reserved resource of the UE 2; the first reserved resource is a resource with a largest slot index and a largest subchannel or interlace index in the reserved resource of the UE 2; or the first reserved resource is a resource with a largest slot index and a smallest subchannel or interlace index in the reserved resource of the UE 2. The following provides several methods for determining the first resource based on the first reserved resource of the UE 2.

Method 1: The UE 1 determines a frequency domain resource of the first resource based on a frequency domain resource of the first reserved resource of the UE 2.

Optionally, the frequency domain resource of the first resource is the frequency domain resource of the first reserved resource.

Optionally, the frequency domain resource of the first resource is one interlace or one RB in the frequency domain resource of the first reserved resource.

Optionally, it is determined, based on identification information of the UE 2, that the frequency domain resource of the first resource is one interlace or one RB in the frequency domain resource of the first reserved resource. For example, $(P_{ID} + X)$ mod R is satisfied, where $P_{ID}$ is the identification information of the UE 2, and R is a quantity of resources that may be used for a first COT sharing indication. The quantity R of resources that may be used for the first COT sharing indication is related to a quantity of interlaces or a quantity of subchannels of the first reserved resource, for example, may be an integer multiple of the quantity of interlaces or the quantity of subchannels. The identification information of the UE 2 may be at least one of source identification information of the UE 2, destination identification information of the UE 2, device identification information of the UE 2, or group identification information of the UE 2.

For example, as shown in FIG. 12, the first COT of the UE 1 includes four slots: a slot 1 to a slot 4, and the first COT corresponds to four interlaces in frequency domain: an interlace 0 to an interlace 3. The UE 2 and the UE 3 have reserved resources within the first COT. The reserved resource of the UE 2 includes two different resources: a resource #1 corresponding to the slot 3 and the interlace 0, and a resource #2 corresponding to the slot 3 and the interlace 1. The reserved resource of the UE 3 includes two different resources: a resource #3 corresponding to the slot 4 and the interlace 0, and a resource #4 corresponding to the slot 4 and the interlace 1. UE 1=>... indicates that the UE 1 can send SL information to another UE by using a corresponding resource, UE 2=>UE 1 indicates that the UE 2 can send SL information to the UE 1 by using a corresponding resource, and UE 3=>UE 1 indicates that the UE 3 can send SL information to the UE 1 by using a corresponding resource. For ease of description, herein, that the first reserved resource of the UE 2 is a resource with a smallest slot index and a smallest interlace index (that is, the first reserved resource is the resource #1) in the reserved resource of the UE 2 is used to specifically describe how to determine the first resource.

For example, as shown in FIG. 12, a frequency domain location of the first reserved resource of the UE 2 is the interlace 0. Therefore, the UE 1 determines that the frequency domain resource of the first resource is also the interlace 0.

Method 2: The UE 1 determines a time domain location of the first resource based on a time domain location of the first reserved resource of the UE 2.

The UE 1 determines the time domain location of the first resource based on the time domain location of the first reserved resource of the UE 2 and a first time interval.

Optionally, the time domain location of the first resource belongs to a COT sharing indication time domain location set, and time domain locations in the COT sharing indication time domain location set are discretely distributed (for example, periodically distributed). The time domain locations discretely distributed (for example, periodically distributed) may also be referred to as PSFCH occasions, for example, a PSFCH occasion used to send the COT sharing indication.

Optionally, the time domain location of the first resource is a $1^{st}$ time domain location that is before a slot of the first reserved resource and that is separated by the first time interval from the slot of the first reserved resource.

Optionally, a value of the first time interval is pre-configured or configured by a network, and is at least one of 0, 1, 2, 3, 4, 5, 9, or 17 slots.

For example, the UE 1 sends the PSFCH on a PSFCH occasion included in a slot separated by at least the first time interval (for example, 0, 1, or 2 slots) before the slot of the first reserved resource of the UE 2. It should be noted that, when the method is used, the value of the first time interval needs to be pre-configured or configured by the network, and the UE 1 and another UE sharing the first COT determine, based on duration of the same first time interval, whether the first COT sharing information is indicated to the UE 1 and the another UE. For example, the UE 1 sends the first COT sharing information on a $1^{st}$ or last PSFCH occasion in a slot separated by the first time interval before the slot of the first reserved resource.

For example, as shown in FIG. 12, if the time domain location of the first reserved resource of the UE 2 is the slot 3, and the agreed first time interval is 0 slots, the UE 1 determines that the UE 2 sends the PSFCH on a PSFCH occasion included in a $1^{st}$ slot before the slot 3 (that is, the time domain resource of the first resource is the slot 2).

However, it should be noted that, according to Method 1 or Method 2 alone, the UE 2 may not determine that the PSFCH is sent to the UE 2. Herein, a reason is described by using Method 1 as an example. As shown in FIG. 12, although the interlace of the first resource is the same as the interlace of the UE 2, because both the UE 2 and the UE 3 have reserved resources on the interlace 0, the UE 2 cannot determine, based on only the interlace 0 of the first resource, whether the PSFCH sent on the first resource is sent to the UE 2.

For example, the UE 1 may determine the frequency domain resource of the first resource in Implementation 1, and determine the time domain resource of the first resource in another manner other than this application. Correspondingly, the UE 2 determines, in Implementation 1, that the first COT sharing information sent on the first resource is indicated to a UE that has a same frequency domain resource as the UE 2, and the UE 2 determines, in the another manner other than this application, that the first COT sharing information sent on the first resource is indicated to a UE that has a same time domain resource as the UE 2, to determine that the first COT sharing information sent on the first resource is indicated to the UE 2.

For example, the UE 1 may determine the time domain resource of the first resource in Implementation 2, and determine the frequency domain resource of the first resource in another manner other than this application. Correspondingly, the UE 2 determines, by using Method 1, that the first COT sharing information sent on the first resource is indicated to a UE that has a same time domain resource as the UE 2, and the UE 2 determines, in the another manner other than this application, that the first COT sharing information sent on the first resource is indicated to a UE that has a same frequency domain resource as the UE 2, to determine that the first COT sharing information sent on the first resource is indicated to the UE 2.

In a specific implementation, the UE 1 may jointly determine the time domain resource and the frequency domain resource of the first resource in Implementation 1 and Implementation 2. Correspondingly, when the UE 2 receives the PSFCH on the first resource, the UE 2 determines that the frequency domain resource of the first resource is the same as the frequency domain resource of the first reserved resource, and a slot (that is, the slot 3) backward separated by a time interval of 0 from the time domain resource of the first resource is a slot that the first reserved resource of the UE 2 is in. Therefore, the UE 2 may determine that the PSFCH is sent to the UE 2, that is, determine that the first COT sharing information on the PSFCH is indicated to the UE 2.

In the foregoing Method 1 and Method 2, how the UE 1 indicates the PSFCH to the UE 2 is clarified. The following continues to describe how the UE 1 indicates whether the UE 2 is allowed to share the first COT.

Optionally, the first COT sharing information is a sequence of the PSFCH, that is, the UE 1 may indicate, by using the sequence of the PSFCH, whether sharing of the first COT is allowed.

A cyclic shift of the sequence of the PSFCH includes 0, 1, 2, 3, 4, 5, 6, 7, 8, 9, 10 or 11. For example, when the cyclic shift of the sequence of the PSFCH is any one of {0, 1, 2, 3, 4, 5}, it indicates that the UE 2 is allowed to share the first COT; when the cyclic shift of the sequence of the PSFCH is any one of {6, 7, 8, 9, 10, 11}, it indicates that the UE 2 is not allowed to share the first COT or has no sharing relationship. For example, when the cyclic shift of the sequence of the PSFCH is any one of {0, 1, 2, 3, 4, 5, 6, 7, 8, 9, 10}, it indicates that the UE 2 is allowed to share the first COT; when the cyclic shift of the sequence of the PSFCH is either of {10, 11}, it indicates that the UE 2 is not allowed to share the first COT or has no sharing relationship.

It may be understood that, in this application, the sequence of the PSFCH may also be referred to as a cyclic shift associated with the PSFCH, a sequence of the first resource, a cyclic shift associated with the first resource, a sequence of the first COT sharing information, a cyclic shift of a sequence of the first COT sharing information, or a cyclic shift associated with the first COT sharing information. The foregoing concepts may be replaced with each other in the following. Optionally, in addition to indicating whether to share the first COT, the cyclic shift associated with the PSFCH may further indicate a time interval between the frequency domain resource of the first reserved resource and/or the first reserved resource and a reference slot. How to indicate the location of the first reserved resource and/or the time interval between the first reserved resource and the reference slot is specifically described in the following Method 3 and Method 4.

Optionally, the reference slot may be at least one of a start slot of the first COT, a $1^{st}$ complete slot of the first COT, a $1^{st}$ effective slot of the first COT, a $1^{st}$ slot for transmitting the PSCCH of the first COT, or a slot in which the first COT sharing information is located (that is, a slot of the first resource). Optionally, the reference slot pre-configured or configured by the network is at least one of the foregoing.

Optionally, the cyclic shift associated with the PSFCH is a cyclic shift associated with an $i^{th}$ RB of an interlace in which the first COT sharing information is located.

Method 3: The UE 1 determines, based on a frequency domain location of the first reserved resource of the UE 2, the cyclic shift associated with the PSFCH. In other words, in this method, in addition to indicating whether to share the first COT, the cyclic shift associated with the PSFCH may further indicate the frequency domain resource of the first reserved resource.

The frequency domain resource of the first reserved resource is an interlace or a subchannel. The UE 1 determines, based on an interlace index or a subchannel index of the first reserved resource of the UE 2, the cyclic shift associated with the PSFCH.

Optionally, the cyclic shift associated with the PSFCH is a frequency domain resource of the first reserved resource.

Optionally, the cyclic shift associated with the PSFCH is determined based on the frequency domain resource of the first reserved resource and identification information of the UE 2. For example, $(P_{ID} + X) \bmod R$ is satisfied, where $P_{ID}$ is the identification information of the UE 2, and R is a quantity of resources that may be used for a first COT sharing indication. The quantity R of resources that may be used for the first COT sharing indication is related to a quantity of interlaces or a quantity of subchannels of the first reserved resource, for example, may be an integer multiple of the quantity of interlaces or the quantity of subchannels.

The identification information of the UE 2 may be at least one of source identification information of the UE 2, destination identification information of the UE 2, device identification information of the UE 2, or group identification information of the UE 2.

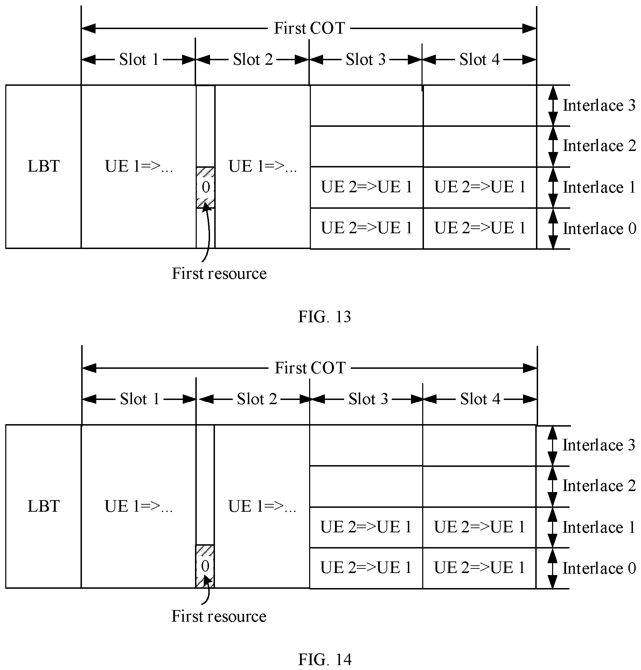

For example, as shown in FIG. 13, the frequency domain location of the first reserved resource of the UE 2 is an interlace 0. Therefore, the UE 1 determines that the cyclic shift associated with the PSFCH is 0.

It should be noted that the frequency domain location of the first resource in FIG. 13 is not necessarily the interlace 1, or may be any one of an interlace 0, an interlace 2, or an interlace 3, provided that the cyclic shift associated with the PSFCH is 0.

Optionally, the cyclic shift associated with the PSFCH may be a cyclic shift associated with any RB in an interlace in which the first COT sharing information is located.

Method 4: The UE 1 determines the sequence of the PSFCH based on a time domain location of the first reserved resource of the UE 2 and the time interval between the first reserved resource and the reference slot. In other words, in this method, in addition to indicating whether to share the first COT, the cyclic shift associated with the PSFCH may further indicate the time interval between the first reserved resource and the reference slot. For a meaning of the reference slot, refer to the descriptions in Method 2.

For example, as shown in FIG. 14, the UE 1 determines to send the PSFCH in the slot 2, and the reference slot is the slot in which the UE 1 sends the PSFCH. Because the time interval between the time domain resource (the slot 3) of the first reserved resource and the reference slot (the slot 2) is 0 slots, the UE 1 determines that the cyclic shift associated with the PSFCH is 0.

Optionally, any one of cyclic shifts {0, 1, 2, 3, 4, 5} associated with the PSFCH indicates that sharing of the first COT is allowed, and indicates the time interval between the first reserved resource and the reference slot.

It should be noted that, same as the reason according to Method 1 or Method 2 alone, according to Method 3 or Method 4 alone, the UE 2 may also not determine that the PSFCH on the first resource is sent to the UE 2. Therefore, the methods provided above may be used in combination to accurately indicate that the PSFCH is sent to the UE 2. In an example, Method 1 and Method 4 may be used in combination. For example, the frequency domain resource of the first resource is determined by pre-configuring or configuring by the networking to use Method 1 or Method 3. For another example, the time domain resource of the first resource is determined by pre-configuring or configuring by the networking to use Method 2 or Method 4. For example, the following specifically describes, with reference to FIG. 14, actions that may be performed by the UE 1 and the UE 2.

The UE 1 allows the UE 2 to share the first COT, and the UE 1 determines the first resource and notifies the UE 2 of the sharing information. Specifically, as shown in FIG. 14, the UE 1 determines that the first reserved resource of the UE 2 is a resource corresponding to a slot 3 and an interlace 0, the UE 1 determines, based on the frequency domain resource of the first reserved resource of the UE 2, that the frequency domain resource of the first resource is the interlace 0, and the UE 1 determines to send the PSFCH in a slot 2 (that is, the time domain resource of the first resource is the slot 2). The reference slot is a slot in which the UE 1 sends the PSFCH. Because the time interval between the time domain resource (the slot 3) of the first reserved resource and the reference slot (the slot 2) is 0 slots, the UE 1 determines that the cyclic shift associated with the PSFCH is 0, and 0 further indicates that the UE 2 is allowed to share the first COT. The UE 1 sends the PSFCH on the first resource. Correspondingly, the UE 2 receives the PSFCH on the first resource. The UE 2 determines that the frequency domain resource of the first resource is the interlace 0 and the time domain resource is the slot 2, and determines, based on the cyclic shift of 0, the slot 3 that is separated by 0 slots after the time domain resource: the slot 2 of the first resource, where the resource corresponding to the interlace 0 and the slot 3 is the first reserved resources of the UE 2. Therefore, the UE 2 determines that the UE 1 allows the UE 2 to share the first COT.

It should be noted that, in the foregoing method, that the UE 2 shares the first COT means that the UE 2 may share a partial resource that is within the first COT and that belongs to the reserved resource of the UE 2.

In the foregoing technical solution, the PSFCH carries the first COT sharing information. Compared with other signaling (such as first-stage SCI, second-stage SCI, a MAC CE, RRC, and PC-5 RRC), signaling overheads are low and a latency is small. Because a quantity of carrying bits of the PSFCH is limited, at least one of a time domain location, a frequency domain location, or a cyclic shift for sending the PSFCH implicitly indicates whether a specific UE is allowed to use the COT of the UE 1. Because the UE 2 knows a time-frequency location of the reserved resource of the UE 2, the UE 2 may determine, based on the at least one of the time domain location, the frequency domain location, or the associated cyclic shift of the PSFCH, that the PSFCH is sent to the UE 2.

Optionally, if the reserved resources do not overlap, the UE 1 may indicate, according to the foregoing method, whether the UE 2 is allowed to share the first COT. However, when the reserved resources of the UE 2 and the UE 3 within the first COT overlap, if the foregoing method is used to simultaneously indicate two terminal devices to share the first COT, and the UE 2 and the UE 3 simultaneously use the overlapped reserved resource to transmit data, a transmission conflict occurs.

Optionally, the reserved resource of the UE 2 within the first COT overlaps the reserved resource of the UE 3 within the first COT. The UE 1 may indicate, according to the foregoing method, that neither the UE 2 nor the UE 3 is allowed to share the first COT, or the UE 1 indicates that one of the UE 2 and the UE 3 is allowed to share the first COT, for example, indicates that a UE with a smaller priority value or a higher priority level in the UE 2 and the UE 3 is allowed to share the first COT.

It can be learned that when the reserved resources of the UE 2 and the UE 3 within the first COT overlap, the foregoing method cannot be used to simultaneously indicate the UE 2 and the UE 3 to share the first COT. In view of this, this application provides a method, to resolve the foregoing problem.

In the method, when indicating the UE 2 and the UE 3 to share the first COT, the UE 1 may offset the reserved resource of the UE 2 or the UE 3 within the first COT in time domain and/or frequency domain, to ensure that resources shared by the UE 2 and the UE 3 within the first COT do not overlap. In this way, the UE 1 may simultaneously indicate the UE 2 and the UE 3 to share the first COT, and no conflict occurs on the shared resources. It should be noted that, the UE 1 indicates the UE 3 in a same manner as the UE 2. The following still uses the UE 2 as an example for description. Therefore, based on the foregoing method, the cyclic shift of the PSFCH in the method may further indicate time domain offset information and/or frequency domain offset information of the UE 2, and the time domain offset information and/or the frequency domain offset information indicate/indicates a time domain offset and/or a frequency domain offset of a resource shared by the UE 2 within the first COT relative to the reserved resource of the UE 2 within the first COT.

Optionally, the time domain offset information and/or the frequency domain offset information include/includes the time domain offset of the resource shared by the UE 2 within the first COT relative to the reserved resource of the UE 2 within the first COT.

Optionally, the time domain offset information and/or the frequency domain offset information include/includes the frequency domain offset of the resource shared by the UE 2 within the first COT relative to the reserved resource of the UE 2 within the first COT.

Optionally, the time domain offset information and/or the frequency domain offset information include/includes the time domain offset and the frequency domain offset of the resource shared by the UE 2 within the first COT relative to the reserved resource of the UE 2 within the first COT.

The following provides several specific implementations. It should be understood that, in the following implementations, how the UE 2 determines that the PSFCH is sent to the UE 2 is not described in detail. For a specific method, refer to the foregoing descriptions in Method 1 to Method 4. The following mainly describes how the UE 1 indicates the time domain offset information and/or the frequency domain offset information to the UE 2 by using the cyclic shift associated with the PSFCH.

Implementation 1:

The UE 1 determines a cyclic shift m associated with the PSFCH, where the cyclic shift m is equal to a sum of a first cyclic shift m1 and a second cyclic shift m2, the first cyclic shift m1 indicates whether the UE 2 is allowed to share the first COT, and the second cyclic shift m2 indicates the time domain offset information and/or the frequency domain offset information.

Optionally, m1= i $\times$ $\Delta$, where i indicates whether the UE 2 is allowed to share the first COT, i={0, 1}, and $\Delta$ is an integer, and may be a constant, a pre-configured value, or a value configured by a network. For example, $\Delta$ =6.

Optionally, m2= j $\times$ $\Delta$, where j indicates the time domain offset information and/or the frequency domain offset information, j={0, 1, 2, 3, 4, 5}, and $\Delta$ is an integer, and may be a constant, a pre-configured value, or a value configured by the network. For example, $\Delta$=1. It should be noted that, in this embodiment, the cyclic shift m uniquely corresponds to one first cyclic shift m1 and one second cyclic shift m2, that is, m1 and m2 corresponding to one m value are determined.

Optionally, the time domain offset information and/or the frequency domain offset information include/includes at least one of the following information: a forward offset by A slots in time domain relative to the reserved resource (that is, an offset by A slots to a smaller slot index value), a backward offset by B slots in time domain relative to the reserved resource (that is, an offset by B slots to a larger slot index value), an upward offset by C interlaces in frequency domain relative to the reserved resource (that is, an offset by C interlaces to a larger interlace index value), and an downward offset by D interlaces in frequency domain relative to the reserved resource (that is, an offset by D interlaces to a smaller interlace index value). A, B, C, and D are integers.

For example, the cyclic shift m (0 to 11) associated with the PSFCH may be divided into two groups. Details are as follows:

Example 1:

m1=0 indicates that sharing of the first COT is allowed, and m1=6 indicates that sharing of the first COT is not allowed. It should be noted that, in actual application, vice versa, that is, m1=0 indicates that sharing of the first COT is not allowed, and m1=6 indicates that sharing of the first COT is allowed. In the following example, an example in which m1=0 indicates that sharing of the first COT is allowed, and m1=6 indicates that sharing of the first COT is not allowed is used for description.

m2=0, 1, 2, 3, 4, 5 separately indicates the time domain offset information and/or the frequency domain offset information.

When m1=0 and m2=0, 1, 2, 3, 4, 5, there is m=m1+m2={0, 1, 2, 3, 4, 5}, where m1=0 indicates that sharing of the first COT is allowed, and m2 indicates the time domain offset information and/or the frequency domain offset information.

When m1=6 and m2=0, 1, 2, 3, 4, 5, there is m=m1+m2={6, 7, 8, 9, 10, 11}, and m1=6 indicates that sharing of the first COT is not allowed.

For example, time-frequency domain offset values corresponding to m2 may be shown in Table 6, Table 7, or Table 8. For example, m2=5 indicates that the resource shared by the UE 2 within the first COT is backward offset by two slots in time domain relative to the reserved resource of the UE 2 within the first COT, and is downward offset by one interlace in frequency domain.

**Table 6**

| m2 | 0 | 1 | 2 | 3 | 4 | 5 |
|---|---|---|---|---|---|---|
| Offset information | Time domain offset 0 and frequency domain offset 0 | Time domain offset 0 and frequency domain offset 1 | Time domain offset 1 and frequency domain offset 0 | Time domain offset 1 and frequency domain offset 1 | Time domain offset 2 and frequency domain offset 0 | Time domain offset 2 and frequency domain offset 1 |

**Table 7**

| m2 | 0 | 1 | 2 | 3 | 4 | 5 |
|---|---|---|---|---|---|---|
| Offset information | Frequency domain offset 0 | Frequency domain offset 1 | Frequency domain offset 2 | Frequency domain offset 3 | Frequency domain offset 4 | Frequency domain offset 5 |

**Table 8**

| m2 | 0 | 1 | 2 | 3 | 4 | 5 |
|---|---|---|---|---|---|---|
| Offset information | Time domain offset 0 | Time domain offset 1 | Time domain offset 2 | Time domain offset 3 | Time domain offset 4 | Time domain offset 5 |

Optionally, the time domain offset information and/or the frequency domain offset information indicated by m2 is pre-configured or configured by the network. Table 9 to Table 11 show offset information corresponding to different frequency domain offset values. Table 12 to Table 15 show offset information corresponding to different time domain offset values. The frequency domain offset in Table 9 is an upward offset and a downward offset, the frequency domain offset in Table 10 is only a downward offset, and the frequency domain offset in Table 11 is only an upward offset. The time domain offset in Table 12 is a leftward offset and a rightward offset, the time domain offset in Table 13 is only a leftward offset, and the time domain offset in Table 14 is only a rightward offset. For example, m2 is shown in Table 6, and the time domain offset information in m2 may be determined by querying Table 9. The frequency domain offset information in m2 may be determined by querying Table 12. The frequency domain upward offset is an offset in a direction with a larger interlace index or a larger subchannel index. The frequency domain downward offset is an offset in a direction with a smaller interlace index or a smaller subchannel index. The time domain leftward offset is an offset in a direction with a smaller slot index. The time domain rightward offset is an offset in a direction with a larger slot index.

**Table 9**

| Frequency domain offset 0 | Frequency domain offset 1 | Frequency domain offset 2 | Frequency domain offset 3 |
|---|---|---|---|
| Upward offset by one interlace in frequency domain relative to a reserved resource | No offset in frequency domain relative to the reserved resource | Downward offset by one interlace in frequency domain relative to the reserved resource | Downward offset by two interlaces in frequency domain relative to the reserved resource |

**Table 10**

| Frequency domain offset 0 | Frequency domain offset 1 | Frequency domain offset 2 | Frequency domain offset 3 |
|---|---|---|---|
| No offset in frequency domain relative to the reserved resource | Downward offset by one interlace in frequency domain relative to the reserved resource | Downward offset by two interlaces in frequency domain relative to the reserved resource | Downward offset by three interlaces in frequency domain relative to the reserved resource |

**Table 11**

| Frequency domain offset 0 | Frequency domain offset 1 | Frequency domain offset 2 | Frequency domain offset 3 |
|---|---|---|---|
| No offset in frequency domain relative to the reserved resource | Upward offset by one interlace in frequency domain relative to a reserved resource | Upward offset by two interlaces in frequency domain relative to a reserved resource | Upward offset by three interlaces in frequency domain relative to a reserved resource |

**Table 12**

| Time domain offset 0 | Time domain offset 1 | Time domain offset 2 | Time domain offset 3 |
|---|---|---|---|
| Leftward offset by one slot in time domain relative to a reserved resource | No offset in time domain relative to the reserved resource | Rightward offset by one slot in time domain relative to the reserved resource | Rightward offset by two slots in time domain relative to the reserved resource |

**Table 13**

| Time domain offset 0 | Time domain offset 1 | Time domain offset 2 | Time domain offset 3 |
|---|---|---|---|
| No offset in time domain relative to the reserved resource | Leftward offset by one slot in time domain relative to a reserved resource | Leftward offset by two slots in time domain relative to a reserved resource | Leftward offset by three slots in time domain relative to a reserved resource |

**Table 14**

| Time domain offset 0 | Time domain offset 1 | Time domain offset 2 | Time domain offset 3 |
|---|---|---|---|
| No offset in time domain relative to the reserved resource | Rightward offset by one slot in time domain relative to the reserved resource | Rightward offset by two slots in time domain relative to the reserved resource | Rightward offset by three slots in time domain relative to the reserved resource |

In this way, in this implementation, the UE 1 may determine, based on whether sharing by the UE 2 is allowed and the time-frequency offset information of the UE 2, the cyclic shift m associated with the PSFCH. Correspondingly, the UE 2 receives the PSFCH on the first resource, or may determine m1 and m2 based on the cyclic shift m associated with the PSFCH, determine, based on m1, whether the UE 2 is allowed to share the first COT, and if the UE 2 is allowed to share the first COT, determine, based on m2, that the resource shared by the UE 2 within the first COT is a resource that falls within the first COT after the reserved resource of the UE 2 is offset in time domain and/or frequency domain based on m2.

Example 2:

m1=0 or 6 separately indicates that sharing of the first COT is allowed and whether there is an offset in time domain and/or frequency domain.

m2=0, 1, 2, 3, 4, 5 separately indicates the time domain offset information and/or the frequency domain offset information.

When m1=0 and m2=0, 1, 2, 3, 4, 5, there is m=m1+m2={0, 1, 2, 3, 4, 5}, and m1 indicates that sharing is allowed and there is no offset.

When m1=6 and m2=0, 1, 2, 3, 4, 5, there is m=m1+m2={6, 7, 8, 9, 10, 11}, m1 indicates that sharing is allowed, and m2 indicates the time domain offset information and/or the frequency domain offset information.

Implementation 2:

The UE 1 determines a cyclic shift m associated with the PSFCH, where the cyclic shift m indicates whether the UE 2 is allowed to share the first COT, when m indicates that sharing of the first COT is allowed, the cyclic shift m is equal to a sum of a first cyclic shift m1 and a second cyclic shift m2, the first cyclic shift m1 indicates the time interval between the slot of the first reserved resource of the UE 2 and the reference slot, and the second cyclic shift m2 indicates the time domain offset information and/or the frequency domain offset information.

Optionally, m1=i $\times$ $\Delta$, where i indicates a quantity of slots between the slot of the first reserved resource of the UE 2 and the reference slot, i={0, 1}, and $\Delta$ is an integer, and may be a constant, a pre-configured value, or a value configured by a network. For example, $\Delta$ =6.

Optionally, m2= j $\times$ $\Delta$, where j indicate the time domain offset information and/or the frequency domain offset information, j={0, 1, 2, 3, 4, 5}, and $\Delta$ is an integer, and may be a constant, a pre-configured value, or a value configured by the network. For example, $\Delta$ =1.

It should be understood that, in this implementation, the UE 1 determines the first cyclic shift m1 based on the time interval between the slot of the first reserved resource of the UE 2 and the reference slot, that is, the first cyclic shift m1 may indicate that the PSFCH is sent to the UE 2. Correspondingly, the UE 2 may determine, based on m1 and the reference slot, that the PSFCH is sent to the UE 2. For details, refer to the descriptions in Method 4. Details are not described herein again.

For example, the cyclic shift m (0 to 11) associated with the PSFCH may be divided into three groups. Details are as follows:

When m1=0, m2=0, 1, 2, 3, there is m=m1+m2={0, 1, 2, 3}, m indicates that sharing of the first COT is allowed, m1=0 indicates that a quantity of slots between the slot of the first reserved resource of the UE 2 and the reference slot is A (A is an integer, for example, A=1), and m2 indicates the time domain offset information and/or the frequency domain offset information.

When m1=4 and m2=0, 1, 2, 3, there is m=m1+m2={4, 5, 6, 7, 8}, m indicates that sharing of the first COT is allowed, m1=4 indicates that a quantity of slots between the slot of the first reserved resource of the UE 2 and the reference slot is B (B is an integer, for example, B=2), and m2 indicates the time domain offset information and/or the frequency domain offset information.

When m={10, 11}, it indicates that sharing of the first COT is not allowed or there is no sharing relationship.

For example, the time/frequency domain offset information corresponding to m2 may be shown in Table 15, Table 16, or Table 17.

**Table 15**

| m2 | 0 | 1 | 2 | 3 |
|---|---|---|---|---|
| Offset information | Time domain offset 0 and frequency domain offset 0 | Time domain offset 0 and frequency domain offset 1 | Time domain offset 1 and frequency domain offset 0 | Time domain offset 1 and frequency domain offset 1 |

**Table 16**

| m2 | 0 | 1 | 2 | 3 |
|---|---|---|---|---|
| Offset information | Frequency domain offset 0 | Frequency domain offset 1 | Frequency domain offset 2 | Frequency domain offset 3 |

**Table 17**

| m2 | 0 | 1 | 2 | 3 |
|---|---|---|---|---|
| Offset information | Time domain offset 0 | Time domain offset 1 | Time domain offset 2 | Time domain offset 3 |

In this way, after receiving the PSFCH on the first resource, the UE 2 determines m1 and m2 based on the cyclic value m associated with the PSFCH, to determine whether the UE 2 is allowed to share the first COT, and if the UE 2 is allowed to share the first COT, determines, based on m2, that the resource shared by the UE 2 within the first COT is a resource that falls within the first COT after the reserved resource of the UE 2 is offset in time domain and/or frequency domain based on m2.

Implementation 3:

The UE 1 determines a cyclic shift m associated with the PSFCH, where the cyclic shift m is equal to a sum of a first cyclic shift m1 and a second cyclic shift m2, the first cyclic shift m1 indicates a quantity of slots between the slot of the first reserved resource of the UE 2 and the reference slot, and the cyclic shift m2 indicates whether the UE 2 is allowed to share the first COT and the time domain offset information and/or the frequency domain offset information.

Optionally, $m1 = i \times \Delta$, where i indicates a quantity of slots between the slot of the first reserved resource of the UE 2 and the reference slot, i={0, 1}, and $\Delta$ is an integer, and may be a constant, a pre-configured value, or a value configured by a network. For example, $\Delta$=6.

Optionally, $m2 = j \times \Delta$, where j indicates whether the UE 2 is allowed to share the first COT and the time domain offset information and/or the frequency domain offset information, i={0, 1, 2, 3, 4, 5}, and $\Delta$ is an integer, and may be a constant, a pre-configured value, or a value configured by a network. For example, $\Delta$=1.

For example, the cyclic shift m (0 to 11) associated with the PSFCH may be divided into three groups. Details are as follows:

When m1=0 and m2=0, 1, 2, 3, 4, 5, there is m=m1+m2={0, 1, 2, 3, 4, 5}, m1=0 indicates that a quantity of slots between the slot of the first reserved resource of the UE 2 and the reference slot is A (A is an integer, for example, A=1), and m2 indicates whether the UE 2 is allowed to share the first COT and the time domain offset information and/or the frequency domain offset information.

When m1=6 and m2=0, 1, 2, 3, 4, 5, there is m=m1+m2={4, 5, 6, 7, 8}, m1=6 indicates that a quantity of slots between the slot of the first reserved resource of the UE 2 and the reference slot is B (B is an integer, for example, B=2), and m2 indicates whether the UE 2 is allowed to share the first COT and the time domain offset information and/or the frequency domain offset information.

For example, the time/frequency domain offset information corresponding to m2 may be shown in Table 18, Table 19, or Table 20.

**Table 18**

| m2 | 0 | 1 | 2 | 3 | 4 | 5 |
|---|---|---|---|---|---|---|
| Offset information | Not allow sharing of a first COT | Allow sharing of the first COT, time domain offset 0, and frequency domain offset 0 | Allow sharing of the first COT, time domain offset 0, and frequency domain offset 1 | Allow sharing of the first COT, time domain offset 1, and frequency domain offset 0 | Allow sharing of the first COT, time domain offset 1, and frequency domain offset 1 | Allow sharing of the first COT, time domain offset 1, and frequency domain offset 2 |

**Table 19**

| m2 | 0 | 1 | 2 | 3 | 4 | 5 |
|---|---|---|---|---|---|---|
| Offset information | Not allow sharing of a first COT | Allow sharing of the first COT, and frequency domain offset 0 | Allow sharing of the first COT, and frequency domain offset 1 | Allow sharing of the first COT, and frequency domain offset 2 | Allow sharing of the first COT, and frequency domain offset 3 | Allow sharing of the first COT, and frequency domain offset 4 |

**Table 20**

| m2 | 0 | 1 | 2 | 3 | 4 | 5 |
|---|---|---|---|---|---|---|
| Offset information | Not allow sharing of a first COT | Allow sharing of the first COT, and time domain offset 0 | Allow sharing of the first COT, and time domain offset 1 | Allow sharing of the first COT, and time domain offset 2 | Allow sharing of the first COT, and time domain offset 3 | Allow sharing of the first COT, and time domain offset 4 |

In this way, after receiving the PSFCH on the first resource, the UE 2 determines m1 and m2 based on the cyclic value m associated with the PSFCH, and determines, based on the value of m1, whether the first COT sharing information is associated with the time domain resource of the first reserved resource, that is, determines whether the COT sharing information is sent to the UE 2. If the COT sharing information is sent to the UE 2, the UE 2 determines, based on m2, whether the UE 2 is allowed to share the first COT. If the UE 2 is allowed to share the first COT, the resource shared by the UE 2 within the first COT is a resource that falls within the first COT after the reserved resource of the UE 2 is offset in time domain and/or frequency domain based on m2.

Implementation 4:

The UE 1 determines a cyclic shift associated with each RB in an interlace in which the first COT sharing information is located. In this implementation, the UE 1 indicates related information to the UE 2 by using a cyclic shift m associated with an $i^{th}$ RB in the interlace in which the first COT sharing information is located and a difference n (for example, an absolute value is used if the difference is a negative number) between cyclic shifts associated with any two adjacent RBs (for example, two adjacent RBs). i is an integer, for example, i=0, and n is an integer. The difference n between the cyclic shifts of the any two adjacent RBs in the interlace in which the first COT sharing information is located is the same. Optionally, the $i^{th}$ RB may be any RB in the interlace in which the first COT sharing information is located. For example, the difference n between the cyclic shifts associated with the any two RBs is a difference n between cyclic shifts of an $i^{th}$ RB and an $(i+1)^{th}$ RB in the interlace in which the first COT sharing information is located.

It should be understood that two adjacent RBs in the interlace are adjacent in a same interlace, and may not be adjacent actually.

Specifically, the cyclic shift m associated with the $i^{th}$ RB is determined based on a first cyclic shift m1, a second cyclic shift m2, and a third cyclic shift m3.

In a possible method, the first cyclic shift m1 indicates that the second terminal device is allowed or not allowed to share the first COT; the second cyclic shift m2 indicates the time interval between the first reserved resource of the UE 2 and the reference slot; and a difference n between third cyclic shifts m3 of any two adjacent RBs in the interlace in which the first COT sharing information is located indicates the time domain offset information and/or the frequency domain offset information.

It may be understood that "the difference n between the third cyclic shifts m3 of two adjacent RBs" is the same as "the difference n between the cyclic shifts m of two adjacent RBs", and may be replaced with each other.

In another possible method, the first cyclic shift m1 indicates that the second terminal device is allowed or not allowed to share the first COT; the second cyclic shift m2 indicates the time interval between the first reserved resource of the UE 2 and the reference slot; and a difference n between cyclic shifts m of any two adjacent RBs in the interlace in which the first COT sharing information is located indicates the time domain offset information and/or the frequency domain offset information.

In still another possible method, the first cyclic shift m1 indicates that the second terminal device is allowed or not allowed to share the first COT, the second cyclic shift m2 indicates the time domain offset information and/or the frequency domain offset information, and a difference n between third cyclic shifts m3 of any two adjacent RBs in the interlace in which the first COT sharing information is located indicates the time interval between the first reserved resource and the reference slot.

In still another possible method, the first cyclic shift m1 indicates that the second terminal device is allowed or not allowed to share the first COT, the second cyclic shift m2 indicates the time domain offset information and/or the frequency domain offset information, and a difference n between cyclic shifts m of any two adjacent RBs in the interlace in which the first COT sharing information is located indicates the time interval between the first reserved resource and the reference slot.

For example, the UE 1 indicates related information to the UE 2 by using a cyclic shift m associated with a $1^{st}$ RB in the interlace in which the first COT sharing information is located and the difference n between the cyclic shifts associated with the any two RBs. It may be further understood that the UE 1 indicates related information to the UE 2 by using cyclic shifts m associated with at least two RBs in the interlace in which the first COT sharing information is located.

Example 1:

The first cyclic shift m1 indicates that the UE 2 is allowed or not allowed to share the first COT; the second cyclic shift m2 indicates the time interval between the first reserved resource of the UE 2 and the reference slot; and the difference n between the third cyclic shifts m3 of the any two adjacent RBs in the interlace in which the first COT sharing information is located indicates the time domain offset information and/or the frequency domain offset information.

Optionally, $m1 = i \times \Delta$, where i indicates that the second terminal device is allowed or not allowed to share the first COT, i=10, 1}, and $\Delta$ is an integer, and may be a constant, a pre-configured value, or a value configured by a network. For example, $\Delta = 6$.

Optionally, $m2 = j \times \Delta$, where j indicates the time interval between the first reserved resource of the UE 2 and the reference slot, j={0, 1, 2, 3, 4, 5}, and $\Delta$ is an integer, and may be a constant, a pre-configured value, or a value configured by the network. For example, $\Delta = 1$.

Optionally, $m3 = k \times \Delta$, where k indicates the time domain offset information and/or the frequency domain offset information, or k={0, 1, 2, 3, 4, 5}, and $\Delta$ is an integer, and may be a constant, a pre-configured value, or a value configured by the network. For example, $\Delta = 3$.

Optionally, $n = k \times \Delta$, where k indicates the time domain offset information and/or the frequency domain offset information, k={0, 1, 2, 3, 4, 5}, and $\Delta$ is an integer, and may be a constant, a pre-configured value, or a value configured by the network. For example, $\Delta = 3$.

For example, the UE 1 determines that the interlace in which the first COT sharing information is located includes a plurality of RBs, and cyclic shifts associated with the plurality of RBs are respectively {2, 5, 8, 11, 2, 5, 8, 11, ...}. A cyclic shift associated with a $1^{st}$ RB in the interlace in which the first COT sharing information is located is 2, a cyclic shift associated with a $2^{nd}$ RB in the interlace in which the first COT sharing information is located is 5, and by analogy, a cyclic shift m3 associated with two adjacent RBs in the interlace in which the first COT sharing information is located is 3. Details are not described herein again. For information indicated by m, refer to the following descriptions.

For a cyclic shift $m_i$ associated with the $i^{th}$ RB,

when $m1_i=0$ and $m2_i=0, 1, 2, 3, 4, 5$, $m3_i=0$, and there is $m_i=m1_i+m2_i+m3_i=\{0, 1, 2, 3, 4, 5\}$, where $m1_i=0$ indicates that sharing of the first COT is allowed, and $m2_i$ indicates the interval between the first reserved resource of the UE 2 and the reference slot; when $m1_i=6$ and $m2_i=0, 1, 2, 3, 4, 5$, $m3_i=0$, there is $m_i=m1_i+m2_i+m3_i=\{6, 7, 8, 9, 10, 11\}$, $m1_i=6$ indicates that sharing of the first COT is not allowed, and $m2_i$ indicates the interval between the first reserved resource of the UE 2 and the reference slot.

For example, the cyclic shift $m_i=2$ is associated with the $i^{th}$ RB, where $m1_i=0, m2_i=2, m3_i=0, m1_i=0$ indicates that sharing of the first COT is allowed, $m2_i=2$ indicates that the interval between the first reserved resource of the UE 2 and the reference slot is 2, and $m3_i=0$ is used to calculate a difference n between two RBs with m3 of adjacent RBs.

For a cyclic shift $m_{i+1}$ associated with the $(i+1)^{th}$ RB, when $m1_{i+1}=0$ and $m2_{i+1}=0, 1, 2, 3, 4, 5$, $m3_{i+1}=3$, and there is $m_{i+1}=m1_{i+1}+m2_{i+1}+m3_{i+1}=\{0, 1, 2, 3, 4, 5\}$, where $m1_{i+1}=0$ indicates that sharing of the first COT is allowed, and $m2_{i+1}$ indicates the interval between the first reserved resource of the UE 2 and the reference slot, when $m1_{i+1}=6$ and $m2_{i+1}=0, 1, 2, 3, 4, 5$, $m3_{i+1}=3$, and there is $m=m1_{i+1}+m2_{i+1}+m3_{i+1}=\{6, 7, 8, 9, 10, 11\}$, where m1=6 indicates that sharing of the first COT is not allowed, and $m2_{i+1}$ indicates the interval between the first reserved resource of the UE 2 and the reference slot.

For example, the cyclic shift $m_{i+1}=5$ is associated with the $(i+1)^{th}$ RB, where $m1_{i+1}=0$, $m2_{i+1}=2$, and $m3_{i+1}=3$. $m1_{i+1}=0$ indicates that sharing of the first COT is allowed, $m2=2$ indicates that the interval between the first reserved resource of the UE 2 and the reference slot is 2, and $m3_{i+1}=3$ is used to calculate a difference n between two RBs with m3 of adjacent RBs.

In this case, the difference between the third cyclic shifts of the $i^{th}$ RB and the $(i+1)^{th}$ RB in the interlace in which the first COT sharing information is located is $n=m_{i+1}-m_i=3$ or $n=m3_{i+1}-m3_i=3$, where n=3 indicates the time domain offset information and/or the frequency domain offset information.

For example, whether sharing of the first COT is allowed corresponding to m1 may be shown in Table 21.

**Table 21**

| m1 | 0 | 6 |
|---|---|---|
| Whether sharing of a first COT is allowed | Allowed | Not allowed |

For example, the interval between the first reserved resource and the reference slot corresponding to m2 may be shown in Table 22.

**Table 22**

| m2 | 0 | 1 | 2 | 3 | 4 | 5 |
|---|---|---|---|---|---|---|
| Interval between a first reserved resource and a reference slot | 0 slots | One slot | Two slots | Three slots | Four slots | Fifth slots |

For example, a time/frequency domain offset value corresponding to n may be shown in Table 23, Table 24, or Table 25.

**Table 23**

| n | 0 | 1 | 2 | 3 | 4 | 5 |
|---|---|---|---|---|---|---|
| Offset information | Time domain offset 0 and frequency domain offset 0 | Time domain offset 0 and frequency domain offset 1 | Time domain offset 1 and frequency domain offset 0 | Time domain offset 1 and frequency domain offset 1 | Time domain offset 2 and frequency domain offset 0 | Time domain offset 2 and frequency domain offset 1 |

**Table 24**

| n | 0 | 1 | 2 | 3 | 4 | 5 |
|---|---|---|---|---|---|---|
| Offset information | Frequency domain offset 0 | Frequency domain offset 1 | Frequency domain offset 2 | Frequency domain offset 3 | Frequency domain offset 4 | Frequency domain offset 5 |

**Table 25**

| n | 0 | 1 | 2 | 3 | 4 | 5 |
|---|---|---|---|---|---|---|
| Offset information | Time domain offset 0 | Time domain offset 1 | Time domain offset 2 | Time domain offset 3 | Time domain offset 4 | Time domain offset 5 |

In this case, after receiving the PSFCH on the first resource, the UE 2 determines m1, m2, and m3 based on the cycle value m associated with the PSFCH, and determines, based on the value of m2, whether the COT sharing information is associated with the time domain resource of the first reserved resource, that is, determines whether the COT sharing information is sent to the UE 2. If the COT sharing information is sent to the UE 2, the UE 2 determines, based on m1, that the UE 2 is allowed to share the first COT. It is determined, based on the difference 3 between cyclic shifts associated with any two RBs in the interlace in which the first COT sharing information is located, that the resource shared by the UE 2 within the first COT is backward offset by one slot in time domain and is downward offset by one interlace in frequency domain relative to the reserved resource of the UE 2 within the first COT.

Example 2:

The first cyclic shift m1 indicates that the second terminal device is allowed or not allowed to share the first COT, the second cyclic shift m2 indicates the time domain offset information and/or the frequency domain offset information, and the difference n between the third cyclic shifts m3 of the any two adjacent RBs in the interlace in which the first COT sharing information is located indicates the time interval between the first reserved resource and the reference slot.

Optionally, $m1 = i \times \Delta$, where i indicates that the second terminal device is allowed or not allowed to share the first COT, i={0, 1}, and $\Delta$ is an integer, and may be a constant, a pre-configured value, or a value configured by a network. For example, $\Delta=6$.

Optionally, $m2 = j \times \Delta$, where j indicates the time domain offset information and/or the frequency domain offset information, j={0, 1, 2, 3, 4, 5}, and $\Delta$ is an integer, and may be a constant, a pre-configured value, or a value configured by the network. For example, $\Delta=1$.

Optionally, $m3 = k \times \Delta$, where k indicates the time interval between the first reserved resource and the reference slot, or k={0, 1, 2, 3, 4, 5}, and $\Delta$ is an integer, and may be a constant, a pre-configured value, or a value configured by the network. For example, $\Delta=3$.

Optionally, $n = k \times \Delta$, where k indicates the time interval between the first reserved resource and the reference slot, k={0, 1, 2, 3, 4, 5}, and $\Delta$ is an integer, and may be a constant, a pre-configured value, or a value configured by the network. For example, $\Delta=3$. For example, the UE 1 determines that the interlace in which the first COT sharing information is located includes a plurality of BRs, and cyclic shifts associated with the plurality of RBs are respectively {2, 5, 8, 11, 2, 5, 8, 11, ...}. A cyclic shift m associated with a 1st RB in the interlace in which the first COT sharing information is located is 2, a cyclic shift associated with a 2nd RB in the interlace in which the first COT sharing information is located is 5, and by analogy, a cyclic shift m3 associated with two adjacent RBs in the interlace in which the first COT sharing information is located is 3. Details are not described herein again. For information indicated by m, refer to the following descriptions.

For a cyclic shift $m_i$ associated with the $i^{th}$ RB,

when $m1_i=0$ and $m2_i=0, 1, 2, 3, 4, 5$, $m3_i=0$, and there is $m=m1+m2+m3=\{0, 1, 2, 3, 4, 5\}$, where there is $m_i=m1_i+m2_i+m3_i=\{0, 1, 2, 3, 4, 5\}$, $m1_i=0$ indicates that sharing of the first COT is allowed, and $m2_i$ indicates the time domain offset information and/or the frequency domain offset information;

when $m1_i=6$ and $m2_i=0, 1, 2, 3, 4, 5$, $m3_i=0$, and there is $m_i=m1_i+m2_i+m3_i=\{6, 7, 8, 9, 10, 11\}$, where $m1_i=6$ indicates that sharing of the first COT is not allowed, and $m2_i$ indicates the time domain offset information and/or the frequency domain offset information.

For example, the cyclic shift $m_i=2$ is associated with the $i^{th}$ RB, where $m1_i=0$, $m2_i=2$, and $m3_i=0$. $m1_{i+1}=0$ indicates that sharing of the first COT is allowed, $m2_{i+1}$ indicates the time domain offset information and/or the frequency domain offset information of the UE 2, and $m3_i=0$ is used to calculate a difference n between two RBs with m3 of adjacent RBs.

For the cyclic shift $m_{i+1}$ associated with the $(i+1)^{th}$ RB,

when $m1_{i+1}=0$ and $m2_{i+1}=0, 1, 2, 3, 4, 5$, $m3_{i+1}=3$, and there is $m_{i+1}=m1_{i+1}+m2_{i+1}+m3_{i+1}=\{0, 1, 2, 3, 4, 5\}$, where $m1_{i+1}=0$ indicates that sharing of the first COT is allowed, and $m2_{i+1}$ indicates the interval between the first reserved resource of the UE 2 and the reference slot;

when $m1_{i+1}=6$ and $m2_{i+1}=0, 1, 2, 3, 4, 5$, $m3_{i+1}=3$, and there is $m_{i+1}=m1_{i+1}+m2_{i+1}+m3_{i+1}=\{6, 7, 8, 9, 10, 11\}$, where $m1_{i+1}=6$ indicates that sharing of the first COT is not allowed, and m2 indicates the time domain offset information and/or the frequency domain offset information of the UE 2.

For example, the cyclic shift $m_{i+1}=5$ is associated with the $(i+1)^{th}$ RB, where $m1_{i+1}=0$, $m2_{i+1}=2$, and $m3_{i+1}=3$. $m1_{i+1}=0$ indicates that sharing of the first COT is allowed, $m2_{i+1}=2$ indicates the time domain offset information and/or the frequency domain offset information indicated by the UE 2, and $m3_{i+1}=3$ is used to calculate a difference n between two RBs with m3 of adjacent RBs.

The difference between the cyclic shifts of the $i^{th}$ RB and the $(i+1)^{th}$ RB in the interlace in which the first COT sharing information is located is $n=m_{i+1}-m_i=3$ or $n=m3_{i+1}-m3_i=3$, and indicates that the interval between the first reserved resource of the UE 2 and the reference slot is 3.

For example, whether sharing of the first COT is allowed corresponding to m1 may be shown in Table 26.

**Table 26**

| m1 | 0 | 6 |
|---|---|---|
| Whether sharing of a first COT is allowed | Allowed | Not allowed |

For example, a time/frequency domain offset value corresponding to m2 may be shown in Table 27, Table 28, or Table 29.

**Table 27**

| m2 | 0 | 1 | 2 | 3 | 4 | 5 |
|---|---|---|---|---|---|---|
| Offset information | Time domain offset 0 and frequency domain offset 0 | Time domain offset 0 and frequency domain offset 1 | Time domain offset 1 and frequency domain offset 0 | Time domain offset 1 and frequency domain offset 1 | Time domain offset 2 and frequency domain offset 0 | Time domain offset 2 and frequency domain offset 1 |

**Table 28**

| m2 | 0 | 1 | 2 | 3 | 4 | 5 |
|---|---|---|---|---|---|---|
| Offset information | Frequency domain offset 0 | Frequency domain offset 1 | Frequency domain offset 2 | Frequency domain offset 3 | Frequency domain offset 4 | Frequency domain offset 5 |

**Table 29**

| m2 | 0 | 1 | 2 | 3 | 4 | 5 |
|---|---|---|---|---|---|---|
| Offset information | Time domain offset 0 | Time domain offset 1 | Time domain offset 2 | Time domain offset 3 | Time domain offset 4 | Time domain offset 5 |

For example, the interval between the first reserved resource and the reference slot corresponding to n may be shown in Table 30.

**Table 30**

| n | 0 | 1 | 2 | 3 | 4 | 5 |
|---|---|---|---|---|---|---|
| Interval between a first reserved resource and a reference slot | 0 slots | One slot | Two slots | Three slots | Four slots | Fifth slots |

In this case, after receiving the PSFCH on the first resource, the UE 2 determines m1, m2, and m3 based on the cycle value m associated with the PSFCH, and determines, based on a difference between cyclic shifts associated with any two RBs, whether the COT sharing information is associated with the time domain resource of the first reserved resource, that is, determines whether the COT sharing information is sent to the UE 2. If the COT sharing information is sent to the UE 2, the UE 2 determines, based on m1, that the UE 2 is allowed to share the first COT, and then determines, based on m2=2, that the resource shared by the UE 2 within the first COT is offset backward by one slot in time domain, and is not offset in frequency domain relative to the reserved resource of the UE 2 within the first COT.

Implementation 4:

The UE 1 determines a cyclic shift associated with each RB in an interlace in which the first COT sharing information is located. In this implementation, the UE 1 indicates related information to the UE 2 by using a cyclic shift m associated with an $i^{th}$ RB in the interlace in which the first COT sharing information is located and a difference n (an absolute value is used if the difference is a negative number) between cyclic shifts associated with any two RBs, and a difference between cyclic shifts of any two adjacent RBs in the interlace in which the first COT sharing information is located is the same. Optionally, the $i^{th}$ RB may be any RB in the interlace in which the first COT sharing information is located.

Optionally, the cyclic shift m associated with the $i^{th}$ RB is determined based on a first cyclic shift m1 and a second cyclic shift m2, where the first cyclic shift m1 indicates that the second terminal device is allowed or not allowed to share the first COT, the second cyclic shift m2 indicates the time interval between the first reserved resource of the UE 2 and the reference slot, the third cyclic shift n is the difference between the cyclic shifts of the any two adjacent RBs in the interlace in which the first COT sharing information is located, the third cyclic shift n indicates the time domain offset information and/or the frequency domain offset information.

Optionally, $m1 = i \times \Delta$, where i indicates that the second terminal device is allowed or not allowed to share the first COT, $i=\{0, 1\}$, and $\Delta$ is an integer, and may be a constant, a pre-configured value, or a value configured by a network. For example, $\Delta=6$.

Optionally, $m2 = j \times \Delta$, where j indicates the time interval between the first reserved resource and the reference slot, $j=\{0, 1, 2, 3, 4, 5\}$, and $\Delta$ is an integer, and may be a constant, a pre-configured value, or a value configured by the network. For example, $\Delta=1$.

Optionally, $n = k \times \Delta$, where k indicates the time domain offset information and/or the frequency domain offset information, or $k=\{0, 1, 2, 3, 4, 5\}$, and $\Delta$ is an integer, and may be a constant, a pre-configured value, or a value configured by the network. For example, $\Delta=3$.

Optionally, the cyclic shift m associated with the $i^{th}$ RB is determined based on the first cyclic shift m1 and the second cyclic shift m2, where the first cyclic shift m1 indicates that the second terminal device is allowed or not allowed to share the first COT, the second cyclic shift m2 indicates the time domain offset information and/or the frequency domain offset information and the difference between the cyclic shifts of the any two adjacent RBs in the interlace in which the first COT sharing information is located, and the third cyclic shift n is the time interval between the first reserved resource of the UE 2 and the reference slot.

Optionally, $m1 = i \times \Delta$, where i indicates that the second terminal device is allowed or not allowed to share the first COT, $i=\{0, 1\}$, and $\Delta$ is an integer, and may be a constant, a pre-configured value, or a value configured by a network. For example, $\Delta=6$.

Optionally, $m2 = j \times \Delta$, where j indicates the time domain offset information and/or the frequency domain offset information, $j=\{0, 1, 2, 3, 4, 5\}$, and $\Delta$ is an integer, and may be a constant, a pre-configured value, or a value configured by the network. For example, $\Delta=1$.

Optionally, $n = k \times \Delta$, where k indicates the time interval between the first reserved resource and the reference slot, or $k=\{0, 1, 2, 3, 4, 5\}$, and $\Delta$ is an integer, and may be a constant, a pre-configured value, or a value configured by the network. For example, $\Delta=3$.

For example, the UE 1 indicates related information to the UE 2 by using a cyclic shift m associated with a $1^{st}$ RB in the interlace in which the first COT sharing information is located and the difference n between the cyclic shifts associated with the any two RBs. The UE 1 determines that the cyclic shift associated with the RB in the interlace in which the first COT sharing information is located is $\{2, 5, 8, 11, ...\}$, where a cyclic shift m associated with a $1^{st}$ RB in the interlace in which the first COT sharing information is located is 2, a cyclic shift associated with a $2^{nd}$ RB in the interlace in which the first COT sharing information is located is 5, and by analogy, a cyclic shift n associated with two adjacent RBs in the interlace in which the first COT sharing information is located is 3. Details are not described herein again. For information indicated by m and n, refer to the following descriptions.

When m1=0 and m2=0, 1, 2, 3, 4, 5, there is m=m1+m2={0, 1, 2, 3, 4, 5}, where m1 indicates that sharing of the first COT is allowed, m2 indicates the interval between the first reserved resource of the UE 2 and the reference slot, and n indicates the time domain offset information and/or the frequency domain offset information

When m1=6 and m2=0, 1, 2, 3, 4, 5, there is m=m1+m2={6, 7, 8, 9, 10, 11}, and m1 indicates that sharing of the first COT is not allowed.

For example, a time/frequency domain offset value corresponding to n may be shown in Table 31.

**Table 31**

| n | 0 | 1 | 2 | 3 | 4 | 5 |
|---|---|---|---|---|---|---|
| Offset information | Time domain 0 and frequency domain 0 | Time domain 0 and frequency domain 1 | Time domain 1 and frequency domain 0 | Time domain 1 and frequency domain 1 | Time domain 2 and frequency domain 0 | Time domain 2 and frequency domain 1 |

How the UE 2 parses the PSFCH after receiving the PSFCH is not described herein.

In the foregoing technical solution, when the reserved resources of the UE 2 and the UE 3 overlap within the first COT, the UE 1 indicates the time domain offset information or the frequency domain offset information to ensure that the resources actually shared by the UE 2 and the UE 3 within the first COT do not overlap, so that the UE 2 and the UE 3 can simultaneously share the first COT of the UE 1. From a perspective of a single UE, reliability of the UE 2 and the UE 3 is ensured. Both the UE 2 and the UE 3 can access a channel as soon as possible, so that the UE does not execute an LBT procedure again, to reduce a latency of UE information transmission, and improve spectrum utilization from a perspective of a system.

The foregoing describes an indication manner used when the first COT sharing information is carried in the PSFCH. The following describes how the UE 1 indicates the first COT sharing information to the UE 2 when the first COT sharing information is carried in other signaling, for example, at least one of first-stage SCI, second-stage SCI, new second-stage SCI (for example, SCI 2-D), a MAC CE, PC-5 RRC, and RRC.

Optionally, the first COT sharing information includes N pieces of indication information, each of the N pieces of indication information includes identification information of a terminal device and information about a resource shared by the terminal device within the first COT, and N is a positive integer. The following provides several specific implementations.

Implementation 1:

The identification information of the terminal device includes M terminal device identifiers, the information about the resource shared by the terminal device within the first COT indicates a first slot, the first slot is a time unit shared by terminal devices corresponding to the M terminal device identifiers within the first COT, a channel corresponding to the first COT includes L interlaces or subchannels, each piece of indication information indicates that a terminal device corresponding to an $i^{th}$ terminal device identifier in the M terminal device identifiers shares an $i^{th}$ interlace or subchannel in the L interlaces or subchannels, M, L, and i are all positive integers, and M is less than or equal to L.

For example, one piece of indication information included in the first COT sharing information is {first slot, identification information 1 of UE, identification information 2 of UE, identification information 3 of UE, ...}.

Optionally, that the information about the resource shared by the terminal device within the first COT indicates the first slot may be specifically: indicating a slot interval of the first slot relative to the reference slot, or indicating a slot number of the first slot. Optionally, the reference slot may be any one of a $1^{st}$ slot of the first COT, a $1^{st}$ effective slot of the first COT, a slot for sending the first COT sharing information, or a slot indicated by a DFN index and/or a slot index. Optionally, a slot number of the slot is indicated by the DFN index and/or the slot index. Optionally, the slot interval is an integer quantity of slots, for example, {0, 1, 2, 3, 4, 5, 6, 7, 8, 9, 10} slots.

Optionally, the identification information of the UE may be identification information of the UE with the first COT, for example, identification information of the UE 1, or may be identification information of the UE that shares the first COT, for example, identification information of the UE 2. Optionally, the identification information of the UE may be at least one of source identification information of the UE 1 or the UE 2, destination identification information of the UE 1 or the UE 2, device identification information of the UE 1 or the UE 2, or group identification information of the UE 1 or the UE 2. Optionally, the identification information of the UE is carried in first-stage SCI and/or second-stage SCI.

Optionally, the identification information of the UE includes Q bits, and a value of Q is an integer predefined, pre-configured, or configured by the network.

Optionally, in this implementation, a value may be further predefined. The predefined value indicates that the COT is not shared or indicates that the COT is used for transmission of the UE 1. The predefined value includes Q bits, and values of the Q bits are all 0s or all 1s; or the predefined value is P bits (P is less than or equal to Q), and values of P are all 0s or all 1s.

The following uses an example to describe Implementation 1.

Example 1:

The first COT sharing information includes slot information "3" and identification information of the UE " SID2, SID2, SID3, X", that is, the first COT sharing information is {3, SID2, SID2, SID3, X}, where 3 indicates that a shared slot is a $3^{rd}$ slot after a $1^{st}$ slot within the first COT; SID2 is source identification information of the UE 2, and SID3 is source identification information of the UE 3. Specifically, the frequency domain resource within the first COT includes four interlaces. In this case, the UE 1 indicates, by using {3, SID2, SID2, SID3, X}, that a $4^{th}$ slot within the first COT is shared with the UE 2 and the UE 3 for transmission, the UE 2 is enabled to share the first COT in interlaces whose indexes are 0 and 1, and the UE 3 is enabled to share the first COT in an interlace whose index is 2. X is a predefined value. For example, X is all 0s of Q bits, or X is P, where X indicates that an interlace 4 is not shared.

Example 2:

The UE 1 indicates, by using {6, SID1, SID1, SID1, SID1} or {6, Y}, that a $6^{th}$ slot within the first COT is used for transmission of the UE 1, or that a channel in a $6^{th}$ slot within the first COT is used for transmission of the UE 1, or that a $6^{th}$ slot within the first COT is not used for COT sharing, or that a channel in a $6^{th}$ slot within the first COT is not used for COT sharing. Y is a predefined value. For example, Y is all 1s of Q bits.

Implementation 2:

The first COT sharing information includes identification information of the UE and resource indication information. The resource indication information may be information about a transmission time-frequency resource (that is, a transmission resource shared within the first COT) of the UE corresponding to the identification information of the UE within the first COT, or may be information about whether the UE is enabled to share the first COT. For description of the identification information of the UE, refer to the descriptions in Implementation 2. Details are not described herein again.

Optionally, the first COT sharing information includes R combinations, and each combination includes identification information of one UE and one piece of resource indication information.

Optionally, the UE 1 indicates a time domain resource and a frequency domain resource for transmission of the UE within the first COT by using {identification information of the UE, information about a time domain resource, information about a frequency domain resource}. Optionally, the information about the time domain resource is indicated by using a TRIV Optionally, the information about the frequency domain resource is indicated by using an FRIV. Optionally, the frequency domain resource is a frequency domain resource in an interlace manner or a frequency domain resource in a channel form. For example, the UE 1 indicates a time domain resource and a frequency domain resource for transmission of the UE 2 within the first COT by using {SID2, TRIV, FRIV}.

Optionally, the UE 1 indicates, by using {identification information of the UE, enable}, the UE to perform transmission within the first COT based on a time-frequency location of a reserved resource of the UE. For example, the UE 1 indicates, by using {SID2, enable}, the UE 2 to perform transmission within the first COT based on a time-frequency location indicated by reservation information of the UE 2.

Optionally, the UE 1 indicates a resource for transmission of the UE within the first COT by using {identification information of the UE, a bitmap (bitmap)}. For example, the UE 1 indicates a resource for transmission of the UE 2 within the first COT by using {SID2, bitmap}.

In the foregoing technical solution, because a quantity of bits that carry the first COT sharing information is greater than that of the PSFCH, the sharing information can be directly and more accurately indicated.

Similar to the PSFCH indicating offset information, in this embodiment, the UE 1 may also indicate the time domain offset information and/or the frequency domain offset information in the first COT sharing information.

In a specific implementation, the first COT sharing information includes time-frequency offset information, and the time-frequency offset information indicates the UE 2 to share a first transmission resource within the first COT based on the reserved resource of the UE 2 and the time-frequency offset information. Correspondingly, the UE 2 may determine the first transmission resource based on the reservation information of the UE 2 and the time domain offset information and/or frequency domain offset information indicated by the UE 1. The first transmission resource is a resource that falls within the first COT after the reserved resource of the UE 2 is offset in time domain and/or frequency domain based on the time-frequency offset information, and the UE 2 shares the first transmission resource.

Optionally, the time-frequency offset information includes a time-frequency offset direction and a time-frequency offset value. For example, two bits indicate the time-frequency offset direction. For example, 00 indicates a frequency domain upward offset, 01 indicates a frequency domain downward offset, 10 indicates a time domain leftward offset, and 11 indicates a time domain rightward offset. For example, N bits indicate a quantity of interlaces that are downward or upward offset in frequency domain. For example, when there are U interlaces in a channel, $N = \left\lfloor log_2^U \right\rfloor$. For example, M bits indicate a quantity of slots that are offset leftward or rightward in time domain. For example, the first COT has V slots, where V is an integer less than 40, and $M = \left\lfloor log_2^V \right\rfloor$.

Optionally, the time-frequency offset information includes a time domain offset direction and a time domain offset value, or the time-frequency offset information includes a frequency domain offset direction and a frequency domain offset value. For example, the time-frequency offset information includes the frequency domain offset direction and the frequency domain offset value. The UE 1 may use one bit to indicate the frequency domain offset direction. For example, 0 indicates an upward offset, and 1 indicates a downward offset. For example, N bits indicate a quantity of interlaces that are downward or upward offset. For example, when there are U interlaces in a channel, $N = \left\lfloor log_2^U \right\rfloor$.

In the foregoing technical solution, when the reserved resources of the UE 2 and the UE 3 overlap within the first COT, the UE 1 indicates the time domain offset information or the frequency domain offset information, so that both the UE 2 and the UE 3 can perform transmission within the first COT of the UE 1. From a perspective of a single UE, reliability of the UE 2 and the UE 3 is ensured. Both UE 2 and UE 3 can access a channel as soon as possible, to avoid executing an LBT procedure again and reduce a latency. Spectrum utilization is also improved from a perspective of a system.

Optionally, first-stage control information includes a first field, and the first field indicates whether a resource in which the first-stage control information is located carries the first COT sharing information, or whether the first field is present indicates whether a resource in which the first-stage control information is located carries the first COT sharing information. Whether the resource in which the first-stage control information is located carries the first COT sharing information includes whether second-stage SCI, a MAC CE, or a PSFCH in the resource in which the first-stage control information is located carries the first COT sharing information.

Optionally, when the first COT shared information is carried in the second-stage SCI and the MAC CE, the UE 1 uses the first field in the first-stage SCI to indicate the UE 2 to decode the second-stage SCI (for example, second-stage SCI-D), the first COT sharing information carried in the MAC CE, or the first COT sharing information carried in the PSFCH. It should be understood that the first-stage SCI is first-stage SCI carried on the resource in which the first COT sharing information is located, or a PSSCH scheduled by the first-stage SCI carries the first COT sharing information.

For example, the first field occupies 1 bit, and when the first field is 0, it indicates that the second-stage SCI, the MAC CE, or the PSFCH does not carry the first COT sharing information. When the first field is 1, it indicates that the second-stage SCI, the MAC CE, or the PSFCH carries the first COT sharing information. For another example, the first field is present to indicate that the second-stage SCI or the MAC CE carries the first COT sharing information; if the first field is not present to indicate that the second-stage SCI or the MAC CE does not carry the first COT sharing information.

It may be understood that a main reason for using the first field for indication in SCI-1 is that when detecting control information, a receiving UE knows whether second-stage SCI, a MAC CE, or a PSFCH carried on a resource in which the control information is located carries the first COT sharing information. If the resource carries the first COT sharing information, the decoding continues, even if the resource does not carry data sent to the receiving UE; if the resource does not carry the first COT sharing information, the resource does not carry the data sent to the receiving UE, and the decoding does not need to be continued.

Optionally, when the second-stage SCI carries the first COT sharing information, the second-stage SCI includes a second field and a third field. The second field indicates a quantity of slots that may be used for sharing within the first COT. The third field indicates information about a UE on a quantity of shared slots. For example, the third field is {slot information, identification information 1 of the UE, identification information 2 of the UE, identification information 3 of the UE, ...}.

Optionally, when the second-stage SCI carries the first COT sharing information, the second-stage SCI includes a fourth field and a fifth field. The fourth field indicates a quantity of UEs that share transmission within the first COT. The fifth field indicates transmission information of the UE. For example, the fifth field is {identification information of the UE, information about a time domain resource, information about a frequency domain resource}, or {identification information of the UE, enable}.

Optionally, when the MAC CE carries the first COT sharing information, the MAC CE may transmit the first COT sharing information in a multicast or broadcast manner. Optionally, all UEs sharing the first COT may decode the MAC CE; or a UE in a same group as the UE 1 may decode the MAC CE; or a UE in a resource pool may decode the MAC CE.

Optionally, an RNTI of the MAC CE indicates that the MAC CE carries the first COT sharing information.

The foregoing describes in detail how the first COT sharing information is indicated to the UE 2 when the first COT sharing information is carried in different signaling. The following describes in detail a condition that needs to be met for the time domain resource (that is, the time domain resource of the first resource) for sending the first COT sharing information to the UE 2.

(1) A time interval between a start time domain location of the first COT and a time domain location of the first resource is greater than or equal to first duration.

(2) A time interval between a resource on which the UE 2 sends the first SCI and a resource for sending the first COT sharing information is greater than second duration.

(3) An interval between the time domain location of the first resource and an actual reserved resource location of the UE 2 is greater than third duration, and the third duration is a time at which the UE 2 decodes the first COT sharing information, performs packet assembly, and performs transmitting/receiving transition. Otherwise, the UE 2 initiates the COT.

(4) A time interval between the time domain location of the first resource and the actual reserved resource location of the UE 2 is greater than fourth duration.

(5) A time interval between the time domain location of the first resource and a time domain location of transmission performed by the UE 2 within the first COT is greater than or equal to fifth duration.

Optionally, the time domain location of the first resource in the foregoing conditions is any one of a start location of a slot that the first resource is in, an end location of the slot that the first resource is in, a start location of a symbol that the first resource is in, an end location of the symbol that the first resource is in, an end location of a last symbol of the first resource, or a start location of a 1st symbol of the first resource. Optionally, the time domain location of the first resource is pre-configured or configured by the network as any one of the foregoing locations.

Optionally, $S^{th}$ duration is related to a subcarrier spacing (subcarrier spacing, SCS), and the $S^{th}$ duration is any one of the first duration, the second duration, the third duration, the fourth duration, and the fifth duration. Lengths of slots of the $S^{th}$ duration at different SCSs are shown in Table 32, Table 33, Table 34, Table 35, Table 36, or Table 37.

**Table 32**

| SCS (kHz) | $S^{th}$ duration (slot) |
|---|---|
| 15 | 1 |
| 30 | 1 |
| 60 | 2 |
| 120 | 4 |

**Table 33**

| SCS (kHz) | $S^{th}$ duration (slot) |
|---|---|
| 15 | 3 |
| 30 | 5 |
| 60 | 9 |
| 120 | 17 |

**Table 34**

| SCS (kHz) | $S^{th}$ duration (slot) |
|---|---|
| 15 | 4 |
| 30 | 6 |
| 60 | 11 |
| 120 | 21 |

**Table 35**

| SCS (kHz) | $S^{th}$ duration (ms) |
|---|---|
| 15 | 1 |
| 30 | 0.5 |
| 60 | 0.5 |
| 120 | 0.5 |

**Table 36**

| SCS (kHz) | $S^{th}$ duration (ms) |
|---|---|
| 15 | 3 |
| 30 | 2.5 |
| 60 | 2.25 |
| 120 | 2.125 |

**Table 37**

| SCS (kHz) | $S^{th}$ duration (ms) |
|---|---|
| 15 | 4 |
| 30 | 3 |
| 60 | 2.75 |

(continued)

| SCS (kHz) | S$^{th}$ duration (ms) |
|---|---|
| 120 | 2.625 |

Optionally, the S$^{th}$ duration is any one of 0, 1, 2, 3, 4, 5, 6, 7, and 8 slots. For example, a value of the S$^{th}$ duration is pre-configured or configured by using the network.

Optionally, the S$^{th}$ duration includes a sum of A milliseconds and a time corresponding to B slots, and both A and B are positive numbers.

Optionally, the S$^{th}$ duration includes at least one of the following times, or a sum of at least two of the following times: a time for preparing a sensing result; a time for reporting the sensing result to a MAC layer; a time for the MAC layer to select a resource or create a grant (selected sidelink grant); a time for the MAC layer to indicate the resource to a physical layer; a time for transmitting/receiving transition; and a data preparation time. The data preparation time includes a time of at least one of channel coding, modulation, RE mapping, OFDM signal generation, and packet assembly.

Optionally, if the time domain resource for sending the first COT sharing information does not meet at least one of the foregoing conditions, the UE 2 does not share the first COT, or the UE 2 accesses an initiated COT (for example, type1 LBT) through a type1 channel.

Optionally, the time domain resource (that is, the time domain resource of the first resource) for carrying the first COT sharing information may be any one of the following:

The time domain resource for the first COT sharing information is in M symbols after a symbol on which the PSCCH is located; or the time domain resource for the first COT sharing information is in closest M symbols after the symbol on which the PSCCH is located; or the time domain resource for the first COT sharing information is in closest M symbols separated by a first symbol interval after the symbol on which the PSCCH is located, where the first symbol interval is a positive integer; or the time domain resource for the first COT sharing information is in first M symbols of a slot; or the time domain resource for the first COT sharing information is in the last but two symbol and the last but one symbol of the slot. M is an integer, for example, M=1, 2, 3.

S704: The UE 2 determines, based on the first COT sharing information, whether to allow the UE 2 to share the first COT.

For details about a step in which the UE 2 parses whether the first COT sharing information is sent to the UE 2 and a step in which the second terminal determines, based on the first COT sharing information, whether the first COT can be shared, refer to the foregoing descriptions. Details are not described herein again. In the foregoing technical solution, the UE 1 may indicate, based on a reserved resource indicated by SCI of another terminal device (for example, the UE 2), whether the another terminal device can share the initiated COT, so that transmission of the UE 1 and transmission of the another terminal device can form continuous transmission within the COT, to avoid interruption of the initiated COT of the UE 1. In addition, the sharing UE 2 may perform transmission by initiating a COT, or may perform transmission by sharing the COT of the UE 1. For the former (the UE 2 performs transmission by initiating the COT), if the reserved resource of the UE 2 is within the initiated COT of the UE 1, and the UE 1 does not share the COT with the UE 2 for transmission (for example, the COT is used by the UE 1 for transmission or used by another sharing UE for transmission), the UE 2 does not succeed in LBT before the reserved resource. In other words, the UE 2 can perform transmission only after COT transmission of the UE 1 ends. For the latter (the UE 2 shares the COT of the UE 1), the UE 2 can perform transmission in time domain of the reserved resource, to reduce a latency.

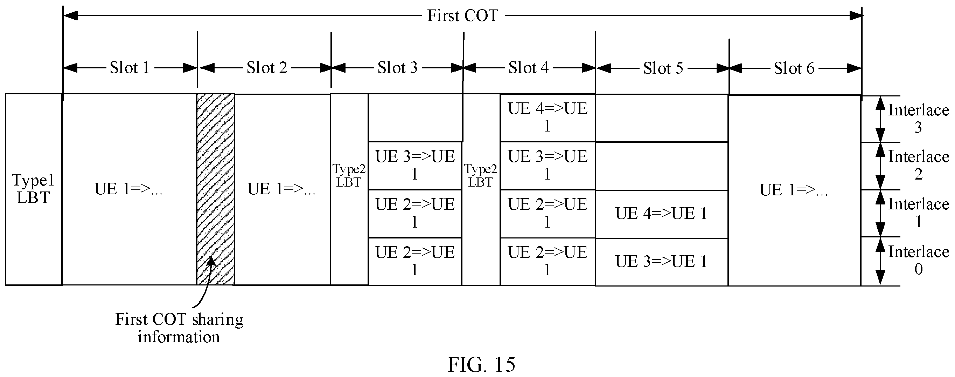

The following continues to provide related descriptions of how another UE accesses the first COT after the UE 1 allows the another UE to share the first COT. According to a channel access regulation of NR-U, when a UE shares a COT of another device, type2 LBT needs to be executed before access. Similarly, in the SL-U, when the UE shares the COT of the another device, the UE also needs to execute type2 LBT before access. As shown in FIG. 15, the first COT of the UE 1 includes six slots: a slot 1 to a slot 6. The UE 2, the UE 3, and a UE 4 are all UEs that share the first COT. In the SL-U, according to an access regulation, when accessing the first COT of the UE 1, the UE 2, the UE 3, and the UE 4 need to execute type2 LBT before access. Slots shared by the UE 2, the UE 3, and the UE 4 within the first COT are shown in the figure. In this case, a slot in which the UE 2 and the UE 3 need to access the first COT is the slot 3, and a slot in which the UE 4 needs to access the first COT is the slot 4. Because start slots of reserved resources of the UE 2 (or the UE 3) and the UE 4 within the first COT are different (that is, the UE 2 and the UE 4 sequentially access a channel in different slots), and continuous transmission of the UE 2 causes an LBT failure of the UE 4, in this embodiment, it is designed that the UE 2, the UE 3, and the UE 4 need to reserve, at some time domain locations within the first COT, a time domain resource for executing the type2 LBT, to ensure that a UE newly accessing the first COT can successfully perform access.

Optionally, the time domain resource for executing the type2 LBT may be understood as a time domain resource on which the UE 1 and/or the UE sharing the first COT do/does not send SL information; or a time domain resource in a GAP in transmission of the UE 1 and/or the UE sharing the first COT; or a time domain resource on which the UE 1 and/or the UE sharing the first COT stop sending SL information; or a time domain resource on which the UE 1 and/or the UE sharing the first COT pauses sending SL information.

Optionally, a unit of a time length for executing the type2 LBT is $\mu$s, ms, a symbol, or a slot. For example, a time length for executing the type2 LBT is at least one of 16 $\mu$s, 23 $\mu$s, 25 $\mu$s, 29 $\mu$s, 30 $\mu$s, 32 $\mu$s, 38 $\mu$s, 39 $\mu$s, 42 $\mu$s, or 51 $\mu$s. For example, the time length for executing the type2 LBT is pre-configured or configured by the network as at least one of the foregoing values. When the time domain resource for executing the type2 LBT is a slot or a symbol, the time domain resource on which no SL information is sent may be less than or equal to a time length corresponding to the symbol.

Optionally, a location of the time domain resource for executing the type2 LBT in one slot may be the following locations: M symbols after a start location of one slot, M symbols before an end location of one slot, or M symbols in one slot. M is a positive integer, for example, M=1, 2, 3. For example, the time domain resource for executing the type2 LBT in one slot is in the M symbols after the symbol on which the PSCCH is located; or the time domain resource for executing the type2 LBT in one slot is in the closest M symbols after the symbol on which the PSCCH is located; or the time domain resource for executing the type2 LBT in one slot is in the closest M symbols separated by the first symbol interval after the symbol on which the PSCCH is located, where the first symbol interval is a positive integer quantity of symbols.

In the following, this application provides several specific implementations of determining specific slots in which the time domain resource for executing the type2 LBT is reserved within the first COT.

Implementation 1:

Each slot in a first slot set includes a time domain resource for type2 LBT, and the first slot set is a set of slots used by all terminal devices sharing the first COT to access the first COT.

Optionally, the UE 2 continuously transmits N PSCCHs and/or PSSCHs (N is an integer greater than or equal to 1) in N slots, and a slot in which the UE 2 transmits a 1st PSCCH and/or PSSCH is a slot in which the UE 2 accesses the first COT. For example, as shown in FIG. 15, the first COT of the UE 1 includes six slots: the slot 1 to the slot 6. The UE 2, the UE 3, and the UE 4 are all UEs that share the first COT, and the slots shared by the UE 2, the UE 3, and the UE 4 within the first COT are shown in FIG. 15. In this case, a slot in which the UE 2 and the UE 3 access the first COT is the slot 3, and a slot in which the UE 4 accesses the first COT is the slot 4. Therefore, the first slot set includes the slot 3 and the slot 4.

Optionally, the UE 2 continuously transmits N PSCCHs and/or PSSCHs (N is an integer greater than or equal to 1) in M slots, and a slot in which the UE 2 continuously transmits a 1st PSCCH and/or PSSCH is a slot in which the UE 2 accesses the first COT. For example, as shown in FIG. 15, the first slot set includes the slot 3.

Optionally, the UE 2 discontinuously transmits N PSCCHs and/or PSSCHs (N is an integer greater than or equal to 1) in M slots, and a slot in which the UE 2 transmits each PSCCH and/or PSSCH is a slot in which the UE 2 accesses the first COT. For example, as shown in FIG. 15, the first slot set includes the slot 3 and the slot 4.

Implementation 2:

Each slot in a first slot set includes a time domain resource for type2 LBT, and the first slot set is a set of slots used by each of all terminal devices sharing the first COT to transmit SL information.

Optionally, the UE 2 transmits N PSCCHs and/or PSSCHs (N is an integer greater than or equal to 1) in N slots, and a slot in which the UE 2 transmits each PSCCH and/or PSSCH is a slot in which the UE 2 transmits SL information. For example, as shown in FIG. 15, the first slot set includes the slot 3 and the slot 4.

Implementation 3:

Each slot in a first slot set includes a time domain resource for type2 LBT, and the first slot set is a set of all slots within the first COT. For example, as shown in FIG. 15, the first slot set includes a slot 1, a slot 2, a slot 3, a slot 4, a slot 5, and a slot 6.

Optionally, at least one of the foregoing three implementations may be predefined, pre-configured, or configured by the network.

Optionally, in this application, the UE 2 determines, based on the COT sharing information indicated by the UE 1 to the UE 3 and second SCI sent by the UE 3, a resource for transmission (shared) of the UE 3 within the first COT. The second SCI indicates a reserved resource of the UE 3. In this way, the UE 2 may determine, based on any one of the foregoing three implementations, specific slots of the first COT to be used for type2 LBT, that is, determine the first slot set. For example, when the first COT sharing information is carried in the PSFCH, specific slots of the first COT to be used for type2 LBT may be determined in an implicit indication manner.

Optionally, the UE 1 may explicitly indicate whether there is a time domain resource for type2 LBT in a slot after the reference slot. Optionally, the reference slot may be a slot for sending the first COT sharing information, a slot in which the UE 1 accesses the channel, a 1st slot within the first COT of the UE 1, a 1st complete slot within the first COT of the UE 1, or a

1st effective slot within the first COT of the UE 1.

Optionally, a bitmap (bitmap) may be used for an explicit indication to indicate whether there is the time domain resource for the type2 LBT in the slot after the reference slot. For example, based on FIG. 15, the slot for sending the first COT sharing information is used as the reference slot, and 1100 indicates that in the slots 3 to 6, the UE sharing the first COT may execute type2 LBT in the slot 3 and the slot 4. For another example, the 1st slot within the first COT of the UE 1 is used as the reference slot, and 001100 indicates that in the slots 1 to 6, the UE sharing the first COT may execute type2 LBT in the slot 3 and the slot 4.

The foregoing determines specific slots within the first COT in which the time domain resource for executing the type2 LBT needs to be reserved. The following mainly describes a possible location of the time domain resource for the type2 LBT in one slot.

Optionally, an AGC symbol and/or a GAP symbol in each slot in the first slot set include/includes a time domain resource for type2 LBT. For ease of description, an example in which the time domain resource for the type2 LBT is sixth duration is used herein for description.

Optionally, a time length of the sixth duration is at least one of 16 μs, 23 μs, 25 μs, 29 μs, 30 μs, 32 μs, 38 μs, 39 μs, 42 μs, or 51 μs. Optionally, a value of the sixth duration is pre-configured or configured by the network.

Manner 1: A symbol on which AGC is located includes a time domain resource for type2 LBT.

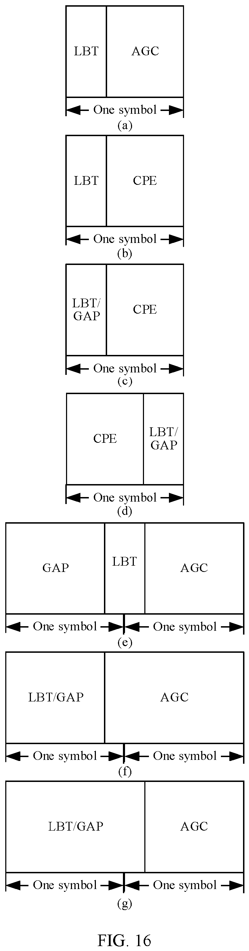

Optionally, the AGC symbol includes a time domain resource for type2 LBT. It may be further understood that the time domain resource for the type2 LBT is in the 1st symbol of the slot. As shown in (a) in FIG. 16, the first sixth duration of the symbol is a time domain resource for type2 LBT. A remaining part of the symbol is used for AGC of the slot. For example, during 15 kHz, a length of one symbol is 71.35 μs, where the first sixth duration equal to 25 μs is a time domain resource for type2 LBT, and the last 46.35 μs is a symbol used for AGC.

Manner 2: A cyclic prefix extension (cyclic prefix extension) CPE is used to replace AGC, and a symbol on which the CPE is located includes a time domain resource for type2 LBT.

Optionally, the CPE symbol includes a time domain resource for type2 LBT. It may be further understood that the time domain resource for the type2 LBT is in the 1st symbol of the slot. As shown in (b) in FIG. 16, the first sixth duration of the symbol is a time domain resource for type2 LBT. A remaining part of the symbol is used for the CPE in the slot. For example, during 15 kHz, a length of one symbol is 71.35 μs, where the first sixth duration equal to 25 μs is a time domain resource for type2 LBT, and the last 46.35 μs is a symbol used for AGC.

Manner 3: A symbol on which a GAP is located includes a time domain resource for type2 LBT.

Optionally, the GAP symbol includes a time domain resource for type2 LBT. It may be further understood that the time domain resource for the type2 LBT is in the last symbol of the slot, or is in the 1st symbol of the slot. As shown in (c) in FIG. 16, the first sixth duration of the symbol is used for the GAP of the slot, and the GAP is a time domain resource for type2 LBT. Optionally, a remaining part of the symbol is a CPE, and content of a previous symbol is duplicated, or content of a next symbol is duplicated. Optionally, a remaining part of the symbol carries a PSSCH. For example, during 15 kHz, a length of one symbol is 71.35 μs, where the first sixth duration equal to 25 μs is a GAP, the GAP is a time domain resource for type2 LBT, and the last 46.35 μs is a CPE or carries a PSSCH. Alternatively, as shown in (d) in FIG. 16, the last sixth duration of the symbol is used for a GAP of the slot, and the GAP is a time domain resource for type2 LBT. Optionally, a remaining part of the symbol is a CPE, and content of a previous symbol is duplicated, or content of a next symbol is duplicated. Optionally, a remaining part of the symbol carries a PSSCH. For example, during 15 kHz, a length of one symbol is 71.35 μs, where the last sixth duration equal to 25 μs is a GAP, the GAP is a time domain resource for type2 LBT, and the first 46.35 μs is a CPE or carries a PSSCH.

Manner 4: A last symbol in a former slot and a 1st symbol in a latter slot in two adjacent slots include a time domain resource for type2 LBT.

It may be further understood that the time domain resource for the type2 LBT is in a GAP symbol in a former slot and an AGC symbol in a latter slot in two adjacent slots. As shown in (e) in FIG. 16, the AGC, the sixth duration, and the GAP occupy two symbols in total. For example, during 30 kHz, a length of one symbol is 35.68 μs, an AGC symbol is shortened to (35.68-A) μs, and a GAP symbol is shortened to (35.68-B) μs, where a sum of lengths A and B is equal to the sixth duration.

Beneficial effects of Manner 4: For example, during 30 kHz, a length of one symbol is 35.68 μs. If the length of the sixth duration is 25 μs, the remaining time 35.68-25=10.68 μs is insufficient for AGC. Therefore, in a case of a larger subcarrier spacing, Manner 4 is more effective.

Manner 5: A last symbol in a former slot and a 1st symbol in a latter slot in two adjacent slots include a time domain resource for type2 LBT.

It may be further understood that the time domain resource for the type2 LBT is in a GAP symbol in a former slot and an AGC symbol in a latter slot in two adjacent slots. As shown in (f) in FIG. 16, the sixth duration is in the last symbol in a former slot and the 1st symbol in a latter slot. The first sixth duration of the two symbols is used for a GAP of the former slot, the GAP is a time domain resource for type2 LBT, and a remaining part of the two symbols is used for AGC. For example, during 30 kHz, a length of one symbol is 35.68 μs, and a length of two symbols is 71.35 μs, where the first sixth duration equal to 25 µs is a time domain resource for type2 LBT, and the last 46.35 µs is a symbol used for AGC. As shown in (g) in FIG. 16, the sixth duration is in the last symbol in a former slot and the 1st symbol in a latter slot. The first sixth duration of the two symbols is used for a GAP of the former slot, the GAP is a time domain resource for type2 LBT, and a remaining part of the two symbols is used for AGC. For example, during 60 kHz, a length of one symbol is 17.84 µs, and a length of two symbols is 35.68 µs, where the first sixth duration equal to 25 µs is a time domain resource for type2 LBT, and the last 10.68 µs is a symbol used for AGC.

Manner 6: Increase a CP length between symbols in a slot to ensure that 25 µs is reserved at an end of a slot.

An existing GAP symbol is too long, and another UE may successfully execute type1 LBT to access a channel in this time period, resulting in interruption of the first COT of the UE 1. However, according to a constraint of the foregoing solution, a GAP location and an AGC location in the resource pool are still unified. For the GAP, a case in which when a sending UE performs transmission, a receiving UE is still in a transmitting/receiving transition state and cannot perform receiving does not occur. For the AGC, transmission at a frequency domain location does not affect AGC adjustment at a subsequent location.

In addition, as shown in FIG. 15, for UEs (the UE 2, the UE 3, and the UE 4) that share the first COT, in some slots (for example, the slot 5), no UE needs to newly access a channel. Therefore, some UEs (for example, the UE 3 and the UE 4) may perform continuous transmission without a GAP and/or AGC. The following uses an example to describe impact of type2 LBT duration on the GAP and the AGC in the slot.

Optionally, the 1st symbol in each slot in the first slot set is a symbol used for AGC.

Optionally, a 1st symbol of a slot that does not belong to the first slot set within the first COT is not a symbol used for AGC; or a 1st symbol of a slot that does not belong to the first slot set within the first COT is used to transmit SL information.

Optionally, the UE 1 performs transmission in a first slot and a second slot within the first COT; or the UE 2 performs transmission in a first slot and a second slot within the first COT. The first slot and the second slot are adjacent in time domain. A last symbol in the first slot is not a GAP symbol, or a last symbol in the first slot is used to transmit SL information.

For example, (1) if both a slot 1 and a slot 2 are used by the UE 1 for sending, the UE 1 does not need to perform transmitting/receiving transition. Therefore, an end location of the slot 1 does not require a GAP.

(2) If both a slot 1 and a slot 2 are used by the UE 1 for sending, a start location of the slot 2 does not require AGC to implement continuous transmission of the UE 1.

(3) If a slot 5 is used by the UE 1 for receiving, and a slot 6 is used by the UE 1 for sending, the UE 1 needs to perform transmitting/receiving transition, and an end location of the slot 5 requires a GAP.

(4) If both a slot 4 and a slot 5 are used by the UE 3 and the UE 4 for sending, an end location of the slot 4 does not require a GAP.

(5) If both a slot 4 and a slot 5 are used by the UE 3 and the UE 4 for sending, a start location of the slot 5 does not require a GAP.

Optionally, whether there is a GAP location and/or an AGC location in the slot within the first COT may be predefined, pre-configured, or configured by the network.

The foregoing describes in detail the communication method provided in this application. The following describes a communication apparatus provided in this application.

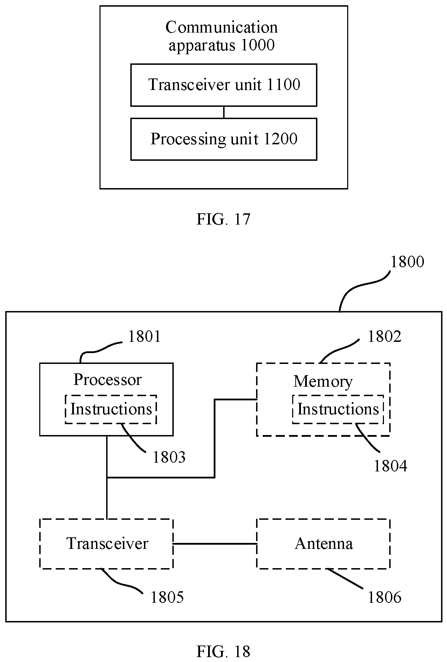

FIG. 17 is a block diagram of a communication apparatus 1000 according to this application.

In a possible design, as shown in FIG. 17, the communication apparatus 1000 includes a transceiver unit 1100 and a processing unit 1200. The communication apparatus 1000 may implement the steps or procedures performed by the first terminal device in the foregoing method embodiments. For example, the communication apparatus 1000 may be the first terminal device, or may be a chip or a circuit disposed in the first terminal device. The transceiver unit 1100 is configured to perform receiving and sending-related operations of the first terminal device in the foregoing method embodiments, and the processing unit 1200 is configured to perform processing-related operations of the first terminal device in the foregoing method embodiments.

The transceiver unit 1100 is configured to receive first sidelink control information SCI from a second terminal device, where the first SCI indicates a reserved resource of the second terminal device. The processing unit 1200 is configured to determine that all or a part of the reserved resource of the second terminal device is within a first COT, where the first COT is an initiated COT of the first terminal device. The transceiver unit 1100 is further configured to send first COT sharing information to the second terminal device, where the first COT sharing information indicates that sharing of the first COT is allowed or not allowed.

Optionally, the processing unit 1200 is further configured to determine a first resource, where the first resource is used to transmit the first COT sharing information.

Optionally, the processing unit 1200 is specifically configured to: determine the first resource based on the reserved resource of the second terminal device; determine the first resource based on a reserved resource of the second terminal device within the first COT; or determine the first resource based on a first reserved resource, where the first reserved resource is a reserved resource of the second terminal device within the first COT, and the first reserved resource corresponds to one slot in time domain and corresponds to one subchannel or interlace in frequency domain. For descriptions of the first reserved resource, refer to descriptions in a corresponding embodiment. Details are not described herein again.

Optionally, the processing unit 1200 is specifically configured to determine a time domain resource of the first resource based on a time domain resource of the first reserved resource, where the time domain resource of the first resource is a time domain resource that is before the first reserved resource and that is separated from the first reserved resource by at least a first time interval.

Optionally, the processing unit 1200 is specifically configured to determine a frequency domain resource of the first resource based on a frequency domain resource of the first reserved resource, where the frequency domain resource of the first resource is the frequency domain resource of the first reserved resource.

Optionally, the first COT sharing information is a sequence of the first resource, and the processing unit 1200 is further configured to determine a cyclic shift of the sequence based on at least one of the following parameters or conditions: information indicating whether to allow the second terminal device to share the first COT; a time interval between the first reserved resource and a reference slot, where the reference slot is a slot of the first resource or a start slot of the first COT; time domain offset information and/or frequency domain offset information, where the time domain offset information and/or the frequency domain offset information indicate/indicates a time domain offset and/or a frequency domain offset of a resource shared by the second terminal device within the first COT relative to the reserved resource of the second terminal device within the first COT; or the frequency domain resource of the first reserved resource. For a specific manner of determining the cyclic shift associated with the first resource, refer to descriptions in a corresponding embodiment. Details are not described herein again.

Optionally, in an implementation in which the communication apparatus 1000 is the first terminal device in the method embodiments, the transceiver unit 1100 may be a receiver. The receiver and a transmitter may alternatively be integrated into a transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs operations and/or processing performed by the first terminal device in the method embodiments. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 1000 is a chip or an integrated circuit installed in the first terminal device, the transceiver unit 1100 may be a communication interface or an interface circuit. The processing unit 1200 may be a processor or a microprocessor integrated on the chip or the integrated circuit. This is not limited herein.

In another possible design, the communication apparatus 1000 includes a transceiver unit 1100 and a processing unit 1200. The communication apparatus 1000 may implement the steps or procedures performed by the second terminal device in the foregoing method embodiments. For example, the communication apparatus 1000 may be the second terminal device, or may be a chip or a circuit disposed in the second terminal device. The transceiver unit 1100 is configured to perform receiving and sending-related operations of the second terminal device in the foregoing method embodiments, and the processing unit 1200 is configured to perform processing-related operations of the second terminal device in the foregoing method embodiments.

The transceiver unit 1100 is configured to send first sideline control information to a first terminal device, where the first sideline control information indicates a reserved resource of the second terminal device. The transceiver unit 1100 is further configured to receive first COT sharing information from the first terminal device, where the first COT sharing information indicates that sharing of a first COT is allowed or not allowed, the first COT sharing information is indicated to the second terminal device, the first COT is an initiated COT of the first terminal device, and all or a part of the reserved resource of the second terminal device is within the first COT. The processing unit 1200 is configured to determine, based on the first COT sharing information, whether to share the first COT.

Optionally, the processing unit 1200 is further configured to determine, based on a first resource, that the first COT sharing information is indicated to the second terminal device, where the first resource is used to transmit the first COT sharing information, the first resource is determined based on the reserved resource of the second terminal device, or the first resource is determined based on a reserved resource of the second terminal device within the first COT, or the first resource is determined based on a first reserved resource, the first reserved resource is a reserved resource of the second terminal device within the first COT, the first reserved resource is a reserved resource of the second terminal device within the first COT, and the first reserved resource corresponds to one slot in time domain and corresponds to one subchannel or interlace in frequency domain.

Optionally, the processing unit 1200 is specifically configured to: determine, as a time domain resource of the first reserved resource, a time domain resource that is separated by at least a first time interval after a time domain resource of the first resource; and determine that the first COT sharing information is indicated to the second terminal device.

Optionally, the processing unit 1200 is specifically configured to: determine that a frequency domain resource of the first resource is the same as a frequency domain resource of the first reserved resource; and determine that the first COT sharing information is indicated to the second terminal device.

Optionally, the transceiver unit 1100 is further configured to receive second COT sharing information on a second resource, where the second resource indicates that the second COT sharing information is indicated to a third terminal device, and the second COT sharing information indicates whether to share the first COT. The processing unit 1200 is further configured to determine, based on the second resource and the second COT sharing information, a resource shared by the third terminal within the first COT. The processing unit 1200 is further configured to determine a first slot set based on a time domain resource of a resource shared by the second terminal device and the third terminal within the first COT, where each slot in the first slot set within the first COT includes a time domain resource for type2 LBT.

Optionally, in an implementation in which the communication apparatus 1000 is the second terminal device in the method embodiment, the transceiver unit 1100 may be a receiver. The receiver and a transmitter may alternatively be integrated into a transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs operations and/or processing performed by the second terminal device in the method embodiments. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 1000 is a chip or an integrated circuit installed in the second terminal device, the transceiver unit 1100 may be a communication interface or an interface circuit. The processing unit 1200 may be a processor or a microprocessor integrated on the chip or the integrated circuit. This is not limited herein.

FIG. 18 shows a communication apparatus 1800 according to an embodiment of this application. The apparatus shown in FIG. 18 may be an implementation of a hardware circuit of the apparatus shown in FIG. 17. The communication apparatus is applicable to the foregoing flowcharts, and performs functions of the terminal device or the network device in the foregoing method embodiments. For ease of description, FIG. 18 shows only main components of the communication apparatus.

The communication apparatus 1800 may be a terminal device, and can implement functions of the first terminal apparatus or the second terminal apparatus in the methods provided in embodiments of this application. Alternatively, the communication apparatus 1800 may be an apparatus that can support the first terminal apparatus or the second terminal apparatus in implementing corresponding functions in the methods provided in embodiments of this application. The communication apparatus 1800 may be a chip system. In this embodiment of this application, the chip system may include a chip, or may include a chip and another discrete component. For specific functions, refer to descriptions of the foregoing method embodiments.

The communication apparatus 1800 includes one or more processors 1810, configured to implement or support the communication apparatus 1800 in implementing functions of the first terminal apparatus or the second terminal apparatus in the methods provided in embodiments of this application. For details, refer to detailed descriptions in the method examples. Details are not described herein again. The processor 1810 may also be referred to as a processing unit or a processing module, and may implement a specific control function. The processor 1810 may be a general-purpose processor, a dedicated processor, or the like. For example, the processor includes a central processing unit, an application processor, a modem processor, a graphics processing unit, an image signal processor, a digital signal processor, a video codec processor, a controller, a memory, and/or a neural network processor. The central processing unit may be configured to control the communication apparatus 1800, execute a software program, and/or process data. Different processors may be independent devices, or may be integrated into one or more processors, for example, integrated into one or more application-specific integrated circuits. It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any regular processor, or the like.

Optionally, the communication apparatus 1800 includes one or more memories 1820, configured to store instructions 1840. The instructions may be run on the processor 1810, to enable the communication apparatus 1800 to perform the methods described in the foregoing method embodiments. The memory 1820 is coupled to the processor 1810. The coupling in this embodiment of this application may be an indirect coupling or a communication connection between apparatuses, units, or modules in an electrical form, a mechanical form, or another form, and is used for information exchange between the apparatuses, the units, or the modules. The processor 1810 may cooperate with the memory 1820. At least one of the at least one memory may be included in the processor. It should be noted that the memory 1820 is not necessary, and therefore is shown by using dashed lines in FIG. 18.

Optionally, the memory 1820 may further store data. The processor and the memory may be separately disposed, or may be integrated together. In this embodiment of this application, the memory 1820 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). Alternatively, the processor in this embodiment of this application may be a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium of any other form well known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store program instructions and/or data.

Optionally, the communication apparatus 1800 may include instructions 1830 (which may also be referred to as code or programs sometimes). The instructions 1830 may be run on the processor, to enable the communication apparatus 1800 to perform the methods described in the foregoing embodiments. The processor 1810 may store data.

Optionally, the communication apparatus 1800 may further include a transceiver 1850 and an antenna 1806. The transceiver 1850 may be referred to as a transceiver unit, a transceiver module, a transceiver machine, a transceiver circuit, a transceiver, an input/output interface, or the like, and is configured to implement a transceiver function of the communication apparatus 1800 through the antenna 1806.

The processor 1810 and the transceiver 1850 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1800 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1800 may include more or fewer components, some components are integrated, or some components are split. These components may be implemented by hardware, software, or a combination of software and hardware.

In addition, this application further provides a computer-readable storage medium. The computer-readable storage medium stores computer instructions. When the computer instructions are run on a computer, operations and/or procedures performed by the first terminal device in the method embodiments of this application are performed.

This application further provides a computer-readable storage medium. The computer-readable storage medium stores computer instructions. When the computer instructions are run on a computer, operations and/or procedures performed by the second terminal device in the method embodiments of this application are performed.

This application further provides a computer program product, and the computer program product includes computer program code or instructions. When the computer program code or the instructions are run on a computer, operations and/or procedures performed by the first terminal device in the method embodiments of this application are performed.

This application further provides a computer program product, and the computer program product includes computer program code or instructions. When the computer program code or the instructions are run on a computer, operations and/or procedures performed by the second terminal device in the method embodiments of this application are performed.

In addition, this application further provides a chip, and the chip includes a processor. A memory configured to store a computer program is disposed independently of the chip, and the processor is configured to execute the computer program stored in the memory, so that an operation and/or processing performed by a corresponding device or a network element in any method embodiment are/is performed.

Further, the chip may include a communication interface. The communication interface may be an input/output interface, an interface circuit, or the like. Further, the chip may include the memory.

In addition, this application further provides a communication system, including one or more of the devices or the network elements in embodiments of this application.

The processor in embodiments of this application may be an integrated circuit chip, and has a signal processing capability. In an implementation process, steps in the foregoing method embodiments may be implemented by a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory in the system and the method described in this specification is intended to include, but not limited to, these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The term "and/or" in this application is merely an association relationship for describing associated objects, and indicates that three relationships may exist. For example, A and/or B may represent: Only A exists, both A and B exist, and only B exists. A, B, and C may all be singular or plural, and are not limited.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1.    A communication method, comprising:

   receiving, by a first terminal device, first sidelink control information SCI from a second terminal device, wherein the first SCI indicates a reserved resource of the second terminal device;
   determining, by the first terminal device, that all or a part of the reserved resource of the second terminal device is within a first channel occupancy time COT, wherein the first COT is an initiated COT of the first terminal device; and
   sending, by the first terminal device, first COT sharing information to the second terminal device, wherein the first COT sharing information indicates that sharing of the first COT is allowed or not allowed.

2.    The method according to claim 1, wherein the method further comprises:
   determining, by the first terminal device, a first resource, wherein the first resource is used to transmit the first COT sharing information.

3.    The method according to claim 2, wherein the determining, by the first terminal device, a first resource comprises:

   determining, by the first terminal device, the first resource based on the reserved resource of the second terminal device;
   determining, by the first terminal device, the first resource based on a reserved resource of the second terminal device within the first COT; or
   determining, by the first terminal device, the first resource based on a first reserved resource, wherein the first reserved resource is a reserved resource of the second terminal device within the first COT, and the first reserved resource corresponds to one slot in time domain and corresponds to one subchannel or interlace in frequency domain.

4.    The method according to claim 3, wherein

   the first reserved resource is a resource with a smallest slot index and a smallest subchannel or interlace index in the reserved resource within the first COT;
   the first reserved resource is a resource with a smallest slot index and a largest subchannel or interlace index in the reserved resource within the first COT;
   the first reserved resource is a resource with a largest slot index and a largest subchannel or interlace index in the reserved resource within the first COT; or
   the first reserved resource is a resource with a largest slot index and a smallest subchannel or interlace index in the reserved resource within the first COT.

5.    The method according to claim 3 or 4, wherein the determining, by the first terminal device, the first resource based on a first reserved resource comprises:
   determining, by the first terminal device, a time domain resource of the first resource based on a time domain resource of the first reserved resource, wherein the time domain resource of the first resource is a time domain resource that is before the first reserved resource and that is separated from the first reserved resource by at least a first time interval.

6.  The method according to any one of claims 3 to 5, wherein the determining, by the first terminal device, the first resource based on a first reserved resource comprises:
    determining, by the first terminal device, a frequency domain resource of the first resource based on a frequency domain resource of the first reserved resource, wherein the frequency domain resource of the first resource is the frequency domain resource of the first reserved resource.

7.  The method according to any one of claims 3 to 6, wherein the first COT sharing information is a sequence of the first resource, and the method further comprises:
    determining, by the first terminal device, a cyclic shift of the sequence based on at least one of the following parameters or conditions:

    information indicating whether to allow the second terminal device to share the first COT;
    a time interval between the first reserved resource and a reference slot;
    time domain offset information and/or frequency domain offset information, wherein the time domain offset information and/or the frequency domain offset information indicate/indicates a time domain offset and/or a frequency domain offset of a resource shared by the second terminal device within the first COT relative to the reserved resource of the second terminal device within the first COT; or
    the frequency domain resource of the first reserved resource, wherein
    the reference slot is a slot of the first resource, or the reference slot is a start slot of the first COT.

8.  The method according to claim 7, wherein the cyclic shift of the sequence is determined based on a first cyclic shift and a second cyclic shift, wherein
    the first cyclic shift indicates that the second terminal device is allowed or not allowed to share the first COT, and the second cyclic shift indicates the time domain offset information and/or the frequency domain offset information.

9.  The method according to claim 7, wherein the cyclic shift of the sequence is determined based on a first cyclic shift and a second cyclic shift, wherein
    the cyclic shift of the sequence indicates that the second terminal device is allowed or not allowed to share the first COT, the first cyclic shift indicates the time interval between the first reserved resource and the reference slot, and the second cyclic shift indicates the time domain offset information and/or the frequency domain offset information.

10. The method according to claim 7, wherein the cyclic shift of the sequence is determined based on a first cyclic shift and a second cyclic shift, wherein

    the first cyclic shift indicates that the second terminal device is allowed or not allowed to share the first COT, the second cyclic shift indicates the time interval between the first reserved resource and the reference slot, a third cyclic shift is a difference between cyclic shifts of sequences of two adjacent resource blocks RBs in the first resource, and the third cyclic shift indicates the time domain offset information and/or the frequency domain offset information, or
    the first cyclic shift indicates that the second terminal device is allowed or not allowed to share the first COT, the second cyclic shift indicates the time domain offset information and/or the frequency domain offset information, a third cyclic shift is a difference between two adjacent RBs in the first resource, and the third cyclic shift indicates the time interval between the first reserved resource and the reference slot.

11. The method according to any one of claims 7 to 10, wherein the sequence is a sequence of any resource block RB in the first resource, or the sequence is a sequence of an RB with a smallest index in the first resource.

12. The method according to any one of claims 1 to 11, wherein the first COT sharing information is carried on a physical sidelink feedback channel PSFCH.

13. The method according to any one of claims 1 to 6, wherein
    the first COT sharing information comprises N pieces of indication information, each of the N pieces of indication information comprises identification information of a terminal device and information about a resource shared by the terminal device within the first COT, and N is a positive integer.

14. The method according to claim 13, wherein

the identification information of the terminal device comprises M terminal device identifiers, the information about the resource shared by the terminal device within the first COT indicates a first time unit, the first time unit is a time unit shared by terminal devices corresponding to the M terminal device identifiers within the first COT, a channel corresponding to the first COT comprises L interlaces or subchannels, each piece of indication information indicates that a terminal device corresponding to an $i^{th}$ terminal device identifier in the M terminal device identifiers shares an $i^{th}$ interlace or subchannel in the L interlaces or subchannels, M, L, and i are all positive integers, and M is less than or equal to L.

15. The method according to claim 13 or 14, wherein
the first COT sharing information further indicates a time domain offset and/or a frequency domain offset between a resource shared by the second terminal device within the first COT and the reserved resource of the second terminal device within the first COT.

16. The method according to any one of claims 1 to 6 and 13 to 15, wherein the first COT sharing information is carried in any signaling of first-stage SCI, second-stage SCI, a medium access control control element MAC CE, or radio resource control RRC.

17. The method according to claim 16, wherein the first-stage SCI comprises a first field, and the first field indicates that the second-stage SCI carries the first COT sharing information, the MAC CE carries the first COT sharing information, or a physical sidelink feedback channel PSFCH carries the first COT sharing information.

18. The method according to any one of claims 1 to 17, wherein a resource for sending the first COT sharing information meets the following condition in time domain:

a time interval in time domain between a resource for receiving the first SCI and the resource for sending the first COT sharing information is greater than second duration; and/or
a time interval in time domain between the resource for sending the first COT sharing information and a resource for shared transmission of the second terminal device within the first COT is greater than or equal to fifth duration.

19. The method according to any one of claims 1 to 18, wherein each slot in a first slot set within the first COT comprises a time domain resource for type2 listen before talk LBT, wherein

the first slot set is a set of slots for each terminal device sharing the first COT to access the first COT;
the first slot set is a set of slots for each terminal device sharing the first COT to transmit sidelink information; or
the first slot set is a set of all slots within the first COT.

20. The method according to claim 19, wherein an automatic gain control AGC symbol and/or a gap GAP symbol in each slot comprise/comprises time domain resources/a time domain resource for type2 LBT.

21. A communication method, comprising:

sending, by a second terminal device, first sidelink control information SCI to a first terminal device, wherein the first SCI indicates a reserved resource of the second terminal device;
receiving, by the second terminal device, first channel occupancy time COT sharing information from the first terminal device, wherein the first COT sharing information indicates that sharing of a first COT is allowed or not allowed, the first COT is an initiated COT of the first terminal device, and all or a part of the reserved resource of the second terminal device is within the first COT; and
determining, by the second terminal device based on the first COT sharing information, whether to share the first COT.

22. The method according to claim 21, wherein the method further comprises:

determining, by the second terminal device based on a first resource, that the first COT sharing information is indicated to the second terminal device, wherein the first resource is used to transmit the first COT sharing information,
the first resource is determined based on the reserved resource of the second terminal device, or the first resource is determined based on a reserved resource of the second terminal device within the first COT, or the first resource is determined based on a first reserved resource, the first reserved resource is a reserved resource of the second terminal device within the first COT, and the first reserved resource corresponds to one slot in time domain and corresponds to one subchannel or interlace in frequency domain.

23. The method according to claim 22, wherein

the first reserved resource is a resource with a smallest slot index and a smallest subchannel or interlace index in the reserved resource within the first COT;
the first reserved resource is a resource with a smallest slot index and a largest subchannel or interlace index in the reserved resource within the first COT;
the first reserved resource is a resource with a largest slot index and a largest subchannel or interlace index in the reserved resource within the first COT; or
the first reserved resource is a resource with a largest slot index and a smallest subchannel or interlace index in the reserved resource within the first COT.

24. The method according to claim 22 or 23, wherein the determining, by the second terminal device based on a first resource, that the first COT sharing information is indicated to the second terminal device comprises:

determining, by the second terminal device as a time domain resource of the first reserved resource, a time domain resource that is separated by at least a first time interval after a time domain resource of the first resource; and
determining, by the second terminal device, that the first COT sharing information is indicated to the second terminal device.

25. The method according to any one of claims 22 to 24, wherein the determining, by the second terminal device based on a first resource, that the first COT sharing information is indicated to the second terminal device comprises:

determining, by the second terminal device, that a frequency domain resource of the first resource is the same as a frequency domain resource of the first reserved resource; and
determining, by the second terminal device, that the first COT sharing information is indicated to the second terminal device.

26. The method according to any one of claims 23 to 25, wherein the first COT sharing information is a sequence of the first resource, and a cyclic shift of the sequence indicates at least one of the following information:

information indicating whether to allow the second terminal device to share the first COT;
a time interval between the first reserved resource and a reference slot;
time domain offset information and/or frequency domain offset information, wherein the time domain offset information and/or the frequency domain offset information indicate/indicates a time domain offset and/or a frequency domain offset between a resource shared by the second terminal device within the first COT and the reserved resource of the second terminal device within the first COT; or
the frequency domain resource of the first reserved resource, wherein
the reference slot is a slot of the first resource or a start slot of the first COT.

27. The method according to claim 26, wherein the cyclic shift of the sequence is determined based on a first cyclic shift and a second cyclic shift, wherein
the first cyclic shift indicates that the second terminal device is allowed or not allowed to share the first COT, and the second cyclic shift indicates the time domain offset information and/or the frequency domain offset information.

28. The method according to claim 26, wherein the cyclic shift of the sequence is determined based on a first cyclic shift and a second cyclic shift, wherein
the cyclic shift of the sequence indicates that the second terminal device is allowed or not allowed to share the first COT, the first cyclic shift indicates the time interval between the first reserved resource and the reference slot, and the second cyclic shift indicates the time domain offset information and/or the frequency domain offset information.

29. The method according to claim 26, wherein the cyclic shift of the sequence is determined based on a first cyclic shift and a second cyclic shift, wherein

the first cyclic shift indicates that the second terminal device is allowed or not allowed to share the first COT, the second cyclic shift indicates the time interval between the first reserved resource and the reference slot, a third cyclic shift is a difference between cyclic shifts of sequences of two adjacent resource blocks RBs in the first resource, and the third cyclic shift indicates the time domain offset information and/or the frequency domain offset information; or

the first cyclic shift indicates that the second terminal device is allowed or not allowed to share the first COT, the second cyclic shift indicates the time domain offset information and/or the frequency domain offset information, a third cyclic shift is a difference between two adjacent RBs in the first resource, and the third cyclic shift indicates the time interval between the first reserved resource and the reference slot.

30. The method according to any one of claims 26 to 29, wherein the sequence is a sequence of any resource block RB in the first resource, or the sequence is a sequence of an RB with a smallest index in the first resource.

31. The method according to any one of claims 21 to 30, wherein the first COT sharing information is carried on a physical sidelink feedback channel PSFCH.

32. The method according to any one of claims 21 to 25, wherein
the first COT sharing information comprises N pieces of indication information, each of the N pieces of indication information indicates identification information of a terminal device and information about a resource shared by the terminal device within the first COT, and N is a positive integer.

33. The method according to claim 32, wherein
the identification information of the terminal device comprises M terminal device identifiers, the information about the resource shared by the terminal device within the first COT indicates a first time unit, the first time unit is a time unit shared by a plurality of terminal devices within the first COT, a channel corresponding to the first COT comprises L interlaces or subchannels, each piece of indication information indicates that a terminal device corresponding to an $i^{th}$ terminal device identifier in the M terminal device identifiers shares an $i^{th}$ interlace or subchannel in the L interlaces or subchannels, M, L, and i are all positive integers, and M is less than or equal to L.

34. The method according to claim 32 or 33, wherein
the first COT sharing information further indicates a time domain offset and/or a frequency domain offset of a resource shared by the second terminal device within the first COT relative to the reserved resource of the second terminal device within the first COT.

35. The method according to any one of claims 21 to 25 and 32 to 34, wherein the first COT sharing information is carried in any signaling of first-stage SCI, second-stage SCI, a medium access control control element MAC CE, or radio resource control RRC.

36. The method according to claim 35, wherein the first-stage SCI comprises a first field, and the first field indicates that the second-stage SCI carries the first COT sharing information, the MAC CE carries the first COT sharing information, or a physical sidelink feedback channel PSFCH carries the first COT sharing information.

37. The method according to any one of claims 21 to 35, wherein a resource for receiving the first COT sharing information meets the following condition in time domain:

a time interval in time domain between a resource for sending the first SCI and the resource for receiving the first COT sharing information is greater than second duration; and/or
a time interval in time domain between the resource for receiving the first COT sharing information and a resource for shared transmission of the second terminal device within the first COT is greater than or equal to fifth duration.

38. The method according to any one of claims 21 to 37, wherein each slot in a first slot set within the first COT comprises a time domain resource for type2 listen before talk LBT, wherein

the first slot set is a set of slots for each terminal device sharing the first COT to access the first COT;
the first slot set is a set of slots for each terminal device sharing the first COT to transmit sidelink information; or
the first slot set is a set of all slots within the first COT.

39. The method according to claim 38, wherein a time domain resource for type2 LBT in each slot is in an automatic gain control AGC symbol and/or a gap GAP symbol.

40. The method according to claim 38 or 39, wherein the method further comprises:

   receiving, by the second terminal device, second COT sharing information, wherein the second COT sharing information is indicated to a third terminal device, and the second COT sharing information indicates whether to share the first COT;
   receiving, by the second terminal device, second SCI from the third terminal device, wherein the second SCI indicates a reserved resource of the third terminal device; and
   determining, by the second terminal device, the first slot set based on the reserved resource of the third terminal device and the second COT sharing information.

41. A communication apparatus, comprising a module configured to perform the method according to any one of claims 1 to 20 or claims 21 to 40.

42. A communication apparatus, comprising at least one processor, wherein the at least one processor is coupled to at least one memory, and the at least one processor is configured to execute a computer program or instructions stored in the at least one memory, so that the method according to any one of claims 1 to 20 is performed, or the method according to any one of claims 21 to 40 is performed.

43. A computer-readable storage medium, wherein the computer-readable storage medium stores computer instructions, and when the computer instructions are run on a computer, the method according to any one of claims 1 to 20 is performed, or the method according to any one of claims 21 to 40 is performed.

44. A computer program product, wherein the computer program product comprises computer program code, and when the computer program code is run on a computer, the method according to any one of claims 1 to 20 is performed, or the method according to any one of claims 21 to 40 is performed.

FIG. 1

FIG. 2

FIG. 3

| |
|---|
| Interlace 3 |
| Interlace 2 (UE 3) |
| Interlace 1 (UE 2) |
| Interlace 0 (UE 2) |
| Interlace 3 |
| Interlace 2 (UE 3) |
| Interlace 1 (UE 2) |
| Interlace 0 (UE 2) |
| Interlace 3 |
| Interlace 2 (UE 3) |
| Interlace 1 (UE 2) |
| Interlace 0 (UE 2) |
| Interlace 3 |
| Interlace 2 (UE 3) |
| Interlace 1 (UE 2) |
| Interlace 0 (UE 2) |

is equivalent to

| | |
|---|---|
| Interlace 3 | |
| Interlace 2 | UE 3 |
| Interlace 1 | UE 2 |
| Interlace 0 | UE 2 |

FIG. 4

Interlace manner

| | |
|---|---|
| Interlace 3 | UE 2 |
| Interlace 2 | UE 2 |
| Interlace 1 | UE 2 |
| Interlace 0 | UE 2 |

Channel

Non-interlace manner

| |
|---|
| UE 2 |

FIG. 5

53

FIG. 6

FIG. 7

EP 4 510 738 A1

First SCI

| | | UE 2=>UE 1 | UE 2=>UE 1 | Interlace 3 |
| UE 1=>... | UE 1=>... | UE 2=>UE 1 | UE 2=>UE 1 | Interlace 2 |
| | | | | Interlace 1 |
| | | | | Interlace 0 |

COT preempted by the UE 1

| | | UE 2=>UE 1 | UE 2=>UE 1 | Interlace 3 |
| UE 1=>... | UE 1=>... | UE 2=>UE 1 | UE 2=>UE 1 | Interlace 2 |
| | | | | Interlace 1 |
| | | | | Interlace 0 |

COT preempted by the UE 1

FIG. 8

FIG. 9

First SCI

| UE 2=>UE 1 | UE 2=>UE 1 | Interlace 3 |
| UE 2=>UE 1 | UE 2=>UE 1 | Interlace 2 |
| | | Interlace 1 |
| | | Interlace 0 |

COT preempted by the UE 2

| | | UE 2=>UE 1 | UE 2=>UE 1 | Interlace 3 |
| UE 1=>... | UE 1=>... | UE 2=>UE 1 | UE 2=>UE 1 | Interlace 2 |
| | | | | Interlace 1 |
| | | | | Interlace 0 |

COT preempted by the UE 1

FIG. 10

First SCI

| UE 2=>UE 1 | Channel |
|---|---|

COT preempted by the UE 2

| UE 1=>... | UE 1=>... | UE 2=>UE 1 | Channel |
|---|---|---|---|

COT preempted by the UE 1

FIG. 11

First COT

| Slot 1 | Slot 2 | Slot 3 | Slot 4 |
|---|---|---|---|

| LBT | UE 1=>... | UE 1=>... | | | Interlace 3 |
|---|---|---|---|---|---|
| | | | | | Interlace 2 |
| | | | UE 2=>UE 1 | UE 3=>UE 1 | Interlace 1 |
| | | | UE 2=>UE 1 | UE 3=>UE 1 | Interlace 0 |

First resource

FIG. 12

FIG. 13

FIG. 14

FIG. 15

LBT | AGC

One symbol

(a)

LBT | CPE

One symbol

(b)

LBT/ GAP | CPE

One symbol

(c)

CPE | LBT/ GAP

One symbol

(d)

GAP | LBT | AGC

One symbol | One symbol

(e)

LBT/GAP | AGC

One symbol | One symbol

(f)

LBT/GAP | AGC

One symbol | One symbol

(g)

FIG. 16

Communication
apparatus 1000

Transceiver unit 1100

Processing unit 1200

FIG. 17

1800

1801

Processor

Instructions

1803

1802

Memory

Instructions

1804

Transceiver

1805

Antenna

1806

FIG. 18

## INTERNATIONAL SEARCH REPORT

| International application No. |
|---|
| **PCT/CN2023/089301** |

**A.     CLASSIFICATION OF SUBJECT MATTER**

H04W 72/04(2023.01)i

According to International Patent Classification (IPC) or to both national classification and IPC

**B.     FIELDS SEARCHED**

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

CNTXT, ENTXT, CNKI, DWPI, 3GPP: 边链, 侧行, 侧行链, 非授权, 共享, 控制, 预留, 资源, sidelink, SL, control, COT, resource, RR, SCI, shar+, reserv+, unlicens+, indicat+

**C.     DOCUMENTS CONSIDERED TO BE RELEVANT**

| Category* | Citation of document, with indication, where appropriate, of the relevant passages | Relevant to claim No. |
|---|---|---|
| A | CN 110784874 A (SONY CORPORATION) 11 February 2020 (2020-02-11) description, paragraphs [0052]-[0061], and figures 1 and 4 | 1-44 |
| A | US 2021136732 A1 (QUALCOMM INCORPORATED) 06 May 2021 (2021-05-06) entire document | 1-44 |
| A | US 2022070925 A1 (QUALCOMM INCORPORATED) 03 March 2022 (2022-03-03) entire document | 1-44 |
| A | US 2022095117 A1 (QUALCOMM INCORPORATED) 24 March 2022 (2022-03-24) entire document | 1-44 |
| A | MCC SUPPORT. "Final Report of 3GPP TSG RAN WG1 #105-e v1.0.0" *3GPP TSG RAN WG1 Meeting #106-e R1-2106402*, 27 August 2021 (2021-08-27), entire document | 1-44 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 July 2023** | **27 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/089301**

| Patent document cited in search report | | | Publication date (day/month/year) | Patent family member(s) | | | Publication date (day/month/year) |
|---|---|---|---|---|---|---|---|
| CN | 110784874 | A | 11 February 2020 | WO | 2020024854 | A1 | 06 February 2020 |
| | | | | US | 2021368351 | A1 | 25 November 2021 |
| | | | | EP | 3817428 | A1 | 05 May 2021 |
| | | | | US | 2023087182 | A1 | 23 March 2023 |
| | | | | CN | 112470505 | A | 09 March 2021 |
| US | 2021136732 | A1 | 06 May 2021 | WO | 2021086883 | A1 | 06 May 2021 |
| | | | | EP | 4052523 | A1 | 07 September 2022 |
| | | | | CN | 114586413 | A | 03 June 2022 |
| | | | | IN | 202247016644 | A | 29 April 2022 |
| US | 2022070925 | A1 | 03 March 2022 | None | | | |
| US | 2022095117 | A1 | 24 March 2022 | None | | | |

Form PCT/ISA/210 (patent family annex) (July 2022)

**EP 4 510 738 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210474978